(19) Europäisches Patentamt

European Patent Office

Office européen des brevets

(11) Publication number: **0 481 515 A2**

# EUROPEAN PATENT APPLICATION

(21) Application number: **91117839.0**

(22) Date of filing: **18.10.91**

(51) Int. Cl.5: **H04N 1/028**

(30) Priority: **19.10.90 US 601118**

(43) Date of publication of application:
**22.04.92 Bulletin 92/17**

(84) Designated Contracting States:
**DE FR GB IT**

(71) Applicant: **National Computer Systems, Inc.**
**11000 Prairie Lakes Drive**
**Eden Prairie Minnesota 55344(US)**

(72) Inventor: **McMillin, John V.**
**908 Maplewood Lane**
**Iowa City, Iowa 52240(US)**

(74) Representative: **Strehl, Schübel-Hopf,**
**Groening**
**Maximilianstrasse 54 Postfach 22 14 55**
**W-8000 München 22(DE)**

(54) Illumination system for scanner.

(57) The invention concerns an illumination system for moving sheets which are scanned by an imaging device. Because the moving sheets can flutter as they are scanned, their distance from the imaging device can change, thereby changing the amount of light captured by the imaging device. The invention reduces this change, and provides a method for selecting a distance at which the changes are minimal. The invention also provides the following features: (1) An apparatus for illuminating the sheet uniformly, thus reducing the possibility that naturally dark regions of the sheet may be interpreted as data. (2) A method of selecting an optimal angle of incidence for incoming light, in order to maximize contrast between the sheet and data marks. (3) A procedure for collecting maximal light from a lamp, using a fiber optic bundle which is of a fixed diameter. (4) A procedure for improving light capture or image contrast, based on measured values of document specularity, mark specularity, fiber optic numerical aperture, reflectance of the sheet, and diffusion coefficient of the sheet. (5) Fiber optic light projectors whose projecting ends are bevelled in a single facet, thereby increasing the angle of incidence, without changing position of the fibers. (6) A procedure for accommodating the image shift caused by glass plates which guide the moving sheets, and through which the imaging device must look. (7) A procedure for reducing cross-talk between two illuminator-imaging device assemblies, which image opposite sides of the same sheet.

EP 0 481 515 A2

*Fig. 1A*

## BACKGROUND OF THE INVENTION

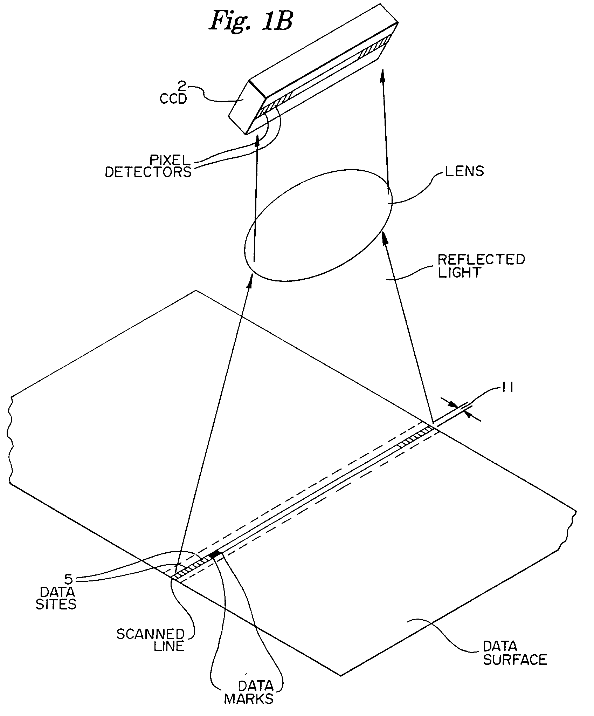

This invention relates to an illumination system for an automated optical scanner for scanning surfaces, particularly flat sheets, bearing data. The light detector for the optical scanner can take the form of a charge-coupled-device (CCD) array 2 in Figure 1B, which builds images of entire sheets or specified data areas by scanning single lines of data on a sheet, in sequence. The location within the scanner where the single lines are scanned is often called the scanning station. The CCD contains a large number (such as 1024) of light-responsive elements. In principle, each element receives light reflected from a discrete data site on a line as it passes through the scanning station; consequently, if 1024 CCD elements are used to image the line, each line contains 1024 data sites, detected in the CCD as pixels (PICtureELements).

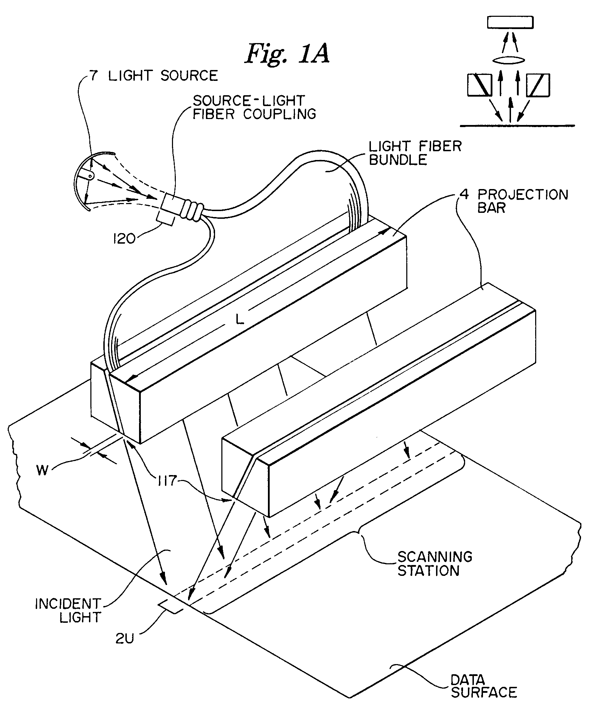

The line of data sites is illuminated by a light projector 4 in Figure 1A. In general, a data site 5 in Figure 1B containing a data mark absorbs light while the background reflects light. The detected light at multiple adjacent data sites is usually aggregated to define a data mark area, because the data sites are much smaller than a mark. When the CCD-built image shows that a given data mark area reflects sufficiently less light than the unmarked background, a data mark will be considered to be detected.

## ILLUMINATION PROBLEMS

In theory, measuring the intensity of light and comparing marked and unmarked (background) data sites would seem to be a straightforward process. However, many factors prevent the process from being as simple as theory predicts it should be. To achieve the desired scanning speed and accuracy of mark detection, the illumination system must deliver an adequate amount of light to the scanning station and the light must be uniformly distributed across the scanned line. Non-uniform distribution of light across the scanned line would cause the same density of data mark to be detected differently, depending on where it is located on the line. The amount of light must be sufficient to enjoy as much of the sensitivity range of the CCD as possible. The amount of light also affects scanning speed, because at higher speeds, the CCD has a more limited time period in which to receive the available reflected light.

The light delivered to the scanning station must also be of the desired spectrum. In some applications, it is desirable to detect only data marks that absorb near-infrared (NIR) spectrum light. In other applications, particularly newer applications involving scanning tasks more sophisticated than traditional data mark detection (e.g., bar code, OCR or other pattern recognition), the light delivered must be in the visible spectrum. Even if light of the desired spectrum, intensity and uniformity can be delivered to the scanning station, nevertheless, consistent, accurate detection of data marks can be influenced by other factors.

Accordingly, the following factors introduce variations in the reflected light received by the CCD, largely irrespective of whether the light is reflected from a data site bearing a data mark or not. Such variations can be viewed as noise added to the reflected light.

First, with a linear scanning station light source (light projection bar) of finite length, the ends of a scanned line receive less light than the central regions, primarily because the central regions receive light rays from more parts of the light source than do the ends. Consequently, the center reflects more light, and appears brighter than the ends.

Second, the light projection bar does not necessarily produce abeam of uniform intensity across the scanned line. A nonuniform incident beam will produce a nonuniform reflected beam, even if the sheet is a perfectly uniform reflector.

Third, the sheets are not uniform reflectors. The specularity of different sheets can differ, as can the specularity of different regions on the same sheet. Specularity refers, in a general sense, to the degree to which the sheet resembles a mirror, as opposed to a non-reflecting, black surface or a uniformly diffusing surface. Differences in specularity cause nonuniform reflectance, even if the incident light is uniform in intensity. An unmarked data site of low reflectance can simulate the low reflectance of a data site bearing a data mark.

Fourth, it is preferable that the light reflected by the sheet be of high intensity. It has been found that higher reflected intensity can be obtained when the angle of incidence of the incoming light approaches the perpendicular. However, at such angles, the data marks reflect more light and absorb less (i.e., their apparent specularity increases). Further, marks made by different pencils have different specularities. The variance in mark specularity is undesirable, because the CCD array provides better discrimination when the unmarked sheet is highly reflective (yet non-specular) and the data marks are highly absorptive.

Fifth, the sheets are scanned while in motion (in fact, while traveling at high speeds), in order to process a large number in a short time. Moving sheets are transported between two parallel plates having a spacing somewhat larger than the thickness of a single sheet. The space permits clearance for sheets having labels and small foreign objects attached to them, but also allows a variance in the position of the sheet. The variance causes a change in intensity of reflected light received by the CCD array.

Sixth, wrinkles, folds and other deviations from idealized flatness in the sheet reflect light differently than a perfectly flat, smooth sheet. These variances, too, cause variations in the intensity of reflected light received by the CCD array.

## NOISE MAKES DETECTION OF GRAY SCALE MORE DIFFICULT

These noise-producing factors complicate the process of distinguishing data marks (which are dark) from the unmarked background sheet (which is light). The difficulty is increased when different shades of dark data marks must be distinguished from each other. For example, if 256 shades of gray are to be distinguished, wherein pure black is zero and the brightest white is 255, one level differs from its neighbor by 1/256, or about 1/3 percent. The noise factors identified above may cause the intensity of the reflected light of different pixels to vary by several percent, thus making differences of 1/3 percent impossible to distinguish from noise.

## IRRESPECTIVE OF NOISE, FASTER SCANNING SPEEDS REQUIRE BRIGHTER PIXEL ILLUMINATION

Reducing the total scanning time for each sheet is desirable. However, as the total scanning time is reduced, the time allowed to scan a single line of data sites to form a pixel image is also reduced, causing a decrease in the total number of photons collected by the CCD from the line. (The total number of photons collected is proportional to the intensity of the reflected light multiplied by duration of collection. A similar concept occurs in photography: when the shutter speed in a camera is increased, less total light reaches the film.)

Since the CCD array requires a minimum photon collection per line in order to function properly, the number of photons per second reaching the pixel line must be increased as scan time is reduced. One answer is to increase incident light intensity. Increasing light intensity in the scanning system is not necessarily a simple task, especially if the light required by the CCD must cover the entire visible spectrum, in order to detect data marks of all colors.

One problem is that broad-spectrum light sources commonly used produce a large fraction of their output in the infrared spectrum. The infrared spectrum contributes nothing to the task of detecting visible marks, and introduces heat. The heat must be dissipated because it can scorch the paper sheets, and overheat nearby electronic circuits, including the CCD.

## OBJECTS OF THE INVENTION

It is an object of the invention to provide an improved illumination system for high-speed optical scanners.

It is a further object of the invention to provide an illumination system which provides highly uniform illumination of a scanning station.

It is a further object of the invention to provide an illumination system having improved immunity to noise-producing factors.

## DESCRIPTION OF THE DRAWINGS

Fig. 1A is a pictorial view of an illumination system and a data surface illuminated at a scanning station, showing only incident light from a light source transmitted by light fiber bundles to a pair of projection bars.

Fig. 1B is a pictorial view of the light detection portion of an illumination system, showing reflected light traveling from a scanned line at the scanning station to a CCD array.

Fig. 2 is a cross-sectional schematic view of a light source, the emitted beam and the arrangement for coupling the beam to a light fiber bundle.

Fig. 3 is a cross-sectional view of the intensity distribution of a light beam produced by the lamp of Figure 2, but simplified to a triangular shape for ease of computation.

Fig. 4 is a cross-sectional schematic view of a fiber optic strand, showing the acceptance cone for incoming light.

Fig. 4A is a cross-sectional schematic view of a fiber optic strand used to measure the distribution of the light emitted form a light source as used in the present invention.

Fig. 4B is a curve showing light intensity variance across the diameter of a light source.

Figs. 4C-4N show various details of the light path in the illumination system of the present invention.

Fig. 5 shows the pattern of diffusion of light energy from an illuminated surface.

Fig. 6A is a view taken in the direction of arrows 6 - 6 in Figure 1.

Fig. 6B is a view taken in the direction of arrows 7 - 7 in Figure 1.

Fig. 7 shows how the intensity of light projected by the invention varies as distance from the projection bar to the sheet changes.

Fig. 8 is a curve showing the variations in CCD output signal when the distance between the projection bar and the scanned sheet varies.

Fig. 9 is a schematic diagram showing the angular relationships of incident light relative to an illuminated surface in two different extreme displacement positions.

Figure 9A is a schematic diagram defining $Z_o$.

Figure 9B is a plot of the type in Figure 8, showing exaggerated lack of symmetry.

Figure 9C illustrates asymmetric placement of the maximal reflection point (found from equation 29 or the plot of the type in Figure 8) between the glass guide sheets.

Fig. 10 is a schematic diagram showing the bias grind angle for an individual light fiber.

Fig. 11A is a schematic showing the end facets of a prior art projector.

Fig. 11B is a schematic showing the end facets of the present invention, and the added angle $\delta$ which bias grind introduces.

Fig. 12 is a schematic diagram showing the refraction shift caused by glass plates defining the document path.

Fig. 13 is a schematic diagram showing the relationship between paired illumination sources, each pair being located on one side of the document path.

Figure 14 is a plot of relative light intensities produced by the DDL 150 lamp, at different operating voltages.

Figures 15A through 15N and 15P illustrate plots of equation 29, for several values of $Z_o$ and incidence angle.

Figure 16 illustrates an alternate embodiment, wherein the projector bars are hinged about point H.

Figure 17 illustrates asymmetric projection which can occur if the hinge mechanism of Figure 16 is not constructed properly.

Table 1 gives data regarding the manner by which relative reflectance of a sheet changes, as angle of incidence changes.

Table 2 gives data regarding the manner by which specularity of pencil marks changes as angle of incidence changes.

Table 3 gives data regarding the manner by which reflectance of a sheet changes, as inclination of the sheet changes, for different angles of incidence.

Table 4 gives data regarding the added angle by which projected light is bent, when the projecting device is a bevelled optical fiber.

## DETAILED DESCRIPTION OF THE INVENTION

The following discussion is divided into two parts. The latter part is entitled "Technical Considerations," and contains a detailed technical-mathematical analysis of several aspects of the invention. The other part, located immediately below, is a simplified explanation of some of these aspects, given for the convenience of the reader.

## ATTAINING SUFFICIENT INTENSITY IN INCIDENT LIGHT

This section corresponds to the section of "Technical Considerations" entitled "Fiber Optic Light Source - Technical Description."

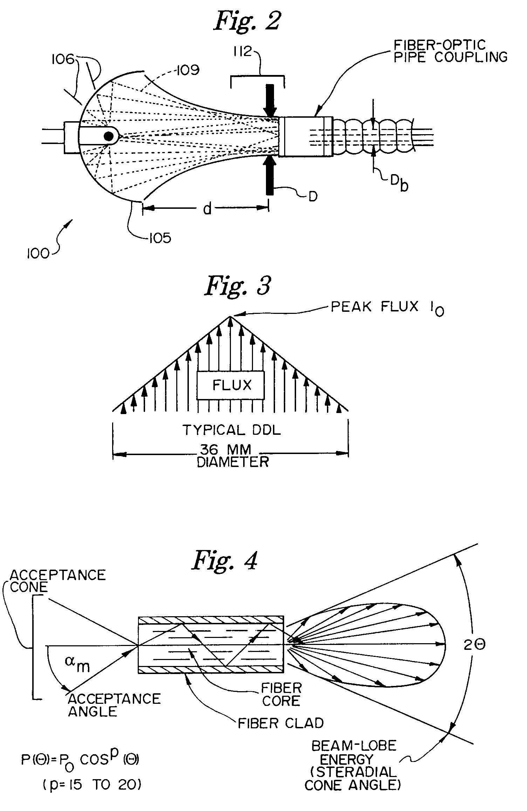

One embodiment of the invention uses a lamp 100 in Figure 2, which contains a tungsten filament 103 and a dichroic reflector 105. One such lamp is that identified by the lighting industry standard designation DDL 150. The dichroic reflector removes infrared light 106, by transmitting it out of the optical path, but reflects visible light, indicated by rays 109. The resulting beam 112 includes a large fraction of the visible light produced by the filament, but, in the beam, infrared has been suppressed by the reflector 105.

As discussed in "Technical Considerations," the fibers in the bundle are randomized in position between the (a) coupling at the light input end and (b) the exit aperture 117 in Figure 1A, in order to project light of a more uniform intensity.

**Problems with Collecting Maximum Light by Using Fiber Bundle**

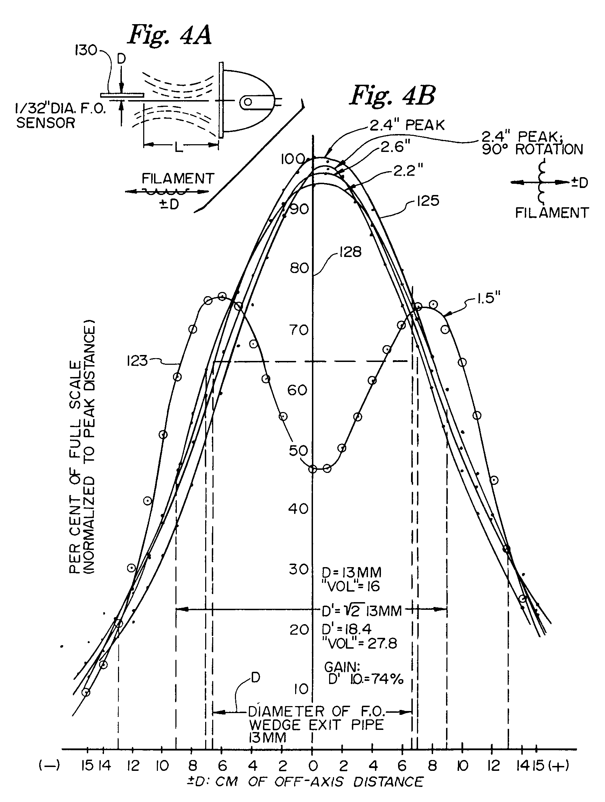

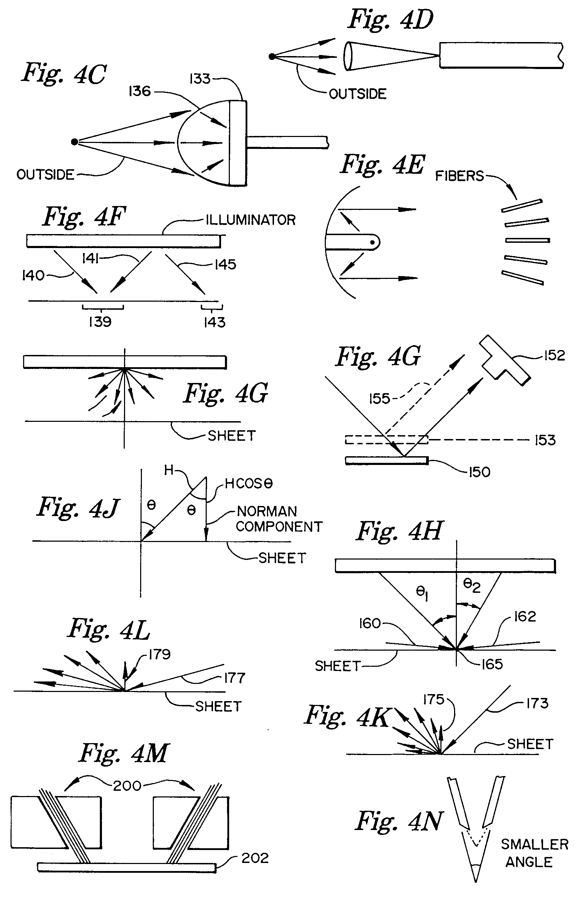

In order to project the brightest possible light to the data sheet, it is axiomatic that every available light ray within diameter D in Figure 2 should be collected and directed to the sheet. However, for several technical reasons, collecting every ray is not possible. One reason is that the optical fibers are of the cladded type, and thus they accept only rays lying within the acceptance cone indicated in Figure 4. [(See J.Wilson and J. F. B. Hawkes, OPTOELECTRONICS, An Introduction, pp 345 - 350 (Prentice-Hall International, 1983).] Rays lying outside this cone, such as ray 115, will not be accepted by the fiber. Restated, the mere fact that a fiber bundle fully occupies the diameter D in Figure 2 is insufficient to assure that all photons within the diameter D are collected; in addition to lying within D, the rays must have an incidence angle within the acceptance cone.

A second reason is the impossibility of designing the system so that the diameter of the bundle always equals the beam diameter D. Sometimes, the bundle diameter $D_b$ will be dictated by the cross-sectional area of the projection bar's exit aperture 117 (i.e., area L x W) in Figure 1A, and cannot be made equal in diameter to D. That is, the same fibers extend from the acceptance region 120 (adjacent the light source beam) to the exit aperture 117 (adjacent the scanning station); they rearrange from an overall cross sectional shape of a rectangle in the latter region, to a circular cross-section in the former. The areas of the two cross-sections are equal, subject to inequalities due to changes in packing densities, so that the acceptance region 120 does not necessarily have a diameter equal to D.

It may be thought that the beam diameter D in Figure 2 can be forced to equal the bundle diameter by focusing the beam using a lens. However, simple focusing will cause significant decollimation of the beam, and can cause a greater population of rays to fall outside the acceptance cone. As stated above, such rays will not be accepted by the fibers. Although a more complex type of focusing can achieve greater collimation, as by using known condenser lenses, such lenses are expensive.

**Capturing Maximum Light for Given Bundle Diameter**

In the invention, these collection problems are reduced in significance by the following procedure. First, the intensity distribution of the lamp is ascertained. For this, one measures the light intensity at selected sample points in a single plane at a distance L in Figure 4A, and obtains a plot such as 123 shown in Figure 4B. (In this plot, all the sample points lie in a straight line in the plane.) Then, the measurement is repeated, but in different planes, at different distances L. Repeated measurements will produce the family of curves in Figure 4B.

Next, the diameter $D_b$ of the collecting end of the bundle is ascertained. As stated above, $D_b$ is the diameter of the circle having an area equal to L x W, which are depicted in Figure 1A. Then, using $D_b$, one finds the plot which can enclose the largest area overlength $D_b$ on the x-axis. (Actually, one finds the plot enclosing the largest volume over a circle of diameter $D_b$, since the plots are, in fact, three-dimensional.) In Figure 4B, it is clear that plot 125 provides the largest area for a given $D_b$. In practice, in many cases, finding the location of $D_b$ which gives the largest area will be clear from inspection because the plots will be highly symmetrical, as are those in Figure 4B. However, in the general case, it is not always immediately clear where $D_b$ should be positioned on a given plot, in order to enclose the largest area. For example, plot 123 in Figure 4B illustrates this lack of clarity. Thus, in the general approach, one first must find the position for $D_b$ on each individual plot which provides the largest area for that plot, and then select the largest area from all of the plots.

The plot containing this largest area (which will be plot 125 in this example) provides the distance L, shown in Figure 4A, at which the acceptance region 120 of the bundle should be positioned. Further, the bundle is adjusted in position at L so that the bundle is centered at the peak of the plot. This adjustment is required because, as plot 125 in Figure 4B shows, the peak intensity does not necessarily occur on the nominal projection axis 128 of the lamp.

This procedure allows the use of the combination of a commercially available projector-style lamp, which produces a somewhat collimated beam, together with a bundle of cladded optical fibers of smaller diameter than the beam, in order to capture the maximum light intensity from the beam, yet without the requirement of focusing lenses.

**Advantages to Inventor's Procedure**

The procedure just described can have several advantages. One, it has an advantage over a trial-and-error procedure. In a trial-and-error procedure, one randomly positions the fiber bundle, measures light captured, and repeats until a position of maximum intensity is found. However, it can be argued that such a procedure is significantly more cumbersome than the procedure just described. For example, the trial-and-error procedure requires the use of a completed optical projector (which will be described later in the Specification). These projectors can be both expensive and delicate. Further, as will be later seen, one type of completed projecter has a projection face measuring about 9.5 x 0.030 inches. Measuring the total light intensity provided by such a large projector is not a simple matter.

Another advantage lies in the particular lamp and bundle diameter chosen. The preferred lamp is designated DDL 150, which is a standardized industry designation for a particular type of 150-watt projector lamp. The ten-percent fall-off diameter D in Figure 2, at the position of maximum energy density, is about 36 millimeters. The fiber bundle diameter $D_b$ is about 15 mm. A computation in "Technical Considerations" indicates that this bundle collects about 37 percent of the available intensity in the beam. One advantage is that the smaller bundle (compared to the beam) tolerates slight mechanical misalignment between the bundle and the beam. Another advantage, discussed later, is that the smaller bundle allows the bundle to be increased in diameter at a later time.

Another advantage results from the type of probe 130 used in Figure 4A. In the ideal case, an optical fiber which is identical to those of the fiber bundle should be used as the probe. That is, a goniometer using a fiber identical to a fiber from the bundle should be used. With such a fiber, the intensity plot obtained will provide the actual intensity distribution within the fiber bundle. That is, by using such a probe, one measures, in advance, the intensity of the light which those fibers in the bundle will receive which are located at the probe's measuring position. Alternately, one could measure the intensity within every fiber, but since such a measurement will be very time-consuming, it is preferable to assume that the lamp produces a symmetrical beam, and to measure samples, such as points on a diameter of the beam, as described above. The plots in Figure 4B result.

Restated, the Inventor's measurement procedure, in the ideal case, will indicate the intensity projected by each fiber in the bundle (subject to transmission losses in the fibers), for each distance L. Given that many thousands of of fibers are used in the projector described later, and that several different positions L must be examined, the Inventor's procedure provides a clear saving in time in ascertaining the optimal position for the fiber bundle.

The ideal procedure will probably not be used, since the actual fibers are quite delicate, being a few mils in diameter. Instead, a sturdier probe, about 1/32 inch diameter, is used. However, the sturdier probe nevertheless has about same numerical aperture (at least within ten percent) as that of the fibers in the bundle. The error introduced by the larger diameter is not large, as the larger diameter does not alter the fact that rays outside the acceptance cone are not collected.

This use of probe which is a waveguide provides a different, and more accurate, measure of intensity distribution than would other sensors (such as photodiodes or phototransistors). One reason is the directional characteristic of the acceptance cone of the probe, which resembles that of the actual fibers in the bundle. Other types of probes do not necessarily have this directional characteristic. For example, if a common photodiode 133 in Figure 4C having a spherical lens 136 were used, it would capture rays lying outside the acceptance cone, which are shown in Figure 4D. Similarly, a flat probe, such as a cadmium sulfide cell, would capture rays which the fiber would not.

Therefore, the use of a probe having a similar numerical aperture as the fibers in the bundle provides a more relevant plot of intensity distribution.

It is significant that the fibers are made of glass. Other types of fiber, such as organic plastics, can affect the spectrum of transmitted light, by absorbtion at unwanted frequencies.

It is also significant that the optimal positioning of the fibers may not lie in a single plane. During the intensity test, the probe may be moved along different contours around the lamp, in addition to flat planes, and it may be found that the optimal surface is a curve, so that the fibers should be positioned as shown in Figure 4E.

## UNIFORM ILLUMINATION, EDGE TO EDGE, ON SHEET

### The Problem

As stated in the Background, a light source of finite length, such as a projection bar as shown in Figure 1A, provides less illumination to the edges of a scanning station (of equal length) than to the station's center. (The invention uses a generally linear array of optical fibers, termed a Fiber Optic Linear Projector, or FOLP.) That is, in Figure 4F, the center 139 of the scanned line receives light from two sides, such as rays 140 and 141, but the edge 143 of the scanned line only receives light from a single side, illustrated by

7

ray 145. Consequently, the central region 139 is more brightly illuminated, and reflects more light to the CCD than does an end. The difference in reflected light can be interpreted as (falsely) indicating the presence of dark data marks at the end of the scanned line.

**Inventor's Solution**

The invention projects light of nearly uniform intensity from edge to edge of the scanned line (which usually runs from edge to edge of the scanned sheet). The invention achieves the uniform intensity by extending the projection bar past both edges of the sheet (or ends of the line, when the line does not run edge-to-edge), in a symmetrical manner. The minimum required extension, x, at each end is ascertained from the following equation:

$$x = R\sqrt{\{[1 - E^{2/(p+2)}]/E^{(2/p+2)}\}}$$

wherein
R   is the distance from the array to the sheet, p is the exponent in the expression given in Figure 4, namely, $P(\Theta) = P_o Cos(\Theta)$, and E is a fraction by which the light intensity at the edge is allowed to drop below the intensity near the middle of the scanned line.
For example, if the intensity at the edge must be at least 99 percent of the intensity near the central region 139, then E is 0.01. If p is assumed to be 18, then x equals $R\sqrt{(0.99^{2/20}/0.01^{2/10})}$, or x = 0.76R. If R is 0.5 inch, then x is 0.248 inch. For paper 8.5 inches wide, the projector must be at least 8.997 inches long. Preferably, x is increased by 25 to 75 percent, as a safety factor. Thus, a projection bar 9.5 inches long will uniformly illuminate a sheet which is 8.5 inches wide.

The explanation given in "Technical Considerations" is framed in slightly different terms. First, the relative intensity of the ray travelling from any selected position (ie, from any x) on an extension of the FOLP to the end of the scanned line is obtained. (See equation 14.) The intensity is relative to the normal ray at the edge ($P_o$ in Equation 14).

Then, the inquiry is made: For what x does the ray equal one percent (or other fraction, E) of $P_o$? When x is computed, then the rays reaching the edge from beyond x will each be less than one percent (or E) relative to $P_o$, and their total contribution at the edge is assumed to be negligible (if E is small enough, as it is at 1 percent).

It is clear that E refers to "a fraction by which the light intensity at the end of the scanned line is allowed to drop below the intensity near the middle of the scanned line," as stated above.

Therefore, the invention gives a procedure for ascertaining the required length of the FOLP in order to produce uniform illumination of the scanned line (within the error E).

**Significant Features of Computation of x**

Three significant points are noted. One, it would be possible to ascertain the required extension by trial-and-error, as by constructing a very long FOLP (ie, projection bar), masking different lengths on the ends, and measuring intensity projected by the FOLP to the sheet. However, this procedure is seen as cumbersome, especially since, as Equation 15 indicates, this trial-and-error procedure must be repeated for different distances R between the FOLP and the sheet. (The differences in R become significant because, as will be later shown, R can be varied, in order to adjust for other changes such as changes in sheet reflectance.)

Second, another alternate is to manufacture a FOLP which is much longer than the sheet, in the hope of accommodating all possible changes in R. However, this approach has at least two disadvantages. One, it uses excessive glass fibers, which are very expensive. Two, it collects light and wastes it, by not projecting the light onto the sheet. In the Inventor's embodiment described above, light is also wasted, in the sense that the bundle captures only about 37 percent of the intensity of the beam. However, as indicated in "Technical Considerations," this "waste" is intentional, because it allows a larger bundle to replace the "37 percent" bundle. The replacement allows more fibers to be added to the width of a given FOLP, making the projected light brighter, or allows the FOLP to be made longer.

That is, the supposed "waste" in the Inventor's system actually allows for future modifications of the FOLP. The hypothetical alternate approach of collecting and wasting is incompatible with this design goal.

Third, it is noted that a significant influence in the computation of x in Equation 15 results from the fact that a cosinusoidal pattern is projected by the optical fibers, as indicated in equation 11 in "Technical Considerations," which is used in the derivation of Equation 15. The cosinusoidal pattern results in large part from the conical aperture described in connection with equation 6. A different pattern, as would result from a different projector, such as a linear array of LEDs, would not necessarily result in the same expression for computation of x.

## REDUCTION OF NOISE CAUSED BY FLUTTER

### Flutter Problems

Because the sheets are scanned while in motion, they can flutter, causing the distance from the light projection bar to the sheet to change. (The sheets are carried through a chute made of two glass plates, spaced far enough apart to accommodate labels, creases and small amounts of foreign matter attached to the sheets. The spacing allows the fluttering to occur.) The change in distance can cause a change in intensity of light reaching the CCD array, thus (falsely) mimicking the presence of data. A simple example will illustrate.

Figure 4G shows a mirror 150 which reflects light to a CCD 152. If the mirror moves to phantom position 153, then the reflected light moves to phantom position 155, and the total light collected by the CCD 152 will change. If the CCD produces a signal indicative of light intensity, the signal changes because of motion of the mirror. A similar change can occur when the CCD array of Figure 1B scans a sheet which flutters.

(In addition, fluttering can cause a change in reflectance for another reason beside distance change. The shape of the surface of the sheet changes: the sheet becomes rippled, and the incident light is reflected from areas having different surface angles, resembling sunlight on rippling water. This additional change is discussed in a later section.)

### Inventor's Approach

The invention keeps reflectance changes within acceptable bounds as distance changes. Equations 7, and 16 through 18 are relevant. The rationale behind equations 16 through 18 is this: each optic fiber projects light having a cosinusoidal intensity distribution given by equation 7 and illustrated in Figure 4. However, each individual ray diminishes in intensity according to the inverse square law given in Equation 16. Equation 18 combines equations 16 and 7, and gives an expression for the intensity reaching any selected point on the sheet, emanating from a single fixed point on the light bar; that is, a single ray travels between these two points, and Equation 18 gives the intensity of the ray at the sheet. To select a different point (ie, a different ray) on the sheet, one simply changes $\Theta$ in Equation 18.

Viewed another way, sweeping $\Theta$ from -90 to 90 degrees in Equation 18 amounts to computing the intensity of the sequence of rays in Figure 4H, starting with ray 160 (at - 90 degrees), and ending with ray 162 (at 90 degrees). This sweep covers all rays which can reach point 165 on the sheet.

(It is noted that sweeping $\Theta$ in this manner can have another meaning. The sweep can also describe the computation of the sequence of rays shown in Figure 4G. It is important to note this difference, because, when a later equation, derived from Equation 18, is integrated, this sweeping of $\Theta$ is done, in effect.)

Equation 19 adjusts Equation 18 for the fact that the incident power is proportional to the normal component of each incoming ray to the sheet, as shown in Figure 4J. Therefore, equation 19 gives the incoming energy at any point on the sheet, from a single point (determined by the value of $\Theta$) on the FOLP.

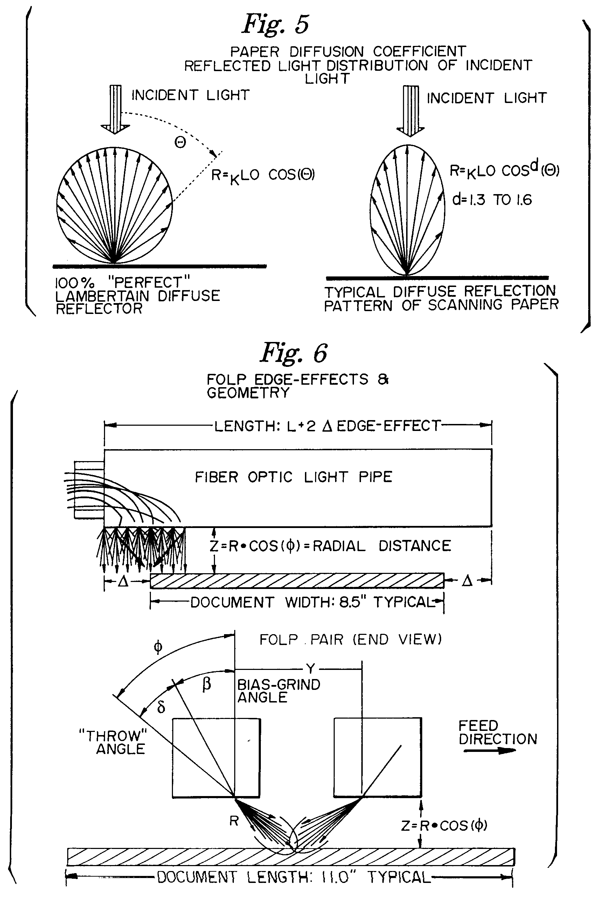

For analyzing the light delivered to the CCD, each such receiving point on the sheet acts like a fiber, in the sense that the point projects (or reflects) light having the intensity distribution described by Equation 18 and shown in Figure 5, lower part. Equation 20 indicates this fact: the incoming light at any point on the sheet is given by equation 19, and the manner by which the light is reflected is given by equation 9. Combining the two equations gives the intensity distribution of the reflected light. Equation 21 is a simplification of Equation 20.

It should be observed that R in equation 20 is the same as R in Equation 19. That is, even though equation 20 describes the intensity distribution of the reflected light, the distribution is that located exactly at the given point on the sheet (or, equivalently, an extremely small distance above the sheet).

Equations 22 through 25 are manipulations of equation 21, in order to reach equation 26. If Equation 21 is integrated over the variable $\Theta$, then the result is the total light intensity reaching a given point on the sheet. However, since Equation 21 contains R, which depends on $\Theta$, the transformations of equations 22 - 25 are required. The result is equation 26, which shows that the intensity of light reflected at any given point on the sheet (measured at, or very close to the sheet) is equal to K/R, wherein K is a constant.

**Recapitulation**

The results of the preceding discussion can be restated as follows:

The optic fibers were viewed as a line of point sources, each have an intensity distribution which is cosinusoidal, as shown in Figure 4.

Each individual ray from a point source diminishes in intensity according to the inverse square law.

Each point on the sheet receives a single ray from each point on the line of point sources. Equation 18 gives the intensity of the incoming ray.

The intensity of each received ray is proportional to the normal component of that ray, which requires an adjustment by the use of a cosine term. The adjusted equation is Equation 19, which gives the intensity of a ray of light arriving at an angle $\Theta$ to a point on the sheet. The point on the sheet reflects the light with a cosinusoidal distribution, so that the arriving intensity of Equation 19 replaces $I_i$ in equation 8, giving Equation 20.

Integrating the final equation 25 gives the intensity of the reflected light.

**Result**

That is, the intensity of reflected light is inversely proportional to R. The rate of change of intensity of the reflected light, as R changes, is given in Equation 27, and is proportional to the inverse of the square of R. This result is significant because R changes when the sheet flutters, and these changes in R introduce flutter noise. If R is doubled, the change in intensity due to flutter becomes 1/4 of the previous value.

Viewed another way, the flutter noise arises not only because the distance from the projection bar to the sheet changes, but also because the distance change causes different rays in the cosinusoidal distribution to be captured.

Therefore, the use of a linear array of optical fibers, each having a cosinusoidal intensity distribution, projects a sheet of light to the data sheet having an intensity of K/R. Flutter causes the intensity to change as minus $K/R^2$. For minimal flutter noise, R should be large; however, for maximum brightness, R should be minimum. Other factors will now be discussed which influence the selection of R.

**ADJUSTING ANGLE OF INCIDENCE TO ACCOMMODATE**

**CHANGES IN SPECULARITY**

Different documents have different specularities. The mathematical definition of specularity is obtained from the following expression:

$$R = kI_oCos^d\Theta$$

wherein R is intensity of reflected light, $I_o$ is the intensity of incident light, k is the diffuse reflectance of the document (which is typically 0.7 to 0.9), and $\Theta$ is the incidence angle, measured with respect to the surface normal. The exponent d indicates the specularity. If d is unity, the reflection pattern is that shown in Figure 5, top part; if d is a higher number, the reflection pattern is that shown in Figure 5, bottom part. As d increases, the surface becomes more mirror-like.

The difference in specularity of different documents can change the intensity of reflected light, which can be incorrectly interpreted as the presence or absence of data marks.

The invention accommodates changes in specularity from one group of sheets to another by providing for adjustment of parameters such as the incidence angle of projected light, in order to minimize the influence of specularity changes. For example, it may be desirable to maintain a ratio of reflection efficiency (measured with respect to 45 degrees) of 1.083, as indicated for the 40-degree entry in Table 1. If the paper being scanned by a given machine changes in diffusion coefficient, such as to a d of 1.250, then the angle of incidence (or wedge angle) must be changed to a little less than 40 degrees. (Plotting the efficiencies graphically can assist in choosing the type of extrapolation to use, if Table 1 is used.)

Therefore, in one form of the invention, one would derive a table resembling that of Table 1. but perhaps having a greater number of wedge angles and diffusion coefficients. One would then ascertain which ratio of reflection efficiency provides the best results. The Inventor has found that a reflection efficiency ratio in the range of 0.9 to 1.1 is suitable. Then, one adjusts the incidence angle during scanning when the diffusion coefficient changes for the paper scanned.

For example, when one changes from scanning a batch of sheets having a low diffusion coefficient to a batch having a higher diffusion coefficient, one will increase the angle of incidence, perhaps from 35 degrees for sheets having a coefficient of 1.000 to 40 degrees for sheets having a coefficient of 1.750. For the former, the reflection efficiency ratio is 1.158, for the latter it is 1.150. For many purposes, these efficiencies are nearly the same.

## MAXIMIZING CONTRAST BETWEEN MARKS AND BACKGROUND

In general, the contrast between a mark and the unmarked background, rather than the absolute light intensity value of the mark itself, is used to ascertain whether the data area has a data mark. ("Contrast" refers to the difference between the light reflected by the mark and that reflected by the background material.)

The Inventor has found that the contrast depends on the angle of incidence of the incident light, because the light reflected by both the paper and the marks change as the angle of incidence changes. That is, in simple terms, as the angle of incidence decreases (ie, the incoming light approaches the perpendicular), both the paper and the marks tend to reflect more light. The fact that both paper and marks reflect more light is not, of itself, dispositive, since the contrast depends on the difference between the two reflections. If the reflection from the paper increases more than the reflection from the marks, then contrast increases.

The inventor has found that, when the angle of incidence is reduced below the customary angle of 45 degrees, a contrast increase is obtained, up to a point. The preferable angle of incidence is about 40 degrees, and a preferable range is about 36 to 43 degrees. The findings will now be explained in more technical terms.

Tables 1 and 2 illustrate data obtained by the Inventor. From the data, it is clear that, if an angle of incidence of 50 degrees is currently being used, a gain in contrast can be achieved by changing the angle to 45 degrees. That is, assume a diffusion coefficient of 1.250 and a wedge angle of 45 degrees in Table 1. If the angle is changed to 40 degrees, the reflection efficiency changes from 1.00 to 1.105, an increase of 10.5 percent. There is a gain in reflectance from the sheet, which can be thought as making the background "brighter," which, in general, improves contrast. This gain is favorable to contrast.

For the same angle change, specularity of pencil marks can change from 0.116 to 0.121 in Table 2. This is an increase of about 4.3 percent. The marks also now appear "brighter." This increase, of itself, is not favorable to contrast improvement. However, since the percentage increase in sheet reflectance (10.5 %) is greater than percentage increase in mark reflectance (or specularity, 4.3%), there is a net increase in contrast, because the difference between the two percentages increases.

This can be described in more formal terms. If the specularities and reflection efficiencies are plotted against angle of incidence, it can be proven that the maximum difference occurs when the slopes are equal. The slopes can also termed the "marginal" changes in reflectance or specularity. A "marginal" change in reflectance means the change in reflectance occurring when the angle of incidence is changed a "marginal" amount.

Therefore, contrast is greatest when the marginal change in reflectance equals the marginal change in specularity.

A point of importance is that the Inventor has found that maximum contrast occurs at an angle which may differ from the customarily used angle of 45 degrees.

## REDUCTION OF TEXTURAL ARTIFACTS

The sheet does not uniformly reflect light at all locations. Textural differences, wrinkles, and other deviations from an ideally flat, smooth surface can cause reflection changes which can be interpreted as contrast changes.

The invention uses a pair of light projection bars, symmetrically positioned on opposite sides of a central sheet normal, which tend to reduce the "shadows" caused by these artifacts. The shadows can sometimes lead to the incorrect detection of the presence or absence of marks.

When either one or two projection bars is used, as the angle of incidence increases, less light is reflected to the CCD array. The invention offsets this loss by using a more powerful light source, by using more fibers to capture a larger cross section of the existing light, or by a combination of these two expedients. It is noted that if the loss is sought to be offset by moving the projector closer to the sheet, the "depth-of-field" (discussed next) is worsened.

## DEPTH OF FIELD

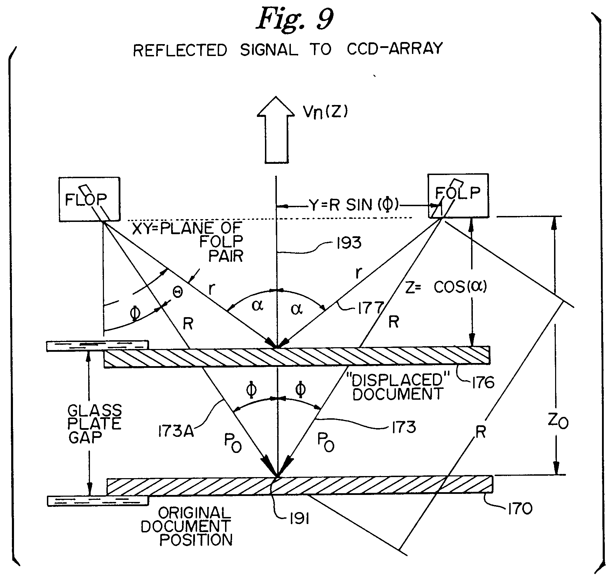

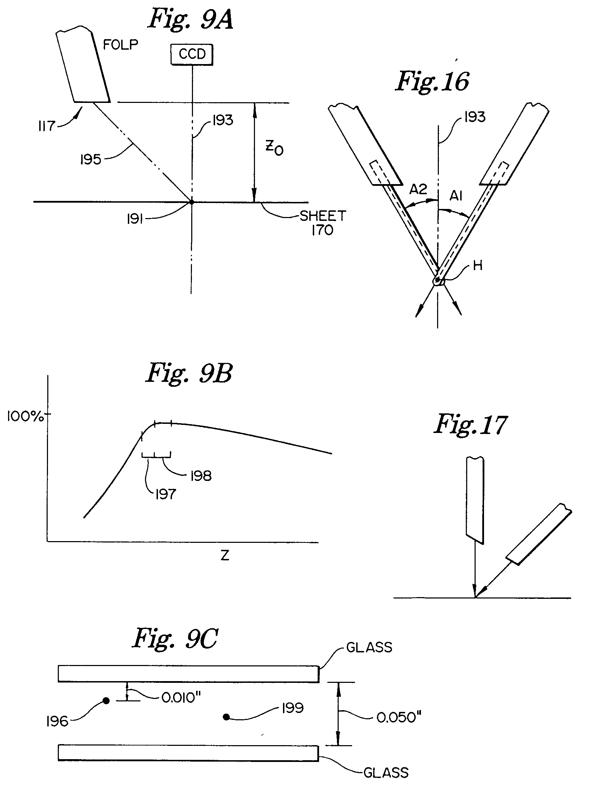

As stated above, the sheet can change in position between the glass plates through which it travels, causing reflectance changes. This phenomenon will be examined in more detail, with reference to Figure 9.

It can be shown that equations 7, 9, and 26 can be combined in order to obtain equation 29, given below. This equation indicates how the intensity reaching the CCD array (indicated by the arrow labeled $V_n$-(z) in Figure 9) changes as the sheet position changes within the confines of the glass guide sheets. A simplified example will illustrate some of the principles involved.

When the sheet is at position 170 in Figure 9, it receives ray 173, which is the primary ray emanating from the FOLP, and is the ray of maximum intensity. This ray is reflected in the cosinusoidal pattern shown in Figure 4K; ray 175 is the ray reaching the CCD.

Similarly, when the sheet is at position 176 in Figure 9, it receives a non-primary ray 177, also shown in Figure 4. This ray 177 is reflected in another cosinusoidal pattern, as shown in Figure 4L, and ray 179 is the my reaching the CCD. Therefore, while ray 173 in Figure 4K may be brighter than ray 177 in Figure 4L, the former travels a longer distance to the sheet, and thus the intensity reaching the sheet is not necessarily greater. Further, each incident ray is scattered into the cosinusoidal distribution. Ray 175 in Figure 4K and my 179 in Figure 4L reach the CCD. It is not intuitively clear which of ray 175 or 179 produces a larger signal in the CCD.

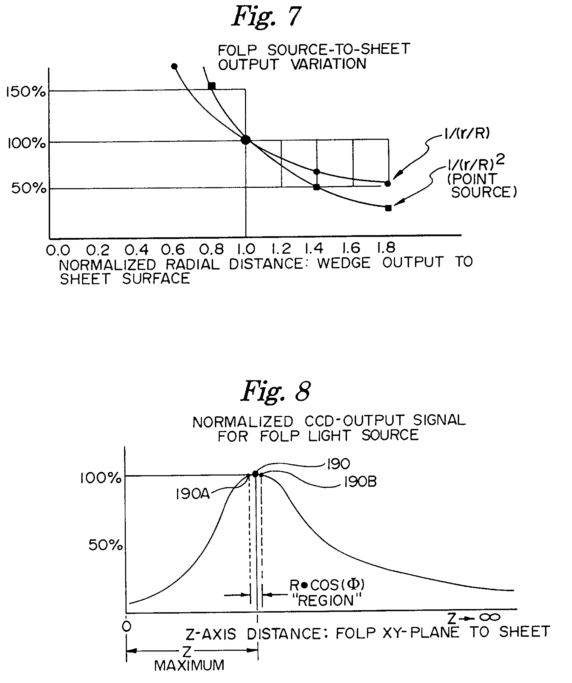

Equation 29 clarifies the situation, and provides a way to compute the magnitude of the signal. The equation computes the intensity reaching the CCD for all positions of the paper, including the two just examined. A plot of Equation 29 is given in Figure 8. It is significant that, as distance changes, the percentage change in intensity of tight reflected toward the CCD is minimal when the original distance is at the peak 190, where the slope is zero.

Stated in other words, Equation 29 indicates that the light reflected by the sheet is not necessarily maximal when the sheet is located at the intersection point 191 of the two primary rays 173 and 173A, as is sheet 170 in Figure 9. Instead, maximal reflection can occur at an offset from this point, and the amount of the offset is computed in the following manner.

A "nominal partial focal length," $Z_o$, is obtained in the following way. The optical axis 193 of the CCD-lens system is normal (ie, perpendiculat) to the sheet 170 in Figure 9A. The primary ray 195 of an optical fiber (the rays are all parallel, for a given FOLP) intersects the normal at point 191. The intersection point 191 may be called a "nominal" focal point, or "apparent" focal point of the FOLP. The perpendicular distance $Z_o$, from the exit aperture 117 of the FOLP to the intersection point 191 may be called a nominal, or apparent, focal distance. (In the case of a pair of FOLPs, the nominal focal point lies at the intersection of the two primary rays 173 and 173A in Figure 9. The optical axis of the CCD coincides with the surface normal, which acts as a bisector of the angle formed by the two primary rays.)

The inventor has found that, when the sheet is located at the nominal focal point 191, the sheet does not necessarily reflect maximal light to the CCD. That is, $Z_o$ in Figure 9 or 9A does not necessarily equal $Z_{maximum}$ in Figure 8.

Equation 29 gives the location of maximum reflection. Alternately, instead of using Equation 19, the maximum reflection point (ie, the distance $Z_{maximum}$ in Figure 8) can be ascertained by constructing an apparatus similar to that in Figure 9, changing the distance Z, and measuring the CCD output at each distance. A plot similar to that in Figure 8 will be obtained.

Restated, the point of maximal reflection lies at the peak 190 of the plot in Figure 8, but does not necessarily lie at the nominal focal point. There may be an offset. The maximum reflection point 190 is important because, when the sheet is positioned at the maximal reflectance distance (as opposed to the nominal focal distance) from the FOLP, not only is reflectance maximal, but changes in reflectance (for small changes in distance, as flutter causes) are minimal.

In the preferred embodiment, the maximal reflectance point is positioned at the point where the sheet is statistically most likely to be found. Alternately, if the plot which equation 29 provides is not sufficiently symmetric, so that a shortening 197 in Figure 9B of distance causes a larger change in reflected light than does a lengthening 198 of distance, the maximal reflectance point can be positioned so that the maximum allowed percentage change in reflected light is minimal.

That is, for example, using arbitrary numbers, four hypothetical changes in reflectance are the following:

1) lengthening by 0.025 inch causes a drop in reflected light of 3 percent,
2) lengthening by 0.040 inch causes a drop of 3.5 percent,
3) shortening by 0.010 inch causes a drop of 1 percent, and
4) shortening by 0.025 inch causes a drop of 5 percent.

With these changes, it may be advantageous to position the maximal reflectance point 196 as shown in Figure 9C. With such positioning, the greatest shortening possible is 0.010 inch, and the greatest lengthening possible is 0.040 inch. The maximal brightness drop is 3.5 percent. However, if the maximal reflectance point is positioned differently, at the center of the gap, at point 199, the maximal brightness drop is 5 percent.

Restated, the maximal reflectance point is located such that the drops in reflected light for both shortening and lengthening are equal.

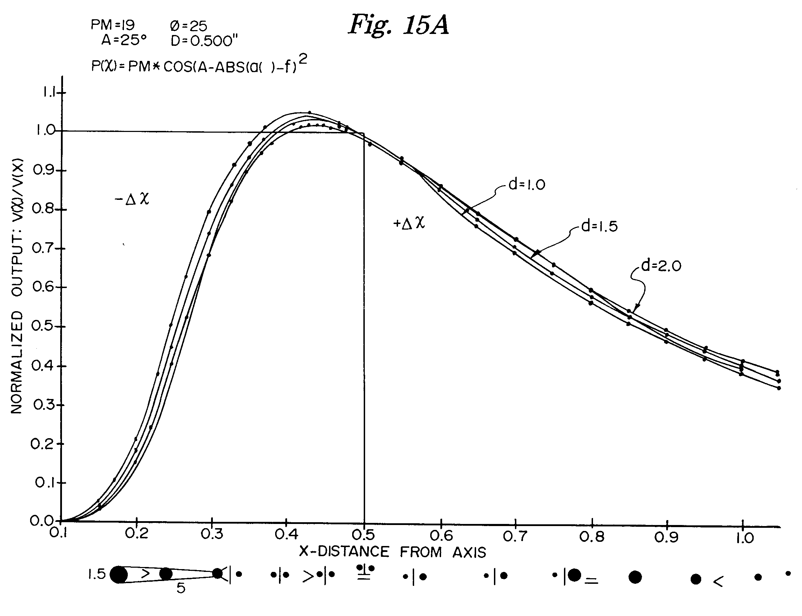

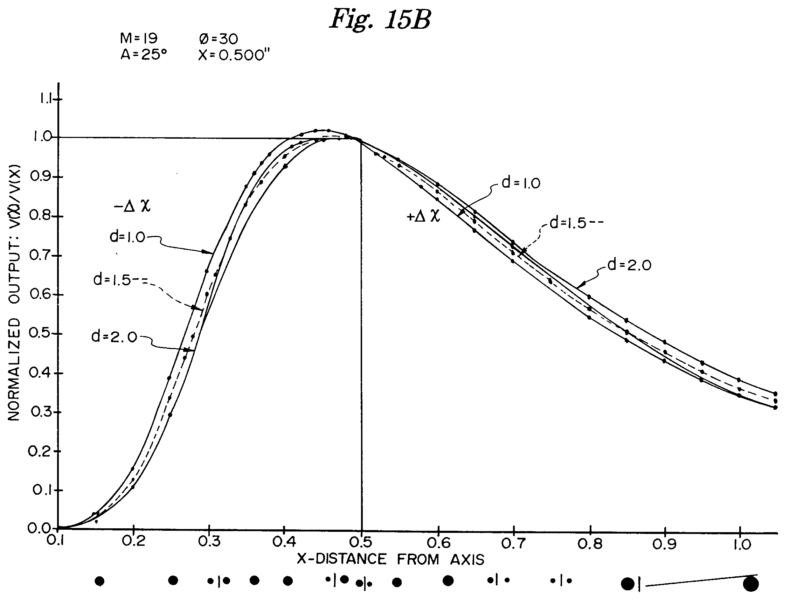

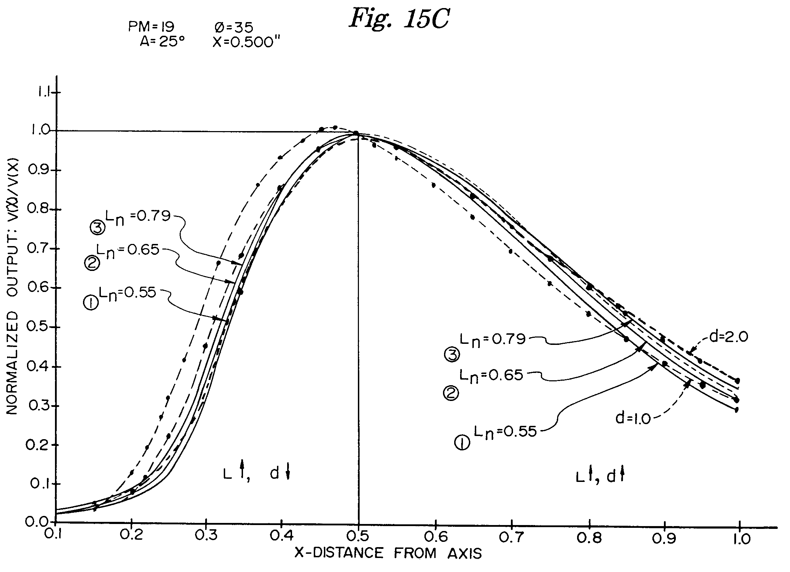

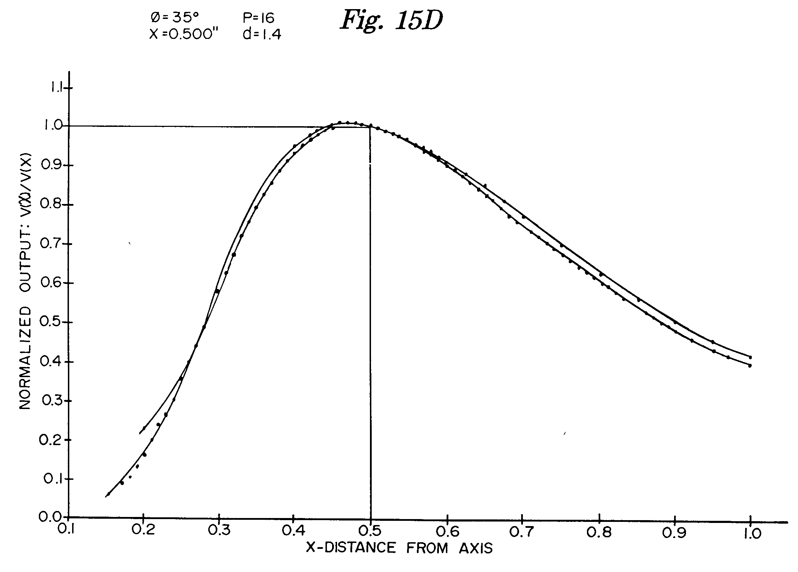

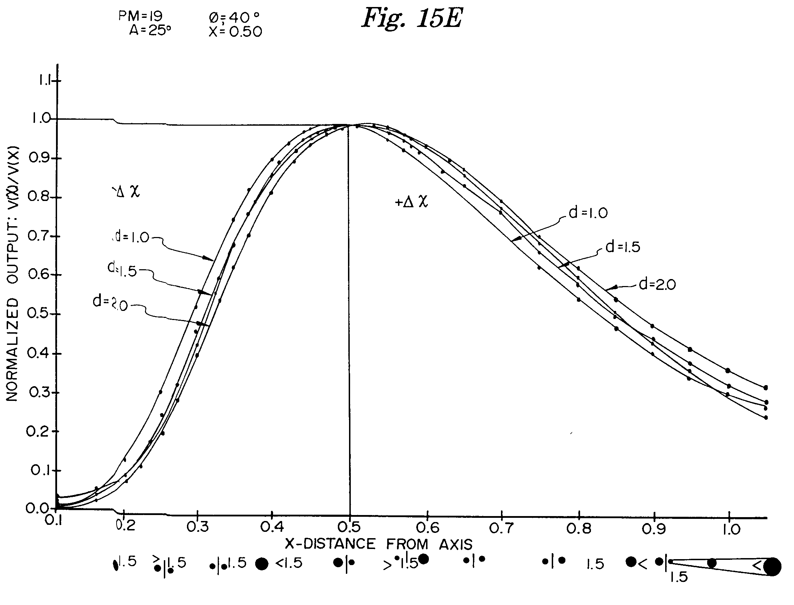

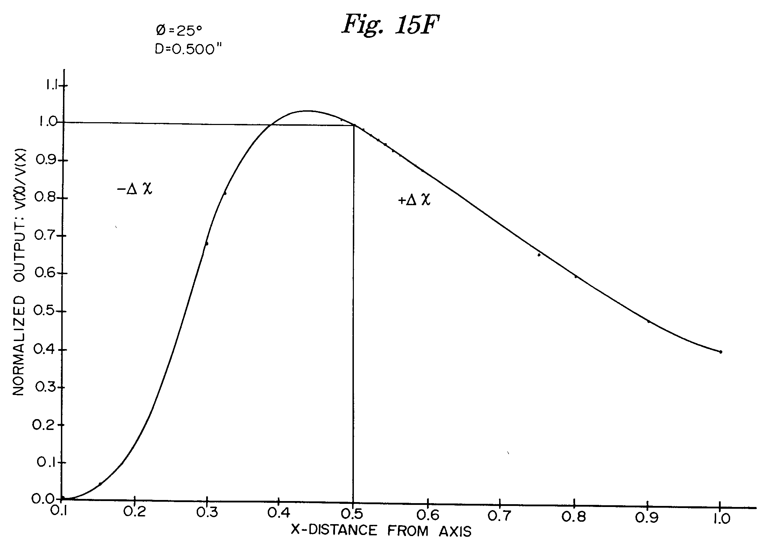

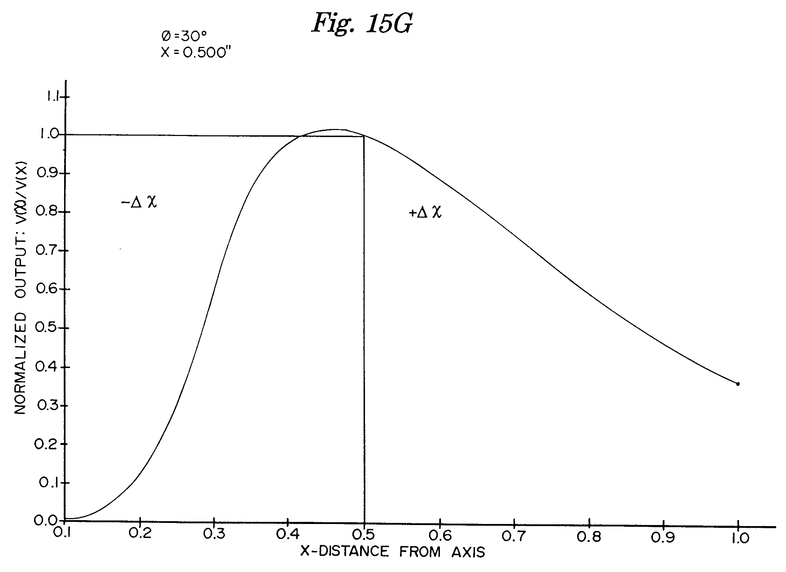

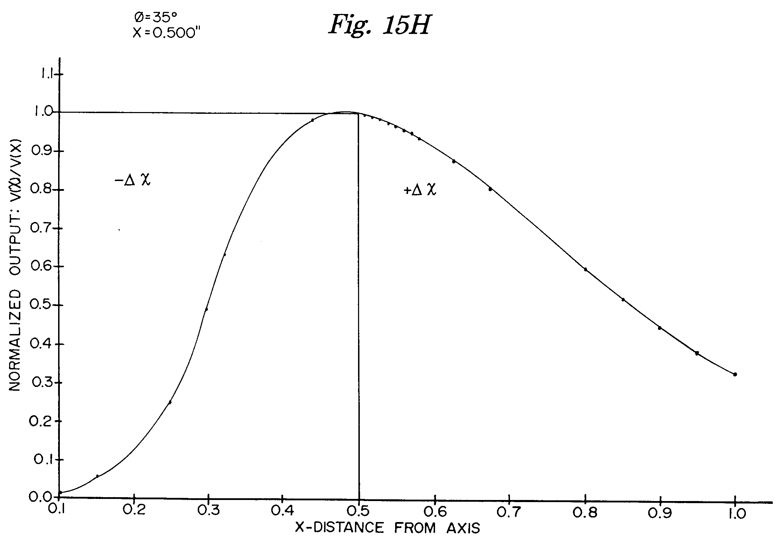

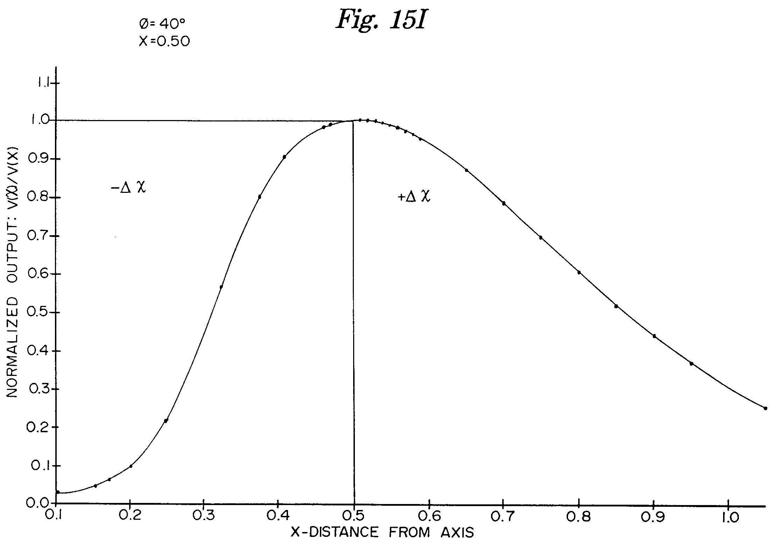

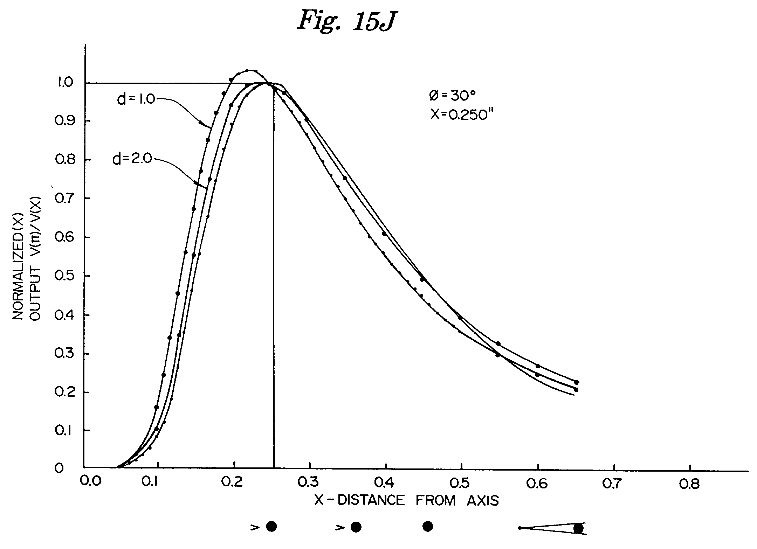

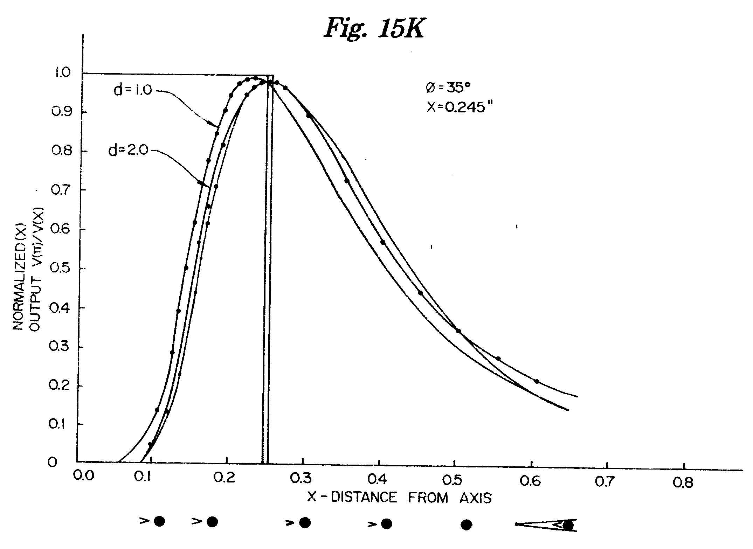

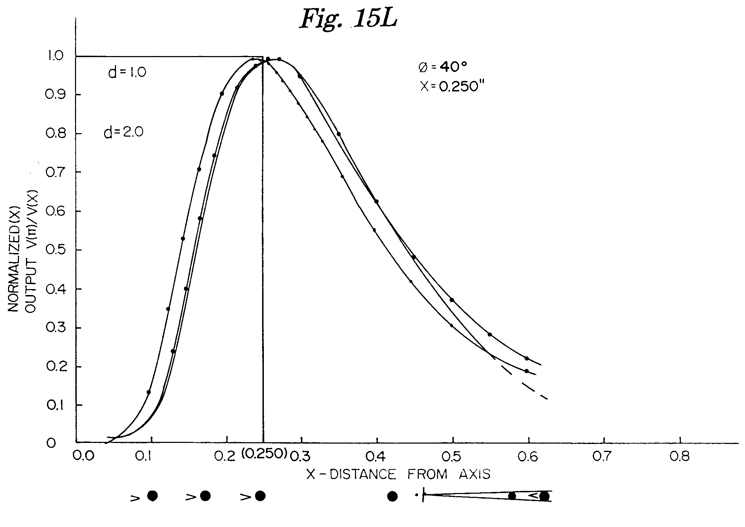

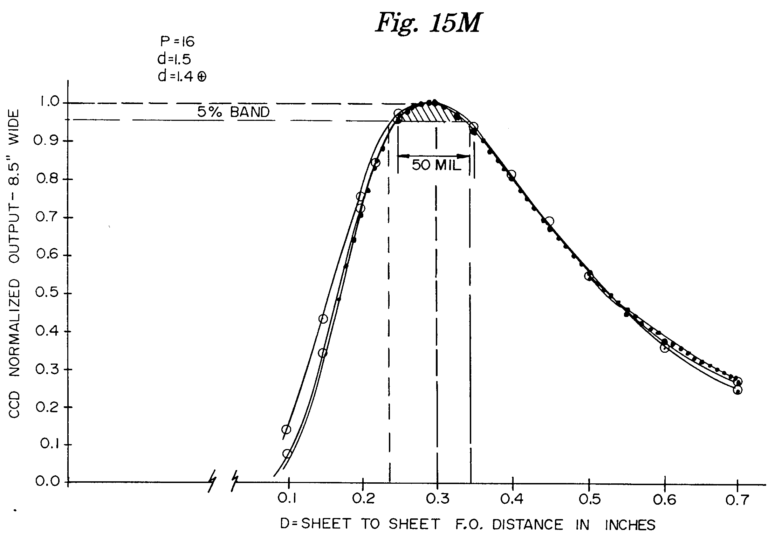

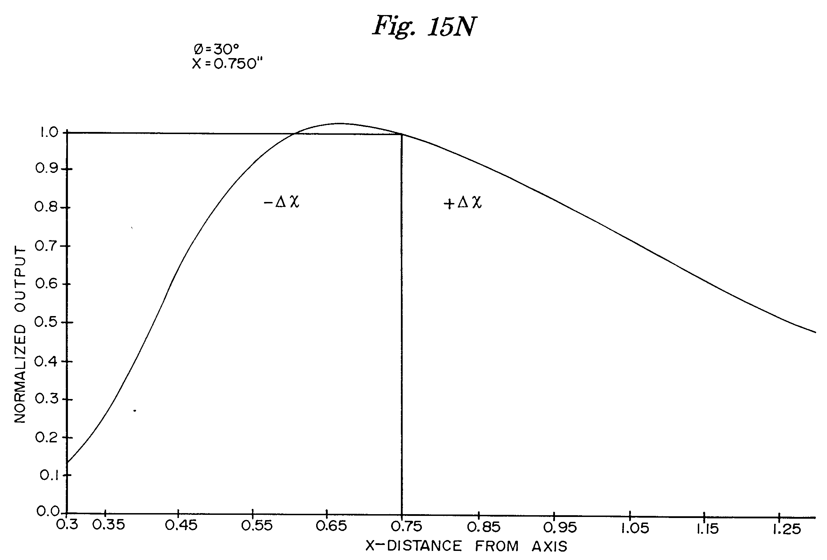

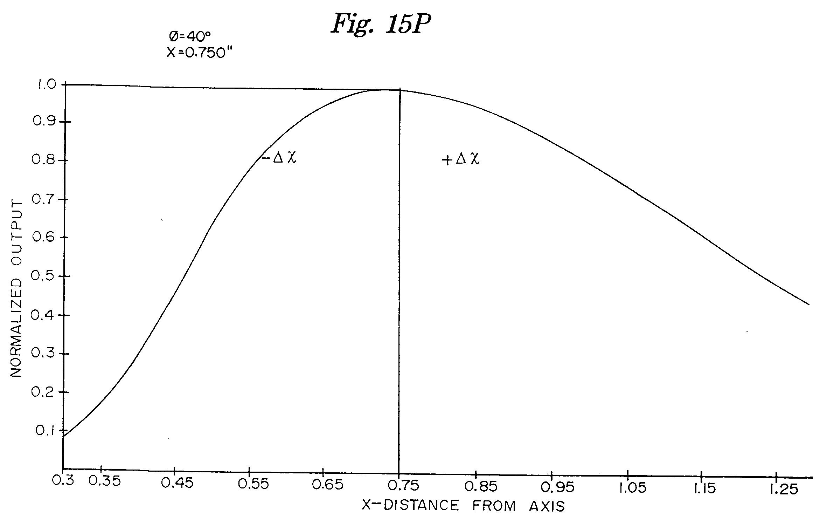

Figures 15A through 15N and 15P give plots of the type in Figure 8, for several values of incidence angle and $Z_0$. The data are summarized in the following Table, wherein $\Phi$ is the incidence angle, as defined in Figure 9, and $Z_0$ is the perpendicular distance from the projection aperture 117 to the nominal focal point 191, as shown in Figure 9. $Z_{MAXIMUM}$ is the perpendicular distance at which the peak intensity 190 in Figure 8 occurs. When the paper is positioned at $Z_{MAXIMUM}$, then, if distance changes, as occurs during flutter, the reflected intensity changes, as by shifting to point 190A or 190B. The gap in Figure 9 is chosen such that points 190A and 190B provide acceptable changes in intensity. An entry "s" means "same as above." For example, in the second line, the s indicates that $Z_0$ equals 0.500 inch. The entry "nm" means that the parameter, such as p, was not measured, perhaps because a common type of paper was used.

## TABLE

| Figure | $Z_0$ | $\Phi$ | p | d | $Z_{MAXIMUM}$ |
|--------|-------|--------|-----|-----|---------------|
| 15A | 0.500" | 25° | 19 | 1.0 | 0.44" |
|  | s | s | s | 1.5 | 0.43 |
|  | s | s | s | 2.0 | 0.42 |
| 15B | s | 30° | 19 | 1.0 | 0.45 |
|  | s | s | s | 1.5 | 0.47 |
|  | s | s | s | 2.0 | 0.47 |
| 15C | s | 35° | 19 | 1.0 | 0.46 |
|  | s | s | s | 2.0 | 0.50 |
| 15D | s | 35° | 16 | 1.4 | 0.47 |
| 15E | s | 40° | 19 | 1.0 | 0.47 |
|  | s | s | s | 1.5 | 0.50 |
|  | s | s | s | 2.0 | 0.58 |
| 15F | s | 25° | nm | nm | 0.43 |
| 15G | s | 30° | nm | nm | 0.47 |
| 15H | s | 35° | nm | nm | 0.48 |
| 15I | s | 40° | nm | nm· | 0.51 |
| 15J | 0.250" | 30° | nm | 1.0 | 0.22 |
|  | s | s | nm | 2.0 | 0.23 |
| 15K | 0.245 | 35° | nm | 1.0 | 0.22 |
|  | s | s | nm | 2.0 | 0.25 |
| 15L | 0.250 | 40° | nm | 1.0 | 0.24 |
|  | s | s | nm | 2.0 | 0.27 |
| 15M | 0.30 | nm | 16 | 1.5 | 0.29 |
| 15N | 0.750 | 30° | nm | nm | 0.66 |
| 15P | s | 40° | nm | nm | 0.73 |

It is not required that the actual values of the Table be used; instead, intermediate values which are obtained by interpolation between respective values for $Z_o$, $\Phi$, and $Z_{MAXIMUM}$ in two rows can be used.

## OTHER FACTORS AFFECTING ILLUMINATION

### Bias Grind

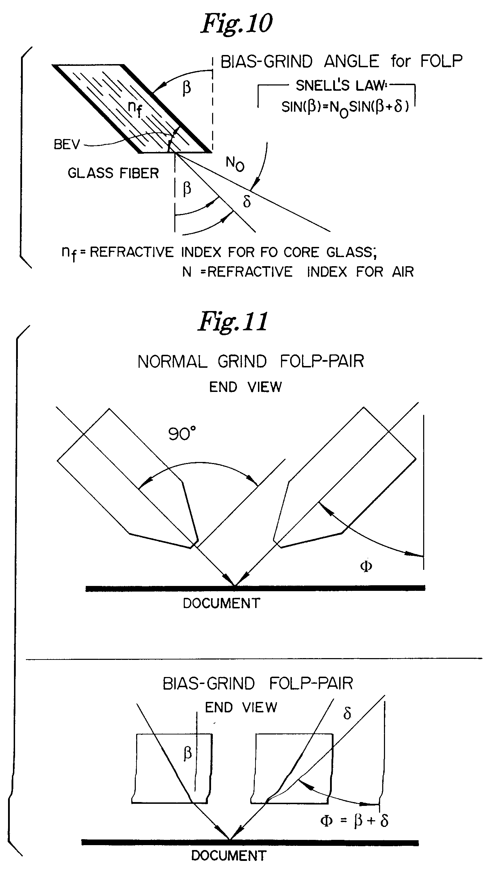

As the section of "Technical Considerations" entitled "Incorporation of Bias-Grind Angle" indicates, the ends of each fiber in Figure 10 are ground at a bias angle (or bevel angle) Bev, with respect to the optical axis of the fiber. This bias angle "throws" the exiting light rays by an additional angle $\delta$, which can be computed according to Snell's Law. One benefit of the additional angle $\delta$ is that the FOLP pair can be made more compact. That is, if the incident light rays are viewed as forming a V when they intersect, the fibers which project these rays need not lie on the legs of the V. Instead, they can lie on the legs of a V having a smaller apex angle, as shown in Figure 4M.

The bias grinding is accomplished as follows. The fibers are clamped into two vises 200, as shown in Figure 4N. The protruding ends are ground flat and polished, by one or more abrasive surfaces 202. The projecting end of each bundle is thus ground into a single facet 204 in Figure 10, and both facets lie in a common plane, namely, the plane of the abrasive surface.

### Correction for Thickness of Guide Glass

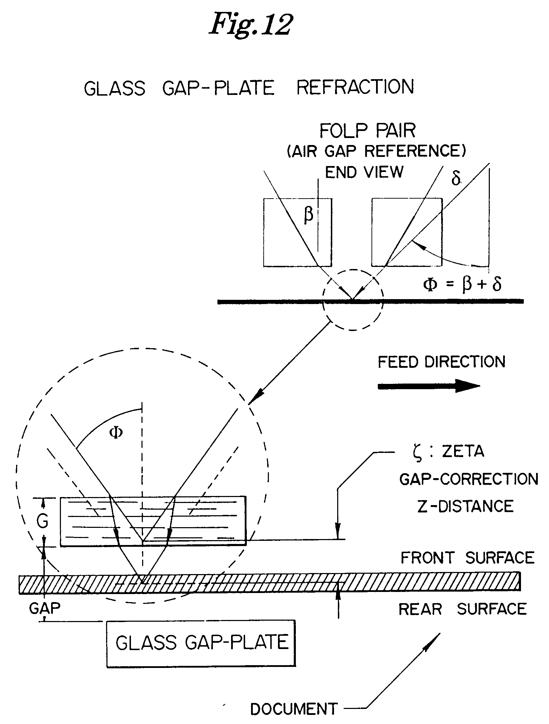

As shown in Figure 12, the guide glass 213 (also shown in Figure 9) refracts the light projected by the FOLP, such that the primary rays intersect as though they were projected along paths 215 and 217. Accordingly, the FOLP pairs are positioned to allow for this fact, so that the intersection occurs at the desired point. Computation of the new FOLP position is explained in section of "Technical Considerations," and equation 34 gives the displacement required of the FOLPs.

Alternately, the glass guide 213 can be ground so that the incoming rays, projected by the FOLP, enter and exit perpendicular to the glass, as shown in Figure 4R. With such a configuration, the diffraction shift of Figure 12 is eliminated.

It is stated in "Technical Considerations" that part of the spectrum (such as the NIR part) of the light otherwise reaching the CCD array 2 in Figure 1B is filtered out. The filters can be associated with the guide glass. For example, the filters can be inset into the guide glass, as in Figure 4Q, or the filter can be a 1/4 wave film applied to the side of the glass which the sheet does not contact, as in Figure 4P.

### $Z_o$ is Referenced to Statistically Most Likely Location of Sheet

As the section of "Technical Considerations" entitled "Z-Axis Correction for Thick Glass-Plate Scan-Gap" indicates, the sheet, in passing through the pair of guide glasses, will flutter, and change in position. There are many statistical methods for ascertaining the most likely position of the paper. For example, if it is assumed that a side view of the fluttering paper is a sine wave, there are methods of computing the mean amplitude of the sine wave.

The FOLPs are positioned a distance $Z_{OPTIMUM}$ from this statistically most likely point. Further, this point must be adjusted, based on the paper caliper, because, although the top surface of the paper can be located exactly on the inner surface of the upper glass in Figure 12, it must remain above the surface of the lower glass by at least the paper thickness.

### Scanning Two Sides of Documents

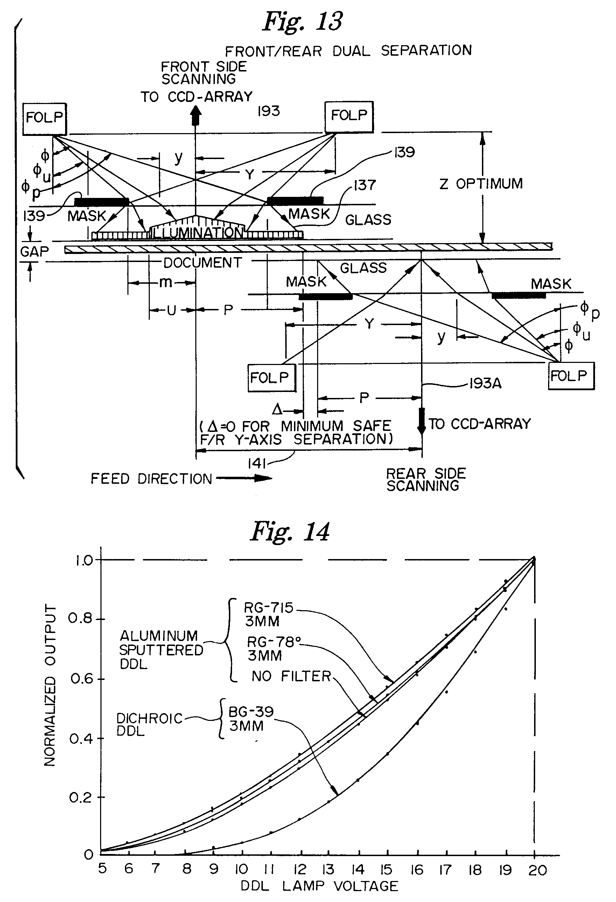

Figure 13 shows FOLPS which illuminate two sides of a scanned document. The illumination regions must be offset to avoid interference with each other. However, the offset should be minimal, because the offset, in effect, increases the length of the sheet, and thus increases the scanning time of a sheet.

As the section of "Technical Considerations" entitled "Dual Front/Back-Side Scanning of Documents" indicates, the Inventor has derived mathematical functions for computation of dimensions P and U in Figure 13. P and U refer, respectively, to the penumbra and umbra created by masks 139. P is the distance from the optical axis 193 of the CCD array (or camera) to the edge of the penumbra. The location of the penumbra edge is determined by geometric optics, and occurs where the refracted ray 137 strikes the sheet. U is the distance from the CCD optical axis 193 to the edge of the umbra. In one sense, the umbra is the common area illuminated by both FOLPs, and its edges are also ascertained by geometric optics.

The Inventor has found that, in general, U should be about ten times the line width (the line width is the height of the data sites) in the y-direction. Thus, for a resolution of 120 dots/inch, U should be about ten times 1/120, or 0.083 inch. For this value of U, a separation (dimension 141) of 0.5 inch between the optical axes of the CCDs (ie between axes 193 and 193A) has been found to prevent the illumination on one side of the sheet from interfering with the imaging by the CCD on the other side of the sheet. This separation distance should apply even to transparent sheets. For opaque sheets, the Kulbelka-Monk theorem, discussed in "Technical Considerations," provides a method of computing a smaller separation distance, if desired. Alternately, the smaller distance can be determined by trial-and-error.

**Operation of Lamp Below Rated Power**

Figure 14 shows relative intensities, in different spectra, of the DDL 150 lamp, when operated at different voltages. The Inventor has found that operating the lamp at about 85 percent of rated voltage (ie, at about 17 or 18 volts, for a lamp rated at 20 volts) provides a significant increase in lamp lifetime. For example, one particular DDL 150 lamp having a mean time between failure of 500 hours has operated for at least 2,000 hours when powered at about 17 volts, as opposed to 20 volts. The increase in lifetime provides increased reliability of the illumination system, reduced downtime, and reduced costs associated with visits to a scanner installation by service personnel. Figure 14 shows that, at 18 volts, the lamp intensity, in the visible spectrum, is about 70 percent (ie, at point P) of the intensity at 20 volts.

It is noted that, as the voltage is reduced, the spectrum shifts generally toward the red. For illumination of sheets in the visible range, the color temperature of the lamp should remain above 5500 K; for NIR scanning, the color temperature should be above 4500 K. Measurement of color temperature is known in the art.

Therefore, operation at about 85 percent of rated voltage provides almost no change in the NIR output, a small change in the visible output, and produces a significant increase in lamp lifetime. One definition of "rated voltage" is the voltage at which the normal mean time between failure is measured. Another definition is the voltage at which the lamp produces its rated output power.

**Overall System Efficiency**

The light source 7 in Figure 1A consumes 100 watts of power (ie, 17 volts at 5.9 amps), when running at 85 percent voltage, as stated above. Part of the infrared energy is lost through the dichroic reflector 105 shown in Figure 2. The visible light is collected by several thousand optical fibers spread over a bundle diameter, $D_b$ in Figure 2, of about 15 millimeters, at a location where the beam diameter D is about 36 mm. The fibers form an exit aperture of about 9.5 inches x 0.030 inches, and project a stripe of about 0.160 inch onto the sheet.

The optics of the system (represented by the lens 8 in Figure 1B) cause the pixel detectors in the CCD to image a line which is 0.008 inch tall (dimension 11 in Figure 1B). The lens 8 is one having low spatial distortion, sharp contrast (ie, high modulation transfer function), and flat field of view. One such lens is a Fujinon 25 mm focal length, C-mount, F/1.4 lens stopped down to F/2.0.

The CCD used can be a Fairchild model no. CCD 134A, having 1024 elements; each element is 13 x 13 microns (1 micron = $10^{-6}$ meter). (The Fairchild CCD 143A, with 2048 elements, can also be used.) With model CCD 134A, in the system shown in Figure 1A, the Inventor has measured an output voltage of 0.1 volt, at the CCD, using a clock rate of 15 Megahertz. (The duty cycle is nearly 100 percent.) This measurement allows a computation of the light intensity reaching the CCD, as follows.

The manufacturer's specifications for this CCD state that, when the CCD is illuminated with broadband light at a color temperature of 2854° K, the CCD has a responsivity of 2V/microjoule/cm$^2$ at 5 Mhz, meaning that an incoming intensity of 1 x $10^{-6}$ joules per square centimeter causes the CCD to produce a signal of 2 volts, when clocked at 5 Mhz. The Inventor's measurement used a treble clock rate (15 Mhz versus 5 Mhz) to that in the manufacturer's specification, and obtained 1/20 the voltage (0.1 x 1/2). Since a faster clock rate proportionately decreases the number of photons collected, and the voltage of the CCD indicates proportionately the light intensity, the invention produces an intensity, at the CCD, of (3/20), or 0.15 microjoules/cm$^2$.

Restated, the light intensity reaching a data site which is 0.008 inch tall on the sheet in Figure 1A is sufficient to produce a CCD signal of 0.1 volt, at a 15 Mhz clock rate (which corresponds to an exposure time of about 66.67 x $10^{-9}$ second, ie, 1/15,000,000). The intensity is 0.15 x $10^{-6}$ Joule/cm$^2$, as stated above.

Therefore, since the area of each CCD element is (13 x $10^{-6}$)$^2$, or 1.69 x $10^{-10}$ meter$^2$, which equals

15

$1.69 \times 10^{-6}$ cm$^2$, the energy received per pixel is $(0.15 \times 10^{-6}$ J/cm$^2) \times (1.69 \times 10^{-6})$, or $2.535 \times 10^{-13}$ Joule. In order to arrive at a transfer efficiency from the lamp to the CCD, one must compute the energy delivered by the lamp in one period at a clock rate of 15 Mhz. Assume that the lamp produces 150 watts. One watt equals one Joule/second. The lamp energy produced during one period is 150 J/sec x (66.67 x $10^{-9}$ sec), or $1 \times 10^{-5}$ Joules. For 150 watts consumed by the lamp, $1 \times 10^{-5}$ watts reach the CCD. The transfer efficiency is $10^{-5}/150$, or $6.67 \times 10^{-8}$, referenced to a single CCD element. If 1,000 elements are considered (Fairchild model 134A contains 1024 elements), then the transfer efficiency is $(6.67 \times 10^{-8}) \times 1000$, or $6.67 \times 10^{-5}$. That is, the 1,000 cells of the CCD receive light energy which is 0.0067 percent of the electrical energy consumed by the lamp.

## Alternate Embodiment

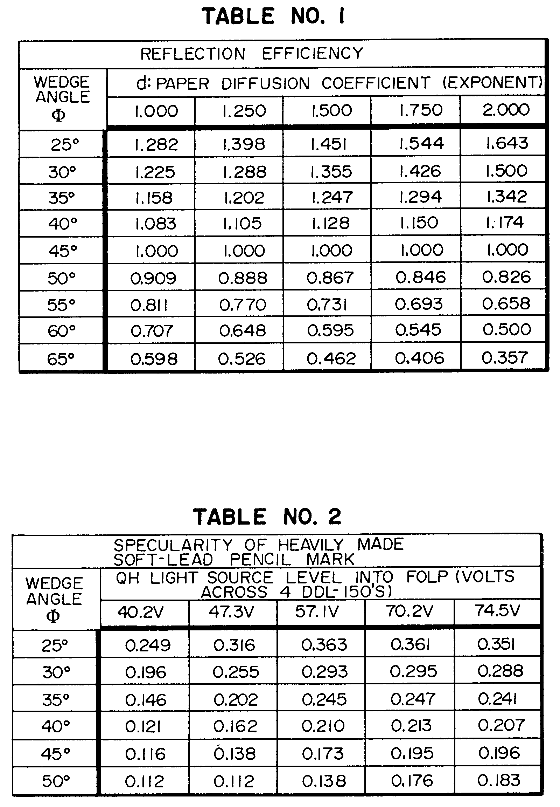

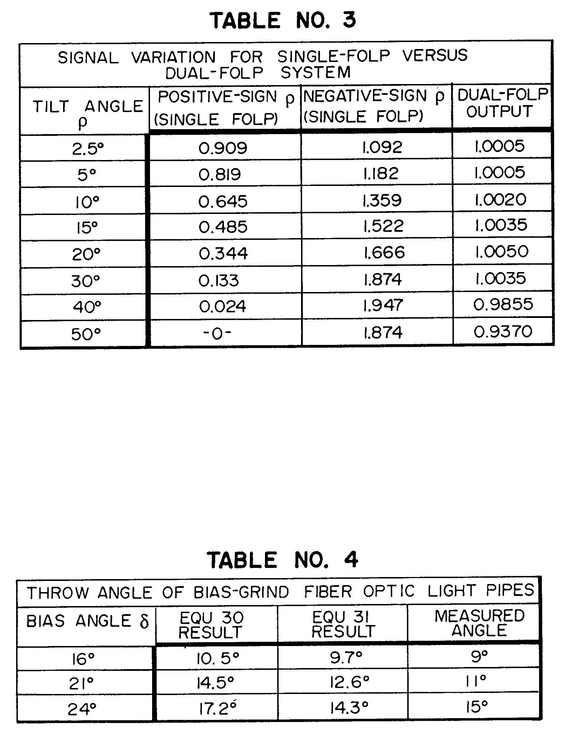

Figure 16 illustrates another embodiment, in which the two FOLPs of Figure 1A are mounted on a hinge, such that the primary rays 173 always intersect at hinge point H. A linkage, known in the art, is provided which maintains the respective angles A1 and A2 equal with respect to a normal N to the surface to be scanned. With these equal angles, the features discussed above, such as cancellation of reflection variation resulting from flutter, will be maintained. If the angles were not kept equal with respect to the surface normal, the situation shown in Figure 17 can occur, resulting in a lack of symmetry, and loss of many of the noise-cancellation features.

TECHNICAL CONSIDERATIONS

## BACKGROUND

A majority of the U.S. adult population, at some time or another during the formal education phase of their lives, were required to take a "mark sense" test. Common examples are BASIC SKILLS tests in the primary schools, EDUCATIONAL DEVELOPMENT tests in secondary schools, ADMISSION TESTS for qualification or acceptance into colleges or similar institutions of higher learning, and other tests administered across abroad spectrum of the U.S. educational system. Increasingly, "mark sense" data gathering, or more correctly "OMR" - Optical Mark Reading - is being chosen by governments and industries *worldwide* as an economical, effective, and practical solution to source data gathering and processing in today's "computer age". A large U.S. corporation currently processes an annual average of two hundred million $8\frac{1}{2}$" x 11" size documents in its order entry process. Secondly, the United States Government uses OMR scanners at military bases for proficiency testing, inventory control, surveys, and other applications. Yet another example is the processing of over seven million documents during a seven day period - but only once a year - by the Ministry of Education of Japan to select a small percentage of high school seniors for entry into a limited number of openings in the National Universities.

## PENCIL MARKING INSTRUMENTS

The historical restriction to using *only* #2 lead pencils as the marking instrument was not an arbitrary decision on the part of the pioneering designers, but rather because the only suitable light sources and detectors in the early phases of OMR development were those that operated efficiently in the near infrared range (NIR) of the electromagnetic spectrum; that is, in the 700-900 nanometer wavelength band. Pencil lead, by its very nature, contains graphite - a form of carbon - that readily absorbs near infrared radiation. Fortunately, NIR is easily provided by ordinary incandescent light sources. Thus it was a natural design decision to select inexpensive, readily available incandescent (tungsten filament) sources, such as automotive head lamp bulbs from the unsealed era, meatcase tubular lamps, or similar adaptations for the OMR light source, coupled with photodiodes or somewhat later, silicon phototransistors that "looked" only in the NIR portion of the incandescent lamp output. The visual output (VIS) was ignored. This was not objectional since more than 70% of the output energy of a typical household tungsten lamp is *beyond* the visual, human eye range. The major portion of the total output is in the NIR and longer wavelength regions of 900-2000 nanometers.

When an OMR system is operating in the NIR spectrum, inks or responses made with marking instruments *other* than carbon bearing devices, such as red ink pens, are *not* detected because such "material" on top of the OMR document surface does not absorb any of the NIR incident energy; the signal reflected to the detector is as strong as in the blank regions of white paper only. Non-detectable NIR inks are known as "drop out" ink colors. Therefore, colored ink preprinted bubbles do *not* cause a background noise signal to the detector which is the *desired* effect in the NIR mode. The respondent's NIR pencil mark does *not* mimic the dropout ink - meaning invisible to the detector - but rather is differentiated and detected by the carbon or graphite in the pencil.

## INK MARKING INSTRUMENTS

As opposed to conventional or "traditional" Optical Mark Read (OMR) technology, in which the data fields are printed in colored ink only and the marks must be entered with a #2 lead pencil, the Inventor has developed a new reading system, AIM, - Any Instrument Marking and also All Inks Manufactured - which accommodates a wide range of printing inks and marking devices. Black ink is permissible for the preprinted OMR data fields on the form and red ink may be used as the marking color - a *prohibitive* combination with earlier technology. This flexibility permits new form design techniques, manufacturing procedures, and leads to applications that were heretofore impractical.

## IMAGE CAPTURE CAPABILITY

A prime example of new scanner capability, when combined with an "electronic camera" CCD (Charge Coupled Device) linear array detector, is the means to capture the *entire image* of a document, regardless of the printing inks used in manufacture, or the type of marking instruments used in filling out the form. In this discussion, the incorporation of an image capture enhancement to a basic OMR system - whether the latter operates in the NIR or VIS mode - will be referred to as the ICE feature (Image Capture Enhancement).

Although there are many benefits in designing an AIM (e.g., visual VIS mode) oriented methodology for OMR data gathering, especially new *general purpose* applications possibly including the ICE option, there *remain* numerous situations in which a scanner - for maximum utility - needs to accommodate traditional OMR forms designed *only* for the NIR, #2 pencil mode.

## EIGHT DESIGN PARAMETERS FOR A FIBER OPTIC LIGHT SOURCE

From the above discussion, **eight** design parameters emerge for a scanner light source design capable of supporting both types or modes of reading detection, and including the ICE feature:

1) The light source should provide a broad-spectrum or wide bandwidth of optical energy spanning the two spectral bands, respectively, that are required by the NIR and VIS modes. For an efficient NIR system, the useful energy lies in the 750-900 nanometer band, whereas in the VIS mode of operation, spectral energy in the 400-680 nanometer band is required. Once the light source meets this key requirement, "downstream" optical block/pass filters in the optical path select the desired portion of the wide-band energy, and purge the remainder. Typically, these filters are inserted directly in front of the object lens that feeds the reflected sheet signal into the CCD detector array.

2) The light source should provide a continuous and reasonably uniform source of energy to the document surface scanning axis - typically orthogonal to the paper feed direction. The energy distribution should be continuous because - as opposed to traditional OMR discrete-cell detector reading heads that only require multiple "spots" of light - the newer CCD detector technology "looks" continuously along the scan axis. It is this feature that permits ICE capability and flexible recording of OMR marking positions at any desired location on the sheet.

3) The energy level at the sheet surface should be much higher than that generated by previous light sources as the CCD has a relatively small active photosite per detection position (pixel) with respect to conventional OMR discrete-cell detectors. When the scanning system is operated in the VIS mode, the energy level is further increased because of the greatly reduced responsivity of the CCD array in the visual range of optical energy.

4) The light source should have a superior "depth of field"; the ICE option requires that very small contrast levels (data versus paper background) be reliably detected from the sheet surface - as opposed to conventional OMR systems whereby the only requirement is the detection of a "mark versus no-mark". Sheets usually flutter up and down when passing through the scan-axis gap on the feed bed. An adequate depth-of-field assures that these fluctuations *do not* introduce false contrast signals into the CCD detection system. This requirement becomes even more demanding with recently designed scanners that are able - in the ICE mode - to capture images of photographs, labels, and other objects attached to the sheet surface. The attachment of such objects requires the scan-axis sheet gap be set to wider dimensions than otherwise needed for conventional OMR systems. Gaps of up to 0.075" are required on the newer designs, as opposed to 0.025" for earlier products.

5) The light source should provide optical energy "geometry to the sheet surface in such a manner that "real world" documents - having wrinkles and fold-lines - do not introduce spuriously detected signal artifacts into the CCD camera.

6) The light source should accomodate documents with high surface specularity. Capability of visual mode scanning, ICE options, and improved OMR features "opens the door" to a wider and wider variety of source documents eligible for scanning. This, in turn, implies handling documents that were not, *a priori*, designed with the future intention of electronic processing (file cabinets of older medical history records, for example). In some scan-conversion applications, this situation results in processing documents containing glossy finishes, or other surface conditions causing excessive specularity - a property of acting like a mirror surface in that light is reflected according to the well known optical law that states, "the angle of reflectance equals the angle of incidence". Unless great care is taken in the light source design used for document scanning - particularly when the ICE option is invoked - glossy paper surfaces will appreciably reduce the data-to-background contrast ratio, and in extreme cases, "shiny" data marks made with soft-graphite pencils will reflect more light than the underlying paper surface. In this peculiar circumstance, there is "no hope" of reliably detecting pencil marks, text, or other handwritten data unless the light source design overcomes high-specularity conditions.

7) The light source should be considerably smaller than prior art systems, while delivering equal or greater optical energy to the sheet surface. Maximum compatibility with mechanical packaging techniques used in modem, small-size "desktop" scanner platforms demands the incorporation of new design features - taking full advantage of various "optical and physics laws" - to achieve the compact size requirement. Another important benefit of reduced size for the light source is the respective front and rear sheet-side light sources are minimally offset in the feed-direction, thereby improving throughput speed since the scanned length of the document is reduced.

8) The "new technology" scanners which incorporate AIM and ICE capabilities should, in some cases, be field retrofittable to an NIR mode of operation. Morevoer, with respect to the light source design, the AIM NIR/VIS changeover must be achieved by field staff with only nominal intervention.

## PRIOR ART LIGHT SOURCE DESIGNS

### ● Small commercially available incandescent lamps

Over the years, a variety of devices have been employed as light sources for OMR scanning systems. Some of the earliest sources were "off the shelf" adaptations of incandescent lamps. These products were inexpensive, readily available, and provided adequate near infrared (NIR) output for the mark signal detectors of the day. The signal from the OMR form was derived either by source light energy *transmitted* through the sheet, or alternatively, *reflected* from the same side of the sheet surface. In the former case, #2 pencil marks on *either* side of the form - such marks necessarily being front/rear interlaced to avoid overlap and location ambiguity - caused an analog drop respective to the transmitted blank paper signal level.

In *reflected* light reading, marks appearing independently on the front/rear sheet surfaces can be detected as a drop in the reflected level of the incident energy with no restrictions on front/rear alignment. In currently manufactured OMR systems, reflected reading is the *preferred* embodiment since paper surface reflectance noise is significantly less than paper thickness transmittance/opacity noise, and the reflected mode thereby permits much greater threshold sensitivity in detecting small, poorly made marks. For image capture enhancements (ICE) to the basic OMR technology - in which case very small details on the document must be detected - reflective reading is essential.

### ● "Grain of Wheat" subminiature lamps

The development and manufacture of smaller and smaller incandescent lamps, culminating in "grain of wheat" lamps in the 1950's, primarily for electronic test instrumentation, cockpit panels, and various industrial/medical applications, afforded another designer's choice for OMR scanner light sources; particularly since the smallest sized lamps could be spaced closely along the $8\frac{1}{2}$" scan axis. When discrete photodetectors are spaced at five to eight cells per inch along the scanning axis, subminiature lamps or a pair of such lamps can be assigned to each photodetector position and grouped at the same aligned spacing/inch. The only disadvantage to this simple approach is the aggregate quantity of devices (manufacturing parts count) involved, associated hand assembly time/labor, and replacement of occasional burned out lamps. While there is a noticeable temperature rise in the body or housing containing the lamps for a 40 to 64 cell (bubble) reading head, temperature tracking circuits can be incorporated to compensate for gain shifts versus temperature in the detectors.

● **Tubular Quartz-Halogen Lamps**

In the early 1960's, tubular quartz halogen[1]incandescent lamps (QH) became widely available for industrial lighting applications where extremely bright, high output, long life is necessary. High wattage, 10" long units were used either singly or in pairs as a light source for 8½" wide OMR sheets. The NIR or VIS outputs were adequate for any kind of OMR detector system. The major disadvantage, however, was these 500 watt lamps generated an enormous amount of heat by-product energy *on* the document surface and *nearby* detectors. Heat removal considerations to avoid undue temperature rise and component instability lead to an ungainly reading head package with forced air cooling ducts, but nonetheless this approach was used successfully in the 1960's on several high speed, high performance reflective type dual read scanners.

## THE CCD DETECTQR FQR USE WITH FIBER QPTIC LIGHT SQURCES

The preferred detector for image capture enhancements (ICE) to an OMR system presently consists of a charge coupled device (CCD) linear array - an "electronic line scan camera" - as contrasted to a group of regularly spaced discrete detector cells that are predominately used in conventional NIR-OMR scanners. The CCD array may be thought of as a highly miniaturized, tightly spaced, high capacity integrated circuit version of a conventional discrete-cell detector "bank". A typical CCD array will contain 1024 or more photosites. An ICE reading head detector, rather than being designed as an NIR-OMR module with 48 to 64 discrete cells spanning 8.5" in proximity to the sheet surface, is configured by locating the 0.5" long CCD array relatively far from the sheet surface. The 12" to 24" lens-to-CCD optics path transposes the sheet image to the CCD array camera. The general approach to this type of CCD scanner design is covered by U.S. Patent NO. 4,300,123; issued on Nov. 10, 1981 to McMillin et al. The system taught by this patent is operated in the NIR mode - #2 pencil mark reading only - and, accordingly, the 30 to 60 watt pair of tubular incandescent lamps shown in the patent drawing produce more than adequate output to "drive" the CCD line scan camera. A visual-spectrum block (VIS) optical filter is used to *force* the camera to look *only* in the NIR region, and thereby *not* see any preprinted colored ink used to show marking targets or bubbles. The filter is inserted between the CCD array face and the lens that projects or "images" the sheet onto the CCD array. Alternatively, the VIS block filter, consisting of a 2 to 3 millimeter plane of special glass, can be placed directly in front of the lens, or elsewhere in the "light source to detector" optical path.

## INADEQUACY QF PRIQR CCD-SCANNER LIGHT SQURCES FQR NEW DESIGN

The incandescent light source *purification* to an ideal NIR output by the VIS block filter - essential for distinguishing the #2 pencil marks in the presence of preprinted colored ink - is not costly in terms of light output efficiency for an NIR system as more than one half of an incandescent lamp "radiation envelope" output is in the near infrared range. The tubular incandescent lamps shown in the above patent, however, fail to provide the required output for an AIM based scanner. This is caused by the relatively little amount of pure VIS energy in the lamp output (< 30%), coupled with the reduced sensitivity of the CCD array in the

---

[1] Quartz-halogen refers to the specialized materials and methods of manufacture in this type of incandescent lamp, as compared to an "ordinary" lamp. Instead of an inert gas being sealed in the glass enclosure surrounding the tungsten filament, a gaseous halogen such as iodine, is placed within the quartz shell containing the tungsten filament. The filament geometry, physical size, and input power ratings are significantly improved over ordinary tungsten-filament lamps because the halogen "continuously recycles" the tungsten atoms back to the filament as they "boil off" during operation. Thus, as opposed to an ordinary lamp which darkens with age due to tungsten migration to the glass bulb. the quartz-halogen retains its brightness over rated life. This beneficial recycling effect, in conjunction with the high-temperature stability of the quartz housing, permits extremely high output designs in very small enclosures, again compared to ordinary lamps of a similar size.

upper VIS spectrum.[2]Therefore, an AIM scanning array must have a more powerful source of optical energy than can be provided easily and safely by low wattage incandescent sources - either conventional *or* quartz halogen - when in proximity to the sheet surface. The previous generation OMR products that used 500 watt tubular QH lamps as a light source are ruled out for a sophisticated 1990's AIM product design because of the high power requirements (500 watts or more), heat dissipation and related engineering problems, and the possibility of scorching or setting on fire a jammed sheet.

## NEWER ALTERNATIVES FOR AIM SCANNER LIGHT SOURCES

Before describing the preferred embodiment of the Inventor's Fiber Optic light source - driven by compact QH lamps - three (objectionable) alternatives are mentioned briefly:

● **Light Emitting Diode Arrays**

1) A variety of either individually encapsulated or bar strips of LED's - Light Emitting Diodes - are offered with outputs in the red, orange, yellow, green, and blue *visible* spectral range. Importantly for NIR-OMR usage, infrared emitting units are also widely manufactured. LEDs are small, highly reliable, inexpensive devices and are ideally suited for *traditional* OMR system light sources that use discrete cell phototransistor detectors in the NIR pencil mode. Extending the use of LEDs into an AIM/ICE design for VIS mark detection is not a preferred solution, however. The visible output LEDs, such as common 680 nanometer units, produce inadequate output to drive a CCD array camera at the clock rates necessary for a high document throughput rate. Furthermore, the LED output is monochromatic; the output band of spectral energy, such as red, is very narrow. This means that even it the energy required for AIM scanning is met, respondent marks made in red ink can not be detected with an AIM system using *only* an LED red source. The color *red* is detected by the process of all reflected light from the incident source being absorbed into the paper *except* red; *only* red energy is reflected to the detector. A white piece of paper covered with red ink and illuminated by red light reflects essentially the same energy as blank white paper. In other words, *red* becomes the **dropout color**. Similar conclusions apply in attempting to read green inks with green emitting LEDs, or *blue* ink with *blue* LEDs, and so on. A chromatic "white light" energy source must be available on the sheet surface to read the full spectrum of ink and mark colors.

Even with exotic packaging schemes in which mixed, clustered, or combined multi-color LED arrays are used to provide incident energy to the AIM document, there are spectral pockets or gaps that contain dropout colors or marks. This results in undesirable restrictions or exclusions to the primary AIM attribute of scanning and detecting Any/All Instrument/Ink Marking/Manufactured. This deficiency, and the lack of adequate VIS output of available LED devices, excludes these components from the present embodiment of high speed AIM scanners.

● **Helium Neon Laser Beam Illumination**

In lieu of using the small, solid state LED devices for OMR scanners, some manufacturers take advantage of gas tube helium neon (HeNe) lasers to provide incident energy to the sheet. As opposed to the LED devices which are normally mounted in proximity to the sheet surface and along the 8½" scan axis, the HeNe device is located a foot or more from the sheet. This small spot of laser energy sequentially sweeps over the area to be scanned, such as in a TV raster. The technique is particularly adaptable to optical character readers (OCR) where often only small area segments of the sheet are scanned. The *sequential* access to document data by HeNe beam raster deflection is not a detriment to throughput when only small regions are scanned, although designing a high-speed full page size scanner is difficult. The HeNe beam output is in a narrow spectral bandwidth centered at approximately 630 nanometers. In an attempt to use the HeNe laser as an AIM light source, the dropout color problem - in this case *reds* in the 630 nanometer range - is a major disadvantage, since many people fill out forms with red ink pens. Therefore, an HeNe red color laser - the only color that is commercially affordable and "fittable" into a practical paper feeder - is ruled out for use in an AIM system.

● **Fluorescent Gas Tube Illumination Sources**

[2]The CCD sensitivity "fall off" is a quantum-mechanics law of solid-state device physics and cannot be prevented, per se.

20

Finally, note is taken of tubular fluorescent lamps. Lamps of this nature were formerly available only in large diameters (1.25", for example) and in minimum lengths of 24" up to several feet. Packaging-wise, it was awkward to incorporate this size of lamp into an acceptable OMR product. In recent years fluorescent lamps have become available in much smaller sizes, such as ½" diameter, 8" long units used in portable camper lights, and other specialty applications. Indeed, some low speed OCR readers use specially designed, small size fluorescent lamps. Similar types are sometimes found in low cost "desktop" scanners. Enhanced green output units are used in some photocopier products. Likewise, from the AIM spectral requirements and design viewpoint, fluorescent sources have many redeeming features, such as *broadband* VIS spectral output (with minimal NIR energy content), cool operating temperature, low wattage operation, and nearly uniform output along the active length. The difficulty in the use of fluorescent lamps in *high speed*[3] AIM and ICE scanners, however, is their relatively low output in the VIS range; inadequate to provide sufficient sheet reflected energy to the CCD array camera.

## FIBER OPTIC LIGHT PIPE (FOLP) - THE PREFERRED SOURCE

Fortunately, a means exists to concentrate sufficient VIS energy along the 8½" scan axis direction of an AIM style document *without* resorting to 500 watt proximately located tubular incandescent lamps or other ungainly schemes. The solution is specially designed fiber optic light pipes (FOLPs) as a conversion module to conduct the output of remotely mounted, intense light sources onto the document scan axis.[1] The FOLPs are used in pairs, on either side of the scan axis, and are mounted to optimize incident energy delivered to the sheet, while minimizing specularity artifacts and depth-of-field concerns. The FOLP produces a reasonably uniform, linear wedge of light with an emitting surface 0.030" wide by 9.5" long. The entrance end of the FOLP, consisting of a tightly packed bundle of glass fibers, is configured in whatever geometry is required to capture the available output of the selected light source. If, for example, a 500 watt tubular quartz halogen incandescent lamp drives the input of a FOLP, the bundle of glass fibers is packed into a rectangular housing whose length equals the optically usable portion of the QH lamp. Taking advantage of the high QH VIS output, while keeping the generated heat a safe distance from the AIM document with the FOLP converter, results in a practical optical front end system for the high speed AIM scanner. Furthermore, there are now better QH lamps than the high wattage tubular one cited above.

## PROJECTOR TYPE OH LAMP - INPUT ENERGY SOURCE FOR THE FOLP

The *preferred* lamp family for the FOLP converters used in the AIM system consists of "projector" style QH lamps with attached dichroic ellipsoidal multifaceted reflectors. A dichroic reflector - by optical definition - is a surface with spectral separating properties. Less technically stated, these QH lamps are about 2" in diameter, and are analogous in shape to a miniature bowl with the QH filament element positioned in the center of the bowl (reflector). The reflector has a thin film dichroic surface which acts like a forward path mirror for the VIS portion of the QH output, while transmitting the NIR and infrared energy (IR) harmlessly *through* the glass reflector to the backside. The reflecting "bowl" has a three dimensional ellipsoidal geometry, the optimum contour for focussing nearly all of the VIS output in the forward direction. The multiple or compound facets molded into the ellipsoidal reflecting bowl further refine the uniformity and unidirectional properties of the output beam.

This style of QH lamp is available from many sources in an extensive product offering of different wattage, color temperatures, rated lifetimes, beam focussing distances and cross-sectional sizes, divergence/convergence angles, and mounting/socketing alternatives. These lamps are widely used in slide projectors, microscope stage lights, portable light sources for VCRs, showroom floods, and other applica-

---

[3] High-speed is, of course, a relative term in optical mark reading. As used in this disclosure, a high-speed AIM scanner is one wherein the CCD-array clock rate is operating at near the maximum frequency permitted by commercially available CCDs - typically 15 to 20 megahertz. As the frequency is increased, the charge-integration time for each photosite in the array (each pixel) is reduced accordingly. Therefore, proportionately more incident optical energy must be available to generate the same level of output signal as was produced at a lower frequency.

[1] Two prior art U.S. Patents show fiber optic light source systems: SENSOR FOR PUNCHES AND MARKS, No. 3,566,083; issued to McMillin on February 23, 1971, and REFLECTED LIGHT DOCUMENT READING HEAD, No. 3,676,690; issued to McMillin, et al, on July 11, 1972.

tions where an intense, highly efficient lamp is desired - *and* where the NIR output is specifically *not* wanted.

The forward portion of the QH output energy, as directed by the dichroic plating on the reflector, is predominately in the desired VIS spectrum for an AIM light source.[2]Also, with the NIR and IR content substantially reduced in the forward beam, an inherently *cool* light source results that causes practically no temperature rise; thereby eliminating heat related design problems for the FOLP and other key components in the optical path. Therefore, it is a matter of choosing the optimum set of QH lamp manufacturing specifications for the light source in an AIM scanning application. Several important parameters are:

1) high absolute energy input level in a compact package;

2) sufficient VIS output energy in a small beam diameter to optimally feed the FOLP entry bundle;

3) reasonably long life at rated output to reduce lamp replacement at an AIM scanner field site - 500 hours or more MTBF, and;

4) an input voltage-current power product that is compatible with the programmable, regulated DC power supply module used to drive the QH lamp(s).

For the *preferred* embodiment of the AIM scanner, the Model DDL 150 watt 500 hour life QH lamp drives each FOLP in the system. Either two or four FOLPs are required for an AIM scanner, depending whether one or both sides of the OMR sheet are read. The DDL lamps may be operated at *less* than rated input power in specific design instances where the full power input generates a *surplus* of optical energy.

## FIBER OPTIC LIGHT SOURCE - TECHNICAL DESCRIPTION

There are many interrelated factors that must be considered in producing an optimally designed fiber optic light source for a document scanning system. As in nearly any engineering design effort, there are numerous tradeoffs and the final result is usually a "best-fit" compromise that meets the overall design goals and objectives. For the preferred design, several important factors, ingredients, prerequisites, underlying conditions, and design tradeoffs are identified as follows:[3]

1) **Ouartz-Halogen (OH) Power Rating:** QH lamps are commercially available in an enormous range of power ratings - from only several watts input for small scientific instruments, to many kilowatts for stadium lighting, and available in hundreds of packages and mounting styles, color temperatures, and rated lifetimes - thereby serving diverse applications. An entire family of QH lamps are manufactured by many sources for use in the so-called "projector" industry. It is from within this specific "projector family" that the best choices are found for use as a component in the invention. In the common 2" diameter package, perhaps a dozen or more lamps can be selected for usage. The main tradeoff is optical output energy versus the rated lifetime of the lamp. The DDL model, at a rated input of 150 Watts, has a lifetime of 500 hours. A higher wattage unit in the same package size will have a shorter lifetime. Several 300 watt units, for example, range in lifetime from 70 hours to a short 15 hours. While all of these units have the *same* input power, lamp lifetime is reduced significantly as the *optical output* increases (e.g., the "price that's paid" for increased optical output *without* resorting to increased *input* wattage).

2) **OH Output Energy Distribution:** The circular output beam of optical energy from the QH lamp drives the input pipe(s) of the FO pipe-to-wedge converter(s), analogous to the shining of a flashlight beam into a stovepipe. The basic idea is for the beam to "fill the hole", without spilling over. For example, if 90% of the output energy of the QH is in the center 0.5" diameter of the cross-section, there is little point in using FO input pipes that are 1.0" in diameter, as this would only add unnecessary bulk to the FO assembly and increase manufacturing costs. Likewise, if the document width to be illuminated requires an FO pipe diameter of 0.25", a QH lamp that produces a 0.5" cross-sectional energy band

---

[2] Optionally, the dichroic surface of the QH lamp can be "over sputtered" with a thin vacuum deposition of aluminum to enhance the forward output of near-infrared (NIR) energy for scanners that are configured to read conventional OMR marks made with a #2 pencil only.

[3] The following sections - in some cases - repeat concepts, design parameters, and specification issues first outlined in an earlier introductory section of this section, "THE EIGHT DESIGN PARAMETERS FOR A FIBER OPTIC LIGHT SOURCE, pages 37-39, The more extensive list that follows, however, will lead into a detailed description of the related design mathematics, formulas, and other "tools" necessary to understand and implement advanced FOLS for document scanners.

may be "overkill" for this design. Therefore, there is a need to match the QH lamp output geometry with the FO input pipe requirements. This disclosure teaches the design techniques to achieve optimum coupling.

3) **FO Input Pipe Cross-sectional Diameter:** As described above, the input diameter of the FO pipes must be selected in conjunction with the output beam geometry of the QH lamp to achieve an optimum coupling - other design choices or constraints, as described below, also influence the FO pipe diameter specification.

4) **OH lamp to FO pipe coupling efficiency:** Even with the FO pipe entrance optimally placed in the QH beam-energy cross-section, there are coupling losses caused by reflection from the glass fibers at the input nipple - in the range of 4 to 7%. There area additional coupling losses as a function of the entrance angle of the QH output light rays into the pipe. The entrance angle is determined by the entire geometry of the "QH to FO pipe" coupling interface. Ideally, the output rays of the QH lamp should strike the circular cross-section of the FO input pipe at a 0° angle (e.g., a collimated beam), but in practice, the goal is to keep the angle well within the "*half-angle acceptance cone*" - or power lobe of the individual glass fibers comprising the FO pipe bundle.

5) **Glass-fiber Power Lobe Coefficient:** The steradian acceptance angle (or "half-angle about the normal ray to the end of the fiber) can be represented by a simple mathematical function if the power lobe coefficient is known (measured) for a given glass-fiber product. The coefficient, *p,* for the FOLPs lies between 14 and 18, a dimensionless number.

6) **Fiber Optic Pipe length loss:** Since the QH lamp module is typically located a foot or more from the terminating end of the FO pipes - where the wedge output illuminates the document - there is some transmission loss from the FO pipe entry (nipple) point to the FO wedge exit line. The longer the pipe length, the greater the loss. It follows that the output at the end of the FOLP assembly furthest away from the pipe entrance to the wedge will be slightly less than at the entrance end. The difference is related to the transmission loss per unit length and the field-of-view distance.

7) **Document Field of View (F.O.V):** This represents the cross-feed width of the documents that are to be scanned. Typically, for a "full page" size document, this dimension will be on the order of 8.5" for the American tablet/notebook width, and slightly less for an A4 international size. If only a portion of the document is illuminated (e.g., scanned), or only smaller width documents (coupons, cards) are processed, the FO wedge length along the CCD scanning axis can be reduced. As will be taught later in this disclosure, the *actual length* of the wedge-pair must be somewhat longer than the F.O.V., to compensate for FO wedge "edge falloff" effects. The specific amount of compensation is, in turn, a function of the height of the FO assembly above the document surface. Finally, the optimum height is related to the depth of field specification.

8) **Cross-sectional width of the FO Wedge:** The output optical energy delivered to the document surface increases as the width of the FO wedge-pair is enlarged, but only to the point that the FO input pipe(s) are "fully coupled" to the QH lamp. Therefore, a limiting wedge width is reached where little additional energy is produced at the sheet with further increases in width. This disclosure shows the mathematical relationships between the QH lamp output cross-sectional width and the length and width of the FO wedge, which when applied to a practical FOLP design, avoids making the FO width larger than necessary.

9) **FO glass-fiber randomization:** This refers to the degree of "incoherence" that exists in the placement of the individual fibers comprising the FO input pipe nipple diameter to their location (e.g., dispersion) along the length of the FO wedge. The better the randomization, the more uniform the energy distribution along the wedge and the less likely the occurrence of "hot spots" at some specific point in the F.O.V.

10) **Scan-axis sheet-gap clearance:** This is the Z-axis or vertical clearance dimension between the opposite glass plates that define the "throat" into which the document enters for simultaneous front/rear scanning by the CCD array cameras. Typically, the gap dimension must be several times the sheet caliper in order to avoid an excessive feed jam rate. When documents containing labels, photographs, or other surface buildup attachments are scanned the gap may need to be increased further. A well designed FOLP package must accommodate "real world" gap values without introducing reflected signal artifacts into the CCD camera output.

11) **FOLP Depth of Field:** The FOLP optical parameter covering the sheet-gap requirement is known as the *depth of field* (DOF) of the light source; analogous to the DOF for a camera lens. The DOF is expressed as a dimensional value in any convenient reference units, such as millimeters, nX the sheet caliper, or a ratio of the "flat range" reflected-signal distance to the FOLP sheet-surface distance. Implied in any cited DOF value is a corresponding value for the *dependent* scan-axis sheet-gap setting to keep the CCD signal variation within predefined limits, usually ± 3%. DOF values cited in this *DISCLOSURE* will be referenced to "inches of gap" at the ± 3% signal variance level, unless stated otherwise. In a similar vein, an engineering specification or requirement for a given sheet-gap value implies that the FOLP design parameters have been selected to meet a DOF value of equal to or better than the gap value.

12) **Document Specularity:** Documents to be scanned can vary widely in their surface properties - relative smoothness or texture, color, porosity, brightness, reflectance, opacity (Kubelka-Monk properties), and specularity. It is the last parameter - specularity - that most influences the minimum angle at which the FO wedges can be safely "aimed" at the paper surface without undue risk of specular noise being introduced into the CCD camera output signal. The specular property of paper is defined by its diffusion coefficient *d.*

13) **Paper Diffusion Coefficient:** An ideal diffuse reflector produces a reflected pattern of energy (from a point source) that follows a mathematical formula known as Lambert's Law, or sometimes stated as *Lambertian reflection.* Some laboratory examples of such mediums are opal glass and surfaces thickly covered with barium sulphate; chalk is a more common example. Paper stock - as noted above - can vary widely in its reflecting behavior; from almost a perfect Lambertian diffuse reflector, to acting nearly as a "poor quality" minor, especially for glossy or varnished finishes.

14) **Mark Specularity:** Closely related to paper surface specularity is the specularity of the marks present on the document. Soft graphite pencils are notorious for their specular properties, and can reflect a signal level *greater than* the paper background itself if care is not taken in setting the FO wedge output angle. Smaller angles produce a greater absolute-level reflected signal than more extreme angles; therefore, once the "worst-case" specular properties are known for the class of documents to be scanned - and the marking instruments used to fill out the documents have been optically examined - the design goal is to set the wedge emission angle at the minimum safe value.

15) **Bias-grind Angle on the Wedge Output Axis:** Usually, the FOLP is packaged into the smallest possible space, once the key functional specifications have been met (e.g., output energy, F.O.V., DOF, specularity-protection). Bias-grinding is a technique to increase the FO wedge output angle with respect to the sheet surface without resorting to packaging the glass-fiber bundle at the same angle - rather, a reduced mechanical packaging angle is employed and the bias-grinding - as a consequence of Snell's law - bends or "throws" the principal-beam energy an additional angular amount.

16) **FO Output Wedge to Z-axis Angle ( ⊥ to Paper Surface):** The additive effects of the bias-grind angle and the "beam throwing" effects of the bias grinding result in the final, effective angle of the principal beam FO wedge output with respect to a geometric normal to the paper surface. The general rule is, "*increase the angle to reduce specularity, reduce the angle to increase the absolute signal level - wherein the DOF follows a more complex rule, based upon additional variables*".

17) **Reflection Efficiency versus Wedge Angle:** As the FO wedge angle is increased - in an effort to minimize specular artifacts from both paper stock and "shiny" pencils - there is a corresponding loss of efficiency in the amount of signal reflected from the document surface with respect to the output level of the wedge energy impinging on the surface. This loss can be overcome by moving the wedge closer to the sheet surface - but reducing the FOLP depth-of-field - or, increasing the output energy of the wedge, either by using a more powerful QH lamp, or widening the cross-sectional dimension of the wedge.

18) **X-axis Position of Wedge(s):** The X-axis length of the wedge-pair is located symmetrically over the sheet-width or F.O.V. The physical X-axis length of the FO wedge will be somewhat longer than the sheet F.O.V. to compensate for edge-effect losses.

19) **Y-axis Position of Wedge(s):** Ideally, an effort is made to keep the Y-axis separation of the "upstream" and "downstream" wedges - that comprise the pair for a given sheet surface - close together for a compact design. Limiting factors are the physical housing space required to contain the body of glass fibers that are "randomly" converted from the circular pipe termination into the linear wedge, the necessity of a small optical open "slit" between the two wedges for the sheet-reflected signal to reach the CCD camera, and the need to have the wedge mounting angle exceed the minimum specular-limited value.

20) **Z-axis Position of Wedge(s):** As the wedges are moved up and down along a Z-axis normal to the sheet surface the wedge principal-beam output angle is necessarily changing, unless offsetting adjustments are made in the Y-axis separation distance of the "upstream and downstream" wedge pairs. The absolute magnitude of the optical signal reflected from the sheet varies inversely as the Z-axis distance changes, as does the DOF; therefore, the Y and Z values have to be selected, design-wise, in concert with the overall key performance specifications for the entire FOLP system.

21) **Glass Seal Plates:** Although lower speed scanners can be designed wherein the sheet travels through a nearly open path during the CCD scanning sequence, the more practical design typically incorporates a clear glass plate between the sheet surface and the output of the FO wedge. In dual-side scanner designs the outer surface of *two* of these glass plates serve to define the sheet-gap dimension. Due to diffraction effects, the FO wedge-pairs for each respective sheet surface (front and rear) must be relocated slightly (Y & Z axes) from that of a "free-air" design to maintain the theoretically derived *optimum* FOLS depth-of-field (DOF).

22) **Y-axis Offset Distance for Dual Front/Rear FOLPs:** The design goal is to minimize the sheet feeding-direction offset distance to keep the "logical scanning length" of the document short. This contributes to improved sheets/hour throughput efficiency. Once the above design parameters have been selected for a given FOLP product, there is some limiting (e.g., minimum) offset distance which - if reduced further - will result in the two units "blinding" each other. That is, the principal-beam output band of energy along the X-axis of the front assembly interferes with the CCD scanning of the other side of the document. Paper is not 100% opaque, but rather some appreciable amount of VIS or NIR energy "seeps through" and affects the reading of data on the opposite side.[4] Certain design "tricks", such as painting a portion of the inside surface of the FOLP glass seals with a matt-finish black paint, can be employed to "shrink" the Y-axis offset to a smaller value than can otherwise be tolerated.

[4] The degree of optical signal penetration versus opacity, layers (sheets) of medium, and caliper is defined mathematically by the Kulbeka-Monk Equation.

## OUARTZ-HALOGEN OUTPUT BEAM GEOMETRY

The preferred embodiment of the FOLP system uses an industry standard DDL QH lamp as the source of optical output energy to drive the input pipe of the FO converter. As shown in the **Figure No. 1** the ellipsoidal reflector of the lamp acts to converge the forward-reflecting light into a circular cross-section of maximum energy a short distance from the lamp reflector, about 2.5".

Other *projector style* lamp modules are available that either converge the maximum energy circle closer to the lens reflector - with a *smaller* diameter of energy concentration - or alternatively, focus the maximum energy point well beyond the lamp itself. In the former case, a substantial portion of the emitted rays cross the maximum energy point at a sharp angle with respect to the center-axis line, since they are coming from the outer periphery of the ellipsoidal reflector. For a long-focus lamp, the rays are more nearly parallel to the center axis (e.g., collimated), and the cross-section is larger in diameter, but the average *energy density* within the circle is reduced. These "focal length" variations are usually determined by different manufacturing locations of the tungsten filament position along the principal axis of the ellipsoidal reflector. The curvature of the faceted glass reflector can also be changed to produce a similar effect.

The circle of maximum energy on a short-focus lamp may be *too small* to effectively cover the diameter of the FO entrance pipe and, also, the rich, small diameter portion of the rays covering the FO pipe will not "couple well" - the sharp angle of a majority of the entering rays fall outside the power-lobe steradian cone acceptance angle of the glass fibers in the FO pipe. The long-focus beam, while better suited for coupling into the FO entrance pipe because of the near parallelism with the FO pipe principal axis, suffers an efficiency loss since the FO pipe diameter is probably too small to capture the full cross-section of energy.

Therefore, in a practical FOLP design a QH lamp between these "spot and flood" extremes is a better choice. Specifically, the DDL Model 150 Watt lamp is preferred.

## POSITIONING THE FIBER-OPTIC ENTRANCE PIPE (S)

As shown in **Figure No. 2,** the entrance end of the FO pipe is positioned at the cross-sectional point of *maximum* energy *density*; the distance "d" from the lamp reflector as shown in the drawing.

## OH ENERGY DENSITY (FLUX) ACROSS THE OPTIMUM CROSS-SECTION

By using a small diameter optical-probe detector, it is possible to directly measure the variable energy density across the diameter of the maximum "focus" point of the QH lamp beam output. Refer to Figure 4B, which shows several empirical curves of the DDL model QH lamp output at various distances along the principal axis. The peak-energy density occurs in a "saddle" range of about 2.2" up to about 2.4", and within in this wide-tolerance limit, the energy envelope is about 36 millimeters in diameter (e.g., the diameter at which the circumference flux level is 10% of the peak, center value). Furthermore, although the theoretical curvature of the flux envelope is a trigonometric function, an accurate approximation results from assuming the output energy density is triangular in nature. This assumption, as shown in Figure No. 3, permits a straightforward analysis of how much of the energy envelope is captured for a given diameter FO pipe placed at this "optimum" cross-sectional point along the QH principal axis.

## ENERGY COUPLED INTO THE FOLP AS A FUNCTION OF PIPE RADIUS

Let $I_o$ represent the peak energy flux at the center axis of the QH output. The variable flux moving outward along a radial line from the center axis is expressed as...

$$i(r) = I_o(1 - r/R) \quad ; \quad 0 \leq r \leq R \qquad \text{Eq (1)}$$

... where $r$ is the radial distance from the center, and $R$ is the half-width (e.g., radius) across the assumed triangular profile of radiant energy from the QH lamp source. (36 millimeters for the Model DDL lamp). The **total energy** is then found by a simple integration - in polar coordinates - from the center axis to the outer limit, $R$, of the output, viz:

$$E_o = \int_0^R 2\pi \, r \, i(r) \, dr \quad ; \quad 0 \leq r \leq R \qquad \text{Eq (2)}$$

Substituting **Eq (1)** into **Eq (2)** and performing the integration over the specified limits ...

$$E = \frac{\pi R^2}{3} I_o \qquad \text{Eq (3)}$$

**Eq (3)** shows the total energy available for coupling into the FOLP - with the triangular output slope - is only $\frac{1}{3}$ of the $\pi R^2 I_o$ value that exists if the QH output flux density is a constant $I_o$ value across the radial distance $R$.

With respect to the above limit, the ratio of energy coupled into a FOLP with a pipe radius, $R_p$, *less than* the QH total-output envelope radius, $R$, can be derived ...

$$\varepsilon_p = 3\rho^2 - 2\rho^3 \quad ; \quad 0 \leq \rho \leq 1 \qquad \text{Eq (4)}$$

where $\rho = R_p/R$, the ratio of the respective radii.

As an example, if the radius $R_p$ of the FO pipe is 1/2 of the cross-sectional flux radius of the "real world simulated triangular-model" QH output, EQU 4 shows that 50% of the QH energy output is captured. In the preferred design, the FOLP radius is 7.5mm and the QH flux radius is 18mm (Figure No. 3). Therefore, the coupling efficiency is, from EQU No. 4, equal to 37.6%.

The *upper limit* of FO pipe radius can be increased to 18mm with a *theoretical* improvement in coupled energy to 100%, or about 2.7 times the present value ($1 \div 0.376 = 2.66$). The actual increase is lower, however, because the peripheral rays from the QH reflector have lower coupling efficiency into the FOLP than do the rays near the center axis.

The preferred embodiment has a large "built-in" safety factor for increasing the output in (optional) versions of future FOLP systems by merely increasing the glass fiber bundle-diameter of the FO pipe. An increased entry diameter of the FO pipe permits not only more energy to be coupled into the FO entrance, but commensurately delivers more energy to the sheet surface. This, in turn, implies the means to design yet higher CCD clock rate detectors for further increases in the SPH (sheets/hour) throughput of image-capture scanning systems.

## FO WEDGE OUTPUT DIMENSIONS TO ENTRANCE PIPE CONVERSION

The simple mathematical relationship between a given circular area and an equivalent (e.g., equal area) rectangular shape is used to determine the FO entrance pipe radius:

$$\pi R_p^2 = W(L_{fov} + 2 \bullet \Delta_{edge\text{-}effect}) \qquad \text{Eq (5)}$$

...where $R_p$ is the FO pipe radius, $W$ is the FO wedge width, $L_{fov}$ is the field-of-view length, and $\Delta_{edge\text{-}effect}$ is the small additional "delta" length to cover the FO edge-effect loss on either edge (left/right), or fall off in energy as the end of the FOV is approached.

Typically, the first design variable to consider in determining the FO entrance pipe radius (e.g., *diameter* from the manufacturing viewpoint) is the FOV (field-of-view) for the scanner. For a full-page size system, or A4 metric equivalent, this dimension is on the order of 8.5". Some small additional length must be included to compensate for the edge "falloff" effect; as will be shown later the addition of 0.5" to either end, or 0.5" + 8.5" + 0.5" for a total FOLP length of 9.5", is adequate.

The next step is to *estimate* the required **width** of the FO wedge output to meet the energy demands of the particular CCD array and asscicated clock rates. The optical energy required is *proportional* to the clock rate; that is, if the clock rate is doubled, twice as much energy is required as before, other factors being held constant. Adherence to the "proportionality" requirement is equivalent to maintaining a *constant* pixel or photosite exposure-time input-flux integration period product for each element of the array; analogous to F/stop, film-speed, and exposure setting relationships in conventional photography.

A *minimum* design limit on the wedge output width, independent of the above energy versus CCD sensitivity and clock rate tradeoffs, is set by the diameter of the individual glass fibers comprising the bundle in the FO pipe. Typical diameters are on the order of 55 to 60 microns. The minimum wedge width must be at least 10 times this dimension, or more than 0.020", to minimize the "granularity" or honeycomb effects of packing irregularities and occasional broken fibers or other non-uniformities in the manufactured product. For the preferred embodiment, a design width of 0.030", or 0.76mm was chosen.[1]

From EQU 5, the *calculated* radius $R_p$ of the input pipe is 7.65mm which is in good agreement with the manufactured radius of 7.5mm, or a 15mm diameter FO entry pipe.

## OUTPUT POWER-LOBE ANGLE FOR FIBER-OPTIC WEDGE

From Snell's law of refraction, it is known that the acceptance half-angle of an individual fiber optic (coated) glass strand is given by the following equation:

[1] The so-called "packing efficiency" determines the percentage of any area that the glass-fibers actually fill when grouped together in the bundle. For XY-grid packing, the theoretical limit is $\pi/4$, or 78.5%; for the "honeycomb pattern that the "real world" bundles tend to assume, the theoretical packing efficiency is $\pi/(2+\sqrt{3})$ = 84.2%. Typical efficiencies are usually between these limits, or even less if extreme care is not exercised in manufacturing to "pinch" the individual fibers together tightly in both the wedge-clamp and the input entry-pipe ends.

$$N.A. = \sin(\alpha)_m = \frac{\sqrt{n_f^2 - n_c^2}}{n_o} \qquad \text{Eq (6)}$$

where N.A. is defined as the Numerical Aperture, $\alpha(m)$ is the maximum acceptance angle (beyond which input rays cannot be transmitted through the clad fiber), $n_f$ is the refraction index for the fiber core, $n_c$ is the refraction index for the fiber cladding (jacket), and $n_o$ is the refraction index for air.

These refractive indices have typical values of 1.62, 1.52, and 1.0003, respectively. The N.A. for a glass fiber manufactured with the cited indices is 0.56, equivalent to a half-angle of 34.° Rays entering or leaving the end of a FO normal to the end-surface are coupled more efficiently than rays near the N.A. limit angle. Thus there is a "beam lobe" effect, much like the beam of a flashlight, wherein the center of the beam is the strongest, with the light first reducing gradually for small angles off-axis, then diminishing rapidly as the half-angle limit of the lobe energy is approached.

## FIBER-OPTIC OUTPUT ENERGY DISTRIBUTION

For a given FO wedge width, **W,** goniometer measurements may be used to determine the distribution or contour of the beam-energy or power output. The Inventor has proven that the power output may be represented accurately by a cosine-power function as follows:

$$P(\theta) = P_o COS^P(\theta) \qquad \text{Eq (7)}$$

... where the FO-lobe exponent, **p,** is typically between 15 and 20. $P_o$ is the principal ray level for 0° emission from the FOLP.

Refer to Figure 4B for a typical plot of an FO beam output[1]; the plot of beam energy output versus off-axis angle shows all of the energy is contained well within the N.A. half-angle of 34°.

## PAPER DIFFUSION COEFFICIENT

An ideal or perfectly diffuse reflecting surface produces a reflected energy distribution according to Lambert's Law, which may be mathematically defined as follows:

$$I_r = C_{pr}I_i COS(\theta) \qquad \text{Eq (8)}$$

In the EQU 8, $I_r$ is the reflected output optical energy, $C_{pr}$ is the paper surface reflection coefficient, $I_i$ is the incident energy, and $\Theta$ is the off-axis angle from the normal, or principal angle. Perfectly diffuse reflectors are rare in nature, and difficult to fabricate. Laboratory instrumentation devices incorporating barium sulfate disks (chalk-like substance) are probably the closest realization of Lambertian surfaces. Nearly all paper exhibits some specularity, and thus departs from the idealized Lambertian surface. Glossy, coated, or "varnished" papers show a pronounced "mirror like" reflection at dual angles of incidence and reflection, and are generally unsuitable, or at least less desirable as OMR/image capturing stock sources than paper surfaces behaving more in the Lambertian manner.

A "real world" paper source, with less than idealized Lambertian surface reflecting properties, is

[1] The measurement is made at right-angles to the FOV length of the FOLP; that is, at an arbitrarily selected "cross-sectional" point. The O-value angle with respect to the paper surface, or principal beam from the FOLP, is considered to be the angle $\phi$ -the effective wedge angle. The effective wedge angle in turn, is equal to the bias grind angle plus the "throw angle".

represented mathematically as follows:

$$I_r = C_{pr}I_i COS^d(\theta) \qquad \text{Eq (9)}$$

... where $d$ is the paper diffusion coefficient. This coefficient, though rather difficult to measure accurately because of paper grain influence and other anomalies, has been determined to be between 1.3 and 1.6 for papers used in OMR and image-capture scanning applications. A nominal value of 1.5 is used in FOLP analytical derivations, unless stated otherwise.

Noteworthy is that EQU 7 for the FOLP beam-output distribution and EQU 9 for the reflected signal from the paper are very similar, the respective energy patterns differing only by the effect of the value of the respective $p$ and $d$ exponents. As either of these exponents is increased to relatively large positive values, the beam energy and reflected paper signal approach the properties of a collimated source and a mirror reflector, respectively.

## PAPER DIFFUSION OF REFLECTED LIGHT

### FOLP LENGTH VERSUS FOV - THE EDGE EFFECT:

The length of the FOLP, as shown in EQU 5, must be slightly longer than the actual paper width (FOV) to be scanned. The cumulative incident energy from the FOLP striking any point on paper surface represents the contribution of many individual rays from the entire length of the FOLP wedge output.

For example, assume the FOLP is "hovered" symmetrically over the document. A point on the paper in the middle of the sheet (4.25" from either edge of standard 8.5" wide stock) will receive equal contributions from both the "left and right" halves of the FOLP length. The output of the FOLP glass fibers directly above this point will contribute the most energy to the sheet, with diminishing values from FOLP fibers further and further away from the normal, directly overhead fibers.

It follows that if the edge of either end of the FOLP were to be aligned with the corresponding edge of the paper, the reflected energy at this edge of the paper will be *only one- half* of the mid-sheet value, since one half of the otherwise present symmetrical left/right side FOLP contribution is "lost". By implication, for reflected energy near the edges of the document to be reasonably equal to values in the inner regions, the FOLP length *must extend beyond* the edge of the sheet.

This necessity is the so-called "edge effect", or the **2** $\Delta_{\text{edge-effect}}$ correction factor shown in EQU 5. The energy falloff at a point on the sheet as a function of distance from the end of the FOLP, or equivalently, the variable contribution of sheet energy at a point, with respect to a given fiber location in the FOLP, is mathematically described by a complex numeric integration function. The distance to add to the FOLP, however, is readily estimated once other FOLP design parameters are established; such as the effective wedge angle $\phi$, the radial sheet-to-wedge distance $R$, and the beam-power coefficient $p$. The basic approach is now illustrated:

Assume the FOLP design has proceeded to the point where $R$ is set at 0.5", $\phi$ is 40°, and $p$ is 18 (analytical determination of $R$ and $\phi$ will be described in a later section). The next step is to establish the *maximum permitted loss* in reflected energy (from arriving, incident FOLP energy) that can be tolerated at the edge of the sheet. As an example, set the relative loss at 1 %. If the extended FOLP length is set such that the incident rays at the very end contribute less than 1% of mid-sheet rays, the cumulative "loss" of all rays *beyond* this extended FOLP point will be negligible. Therefore, rather than attempting to evaluate the complex numeric integral referred to earlier (and requiring all the above variables as input), it is sufficient to establish the value of the extended FOLP distance, $\Delta_{\text{edge-effect}}$, for which the FOLP rays emanating at this end distance contribute at the stated 1% level. Thus, only two equations are required; EQU 7 given earlier that describes the FOLP output as a function of exit angle, and an expression for the further distance the exit rays must travel from the extended distance versus the radial wedge-to-sheet distance $R$. The extended distance is:

$$H = \sqrt{R^2 + x^2} \qquad \text{Eq (10)}$$

... where $x$ is the distance the FOLP edge is to be extended beyond the paper edge to compensate for the "fall off" effect.

The extended ray loses unit-energy (power density) in traveling further, with respect to the radial distance. The relative loss follows the inverse square-law propagation equation. Therefore, the resulting equation representing the relative energy of an extended-distance FOLP ray arriving at the edge of the sheet versus the incident energy of a radial ray is as follows:

$$P_x(\theta) = P_o COS^P(\theta) \bullet (1/H)^2 \div (1/R)^2 \qquad \text{Eq (11)}$$

... substituting the value for $H$ from EQU 10 into EQU 11, and re-arranging terms:

$$P_x(\theta) = P_o COS^P(\theta) \bullet \frac{R^2}{R^2 + x^2} \qquad \text{Eq (12)}$$

... but since the FOLP output lobe angle $\Theta$ may be expressed as:

$$COS(\theta) = \frac{R}{\sqrt{x^2 + R^2}} \qquad \text{Eq (13)}$$

... this value for $\Theta$ may be substituted into EQU 12, resulting in the final expression for the magnitude of the arriving (incident) ray from a FOLP fiber an extended distance $x$ from the edge of the sheet:

$$P_x(\theta) = P_o \bullet \frac{R^{2+p}}{(x^2 + R^2)^{p/2+1}} \qquad \text{Eq (14)}$$

... setting the *ratio* of the extended distance output $P_x(\Theta)$ to the radial output $P_o$ equal to E, the specified edge-loss ratio, the solution for $x$ is obtained:

$$x = R \sqrt{\frac{1 - E^{\frac{2}{p+2}}}{E^{\frac{2}{p+2}}}} \qquad \text{Eq (15)}$$

Using the earlier stated value of 1% for E, the value for $x$ from EQU 15 is 0.76$R$, where $R$ is the radial distance of the FOLP wedge to the sheet. For an $R\ COS(\phi)$ value of 0.5" ($R = 0.65$"; $\phi = 40°$), the value for $x$; that is, the now determined compensation value $\Delta_{\text{edge-effect}}$, is 0.248" - to be added to *both* ends of the FOLP FOV length of 8.5" for a full-width page. Thus, the total FOLP length becomes 8.997". The design length of 9.5" in the preferred embodiment, accordingly, includes an appropriate edge-effect safety factor.

Several important theoretical conclusions are reached from studying the characteristics of EQU 15:

- The extended distance (edge compensation) for any arbitrary preset value of $E$ is directly proportional to the radial distance $R$ from the FOLP wedge output to the sheet surface. In other words, for a given value of $E$, the total length of the FOLP must be *increased* if $R$ is increased.

- It is "theoretically impossible" to design a FOLP source for document illumination where there will be *no fall off loss* at the edge of the paper; the FOLP would have to be "*infinitely long*" to achieve a lossless result. In practice, however, extension distances only several times larger than $R$ will produce virtually lossless systems. Even extremely small values of $E$ produce rather small values under the radical sign (e.g., "multipliers" to $R$).
- If the FOLP beam steradian cone output is made more narrow (e.g., higher value of $p$) the extension distance is reduced. In the extreme case of a collimated output, no additional distance is required since the value under the radical in EQU 15 becomes zero.

## SOURCE GEOMETRY VERSUS SOURCE-TO-SHEET INCIDENT ENERGY:

It is a well known fact from classical optics that the incident energy received from an idealized remote "point source" of light is inversely proportional to the square of the separation distance:

$$p_i(r) = \frac{I_o}{r^2} \qquad \textbf{Eq (16)}$$

For emission from a FOLP (linear) light source with a radial distance $R$ from the wedge output to the sheet surface, the ray travel or separation distance from a given fiber output at point $x$ relative to the normal (radial) distance $R$ is given by:

$$r = \sqrt{x^2 + R^2} \;\; ; \quad COS(\theta) = \frac{R}{\sqrt{x^2 + R^2}} \;\; ; \quad \frac{1}{r} = \frac{COS(\theta)}{R} \;\; ; \quad \frac{1}{r^2} = \frac{COS^2(\theta)}{R^2} \qquad \textbf{Eq 17}$$

The relative emission $I_o$ from a given location $x$ along the FOLP that strikes the sheet is given from EQU 7. Replacing $I_o$ in EQU 16 with $P_o$ from EQU 7, and using the relationships of EQU (set) 17, a new expression for the point energy at any point on the sheet is as follows:

$$p_i(r) = \frac{P_o COS^p(\theta) \cdot COS^2(\theta)}{R^2} \qquad \textbf{Eq (18)}$$

Furthermore, the optical *law of cosines* states that the energy-transfer efficiency of incident radiation is proportional to the cosine of the incidence angle (analogy: it is colder in winter in the Northern Hemisphere, even though the sun is *closer* to Earth - but the angle the sun's rays strike the Earth's surface is larger, and the cosine of the new angle has a lower value. The cosine effect is obviously much greater than the effect of the reduced distance effect in the inverse square law of EQU 16): Including the cosine-law into EQU 18 results in:

$$p_{ii}(r) = \frac{P_o COS^p(\theta) \cdot COS^2(\theta) \cdot COS(\theta)}{R^2} \qquad \textbf{Eq (19)}$$

The above expression for the point (incident) energy at a given location on the sheet *does not* take into account the surface properties of the paper, or in any way determine what portion of this incident energy is reflected for detection by the CCD-array. For purposes of simplification - without harming the general validity of the derivation - assume that the FOLP is mounted directly over the sheet surface; that is, the *radial* rays from the individual fibers are normal to the sheet ($\phi$ = 0°). This being the case, the reflected energy angle for any given incident ray is the same as the respective incoming ray ($\Theta_r$ = $\Theta_i$), and EQU 9 may be used to define the portion of the incoming energy for each point on the FOLP that will be diffuse-reflected. Combining EQU 18 with EQU 9 results in an expression for the *reflected* energy from an arbitrary point on the sheet for each incident ray of energy arriving from another arbitrary point along the wedge output of the FOLP:

$$p_r(r) = \frac{C_{pr}P_o COS^P(\theta) \cdot COS^2(\theta) \cdot COS(\theta) \cdot COS^d(\theta)}{R^2} \qquad \text{Eq (20)}$$

... rearranging terms, normalizing (to eliminate absolute-magnitude coefficients) and simplifying:

$$p_m(r) = \frac{COS^{p+d+3}(\theta)}{R^2} \qquad \text{Eq (21)}$$

Thus a single ray of light emanating from an arbitrary point along the FOLP, striking the sheet surface at another arbitrary point (along the X or 8.5" width axis of the sheet), and reflecting from the surface, arrives at the CCD-array (through the CCD objective optics/lens) with a normalized point-source function $p_{rn}(r)$, as given in EQU 21.

Several important theoretical conclusions are drawn from studying the characteristics of EQU 21:

- The basic inverse-square law of point-source propagation is evident, through the presence of $1/R^2$ in the denominator of the expression, and is also "hidden" in the $COS(\Theta)$ factor for points $x$ that are removed from an arbitrary (normal) reference point **R**.
- For a perfectly diffuse reflecting paper surface (idealized, **d** = 1) EQU 21 reduces to the classic "cosine to the 4th power" law that governs peripheral sensitivity fall-off in conventional photographic optics, except for the presence of the **p** exponent, which goes to zero for non-isotropic sources.
- Although stated without proof, it can be shown that if the wedge angle $\phi$ is not zero - although assumed so in the above derivation for simplicity - the *normalized* expression for the point-reflection in EQU 21 is not affected. Therefore, the results and analytical usage of EQU 21 are acceptable for "real world" FOLP system designs where the wedge angle $\phi$ has finite values.

To determine the *total* contribution of optical output along the entire FOLP length for a given sheet-point reflected ray, it is necessary to integrate the point-reflected ray, as given by EQU 21, for each point on the wedge. The integration limits are the two ends of the FOLP length. The co-ordinate reference system is chosen at the X-axis center of the 8.5" sheet width. Therefore, the magnitude-symmetrical integration limits are -**X** and +**X** respectively, where 2X equals the physical length of the FOLP (typically equal to the FOV plus the edge-effect compensation derived in EQU 15).

Before the integration equation can be defined, however, EQU 21 must be restated (for interpretation and manipulation ease) with $x$ being the running variable, rather than $\Theta$. Integration will thus be executed along the FOLP X-axis Cartesian co-ordinates, as opposed to the polar co-ordinate based $COS(\Theta)$ variable.

The variable-transformation equation is:

$$COS(\theta) = \frac{R}{\sqrt{x^2 + R^2}} \qquad \text{Eq (22)}$$

Substituting variables and simplifying, EQU 21 can be restated in X-axis co-ordinates as follows:

$$p_{xn}(x) = R^{2m} \cdot \frac{1}{(x^2 + R^2)^{m+1}} \qquad \text{Eq (23)}$$

As a mathematical "checkpoint", note that when $x$ equals zero (that is, when the emanating ray is at the radial point $R$) the reflected point-energy expression in EQU 23 reduces simply to $1/R^2$, the classic point-source energy propagation law cited in EQU 16. This is the expected result.

Finally, the integral equation for the *total energy* reflected to the objective lens of the CCD array, representing the contribution of the entire length of the FOLP, can now be stated:

$$E_{xn}(x) = R^{2m} \int_{-X}^{+X} \frac{dx}{(x^2 + R^2)^{m+1}} \qquad \text{Eq (24)}$$

... where

$$m = (p + d + 1)/2.$$

EQU 15 demonstrated that, as a practical design matter, the only rays contributing to the reflected energy at a given point on the sheet are those rays emanating from short ± x-distances from an overhead radial $R$ reference point. (several $R$-multiples separation distance along the X-axis, at most).

In typical FOLP designs, the length of the wedge is many times the radial wedge-to-sheet separation distance $R$. Thus, *without any loss of generality*, the -X to +X limits in the finite integral of EQU 24 may be set to $-\infty$ to $+\infty$, respectively. To emphasize this point, recall that the integration error resulting from this assumption will manifest itself only at points relatively near the edges of the sheet - but the edge-effect error, and the amount of required compensation in FOLP length, has already been covered by EQU 15.

Thus the finite integral of EQU 24 may be re-written as an infinite-limit integral, as follows:

$$E_{xn}(x) = R^{2m} \int_{-\infty}^{+\infty} \frac{dx}{(x^2 + R^2)^{m+1}} = KR^{2(m-1)} \int_{-\infty}^{+\infty} \frac{dx}{(x^2 + R^2)^{m}} \qquad \text{Eq (25)}$$

... where

$$K = (2m-1)/2m$$

In making a simple substitution of the exponent (treated as a dummy parameter) from $m$ to $m'$ in the "solution" to the infinite integral of EQU 25, where $m' = m + 1$, the result is an iteration of the original "left side" of the equation; that is, the original infinite integral. Using the iterative tools of mathematical induction, it may be proven that the numeric solution to the reflected-energy integral, regardless of the initial value of the exponent $m$, takes the following form:

$$E_{xn}(x) = K \cdot \frac{R^{2m}}{R^{2m+1}} = K \cdot \frac{1}{R} \qquad \text{Eq (26)}$$

EQU 26 shows an extremely important fact - not intuitively obvious - in regard to the design of FOLP light sources for document illumination during scanning; the absolute energy level received and detected by the CCD-array is *inversely proportional to R,* the wedge radial distance from the sheet. Furthermore, this simple relationship permits an easy derivation of the CCD-signal sensitivity to variations in the $R$ value, as might be caused by sheet flutter during passage through the scan-axis head gap or throat. This sensitivity, or rate of change of CCD-signal, may be found by taking the first derivative of $E_{xn}(x)$ as follows:

$$\frac{d}{dR} E_{xn}(R) = - \frac{K}{R^2} \qquad \text{Eq (27)}$$

Doubling the value of $R$ for example, will reduce the sheet flutter sensitivity by a factor of four.

## DOCUMENT REFLECTION EFFICIENCY OF FOLP WEDGE-OUTPUT

Not all of the optical output energy emanating from the FOLP strikes the CCD-array scanning-axis of the sheet. First of all, the Y-axis cross-section of the impinging beam-lobe pattern is wider than the vertical height of the sampled pixel. The Y-axis pixel dimension is equal to the reciprocal of the vertical-axis resolution. For 120 pixels/inch vertical resolution, the active vertical scanning width on any given X-axis horizontal sweep (e.g., across a 8.5" FOV) is 1/120", or 0.0083", whereas the FOLP beam width is typically several times this value. For a beam-lobe with the power exponent $p$ equal to **18,** a solution to EQU 7 with $P$ set equal to the "half-power" of $0.5P_o$ results in a $\Theta$ of **15.8°**, equivalent to a cross-sectional beam (full) width on the sheet surface of **0.28"** for a typical FOLP design value of 0.5" for $R$ (radial wedge-to-sheet distance)[1]. Since 0.28" is several times larger than the Y-axis scan width of 0.0083 - the former value representing beam-energy only to the "half-power" point - it follows that a relatively small amount of the FOLP wedge output energy is "*used*" by the sheet for reflection to the CCD detector[2].

Secondly, the reflectance of OMR or image-capture paper stock is not equal to 100%. Typical values for the reflectance coefficient, or "brightness", range from 0.7 to 0.92. (certain stocks with pastel-colored backgrounds can be lower than 0.7).

Thirdly, the amount of reflected FOLP beam energy, for a given paper reflectance coefficient, is affected by the FOLP wedge-angle to the paper surface. Since 45° has historically been the "angle of choice" - but not necessarily the *optimum* angle, as taught by this disclosure - this value will be used as a reference to show the relative *gain* or *loss* of reflected energy when other angles are used in a FOLP design:

$$V(\phi) = V_{45°} \frac{COS^d(\phi)}{COS^d(45°)} \qquad \text{Eq (28)}$$

Table No. 1 illustrates that the reflection efficiency is greater for any value of **d** when the wedge angle $\Phi$ is less than 45°, and lower when $\Phi$ is greater than 45°. The design goal for a FOLP system is to set the wedge angle to the lowest possible value - to optimize the optical efficiency and keep the input power to the QH lamps at a minimum - while considering *three* other key design parameters:

- The specularity of pencil marks and other indicia (OCR, writing, pre-printed data) becomes worse as

---

[1] The above analysis is based upon a FOLP wedge mounting angle of 0° for $\phi$. In practical designs $\phi$ will be in the 30° to 50° range. The cross-sectional width of the beam output projected to the sheet is even larger than the above example value of 0.28".

[2] This apparent "waste" of energy is a consequence of the beam distribution pattern of the individual fibre-optic strands together with other design considerations that require $R$ to be in the 0.25 to 1.0" range. Therefore, the FOLP beam-width will always be significantly larger than the relatively narrow Y-axis scanning width for ordinary values of DPI resolution. As a practical matter, the "extra width" of the FOLP beam output is essential as a "safety factor" against FOLP-manufacturing and CCD-alignment tolerances.

the wedge angle is reduced (that is, the white-to-mark signal contrast is reduced). The variation of this effect with respect to a given type of paper-stock and marking instrument (ink) combination must be empirically measured with appropriate laboratory instrumentation, as no reasonably simple mathematical derivation is possible to express the relationship.

- The FOLP optical depth-of-field varies as a function of the wedge angle, becoming less as the angle is reduced.
- FOLP design packaging and mechanical construction details must be taken into consideration. There are practical upper and lower limits on the wedge angle range once other parameters are specified (such as radial *R,* the Y-distance FOLP pair separation, and the Z-distance of the assembly above the document surface).

## PENCIL MARK SPECULARITY

In most OMR scanning operations, the user can exercise some control over the selection of paper stocks used for the forms, and thereby assure that the OMR document specularity will pose no difficulties in the CCD-array detection process. There is considerably less opportunity to assure only "well behaved" marking instruments will be used by the respondent, instructions notwithstanding. The worst offender is a shiny graphite-laden soft lead pencil.

Tests have been conducted of specularity measurements for the "blackest, darkest, most heavily embossed" large area mark made with soft-lead pencils to determine "worst-case" specularity for the preferred embodiment of the new FOLP light source system. For reasons not yet fully understood, the specularity increases as the *absolute optical energy level* on the sheet surface is increased[1]. The expected result of increased specularity with lower values for the wedge angle $\Phi$ is observed, however.

The specularity data show that while the mark/paper ratio continues to (favorably) decrease with increasing wedge angle, the result becomes asymptotic at higher values of incoming energy from the QH lamps. For the preferred embodiment wedge angle of 40°, the two or three percent specular increase "penalty" (over a 45° or greater wedge angle) is more than offset by the 10% to 15% improvement in paper reflection efficiency (Table No. 1 data).

## FOLP LIGHT SOURCE DEPTH-OF-FIELD

The conventional definition of *depth of field* refers to the Z-axis distance, centered about the correctly focussed FOV plane, in which an objective lens delivers a sharply defined image (e.g.,focussed) to the focal plane (a film surface, a CCD detector photosite, etc.). Scanners using CCD-arrays and FOLP light sources must take into account this "law of optics", but a more critical parameter to deal with in a FOLP design is the depth-of-field (DOF) of the light source. In this case the DOF means the ± Z-axis distance by which the document surface may move (flutter, for example) during transit through the scanning axis without generating a CCD-detector voltage output variation greater than a pre-defined (arbitrary) design limit.

The maximum amount of "up and down" movement (Z-axis) is often controlled by one or more glass plates placed in the optical path of the scanning axis to form a "gap" through which the sheet must pass. In the preferred embodiment, the gap is set for 0.050". Since the typical caliper (thickness) of OMR paper stock is about 0.004", the sheet is free to flutter or bounce up and down during feeding by an amount of 0.050" minus 0.004", or 0.046". The ratio of the change in CCD output signal to the absolute (center) value over this net gap distance is referred to as the FOLP depth-of-field output-signal error for the corresponding DOF dimension.

The design goal is to control the DOF to a reasonable value without a severe compromise on the other critical design parameters, such as the wedge angle, the radial distance, and the hard-gap separation dimension. Paper itself produces a certain amount of random, peak-to-peak "noise" due to macroscopic variations in surface properties which in turn changes the reflectance value. Therefore, a desirable goal is to contain the DOF induced error signal *within* the paper-noise range. Paper noise, although varying somewhat between the VIS and NIR spectral modes, has a typical value of ± 3 to 5% rms. Therefore, the FOLP system must be designed so that, for a scan-axis gap of **G** (0.050" in the preferred design), the CCD signal error generated as the sheet moves or flutters in this range is less than $N_p$, the paper noise.

A key feature of the FOLP system - *and* resulting specification for the preferred embodiment - is the

[1] Specularity is also a function of spectral bandwidth. The tabular data shown above is for the VIS spectrum, as specularity is generally higher in the visual region than the NIR mode.

development of an accurate mathematical "model" to study the various "design trade offs" to achieve the desired DOF, while not unduly compromising other critical parameters, such as optical efficiency, sensitivity, specular-limit control, and package size. Based upon the NCR/R/D results summarized in EQU's 7,9, and 26, the *normalized* reflected detector-output signal (optical energy with respect to detector responsivity) may be mathematically derived for a "free air" gap FOLP system.

The independent variable in the solution is the z-axis distance of separation from the sheet surface to the (parallel) XY-plane of the FOLP, with the dependent variables $R$, $\Phi$, $p$ and $d$, which have been defined previously.

$$V_n(z) \;=\; \frac{SIN(\alpha)}{SIN(\phi)} \;\bullet\; \left(\frac{COS(\alpha)}{COS(\phi)}\right)^d \;\bullet\; COS^p(\alpha - \phi) \quad ; \; where \; TAN(\alpha) \;=\; \frac{RSIN(\phi)}{z}$$

$$(29)$$

A $z$ of 0 implies the sheet surface is "tight against" the XY-plane of the FOLP exit wedge; hence $V_n(z)$ has a $0$ output value, as it also does for a $z$ of $\infty$, where the FOLP is infinitely far from the sheet surface ($1/R$ goes to $0$). As $z$ runs from $0$ to $\infty$, $V_n(z)$ grows in value, reaches a peak output, then gradually diminishes back to zero as the sheet-to-wedge focal plane distance approaches large values. A "sweep" of $z$ over this range is equivalent to the sheet-to-wedge angle $\alpha$ going from $\pi/2$ to $0$. An important "discovery" of the FOLP modeling equation is that the peek value for $V_n(z)$ *does not* necessarily occur at $z = R\ COS(\Phi)$, which is the intuitive answer.

### VALVE OF Z FOR PEAK REFLECTED-SIGNAL

As discussed earlier $V_n(z)$ reaches a peak value in the *region* of $Z_o = R\ COS(\Phi)$ (the z– axis geometrically projected distance of the radial $R$), but the exact location of the peak (theoretically) can be found only by taking the derivative of EQU 29 and solving the new equation for the value of $z$ where $V'_n(z)$ equals $0$. Unfortunately, because EQU 29 is transcendental in nature, it is impossible to arrive at an analytical expression for the derivative.

Therefore, the procedure for FOLP design optimization purposes is to plot the value of $V_n(z)$ versus $z$ in the region of $R\ COS(\Phi)$. By examining the graph in this region - or the $V_n(z)$ values that make up the graph - determine the approximate numerical value of z where the output curve is horizontally flat (e.g., where the first derivative is $0$). A variety of microcomputer-based math software packages are available to minimize the labor of this task. Figures 15A - 15N and 15P show the results of a number of "computer runs" of $V_n(z)$ for various values of $R$ and $\Phi$.

Furthermore, it is a simple matter to set an arbitrary drop-off threshold from the peak value, and determine what values of $z_1$ and $z_2$ are required on the DOF (depth-of-field) limits to force the output to be constrained within the threshold. For example, if a 5% maximum degradation from the peak level is desired for an $R\ COS(\Phi)$ of 0.5" and $\Phi$ of 40°, the limits on $z_1$, and $z_2$, are found to he approximately 0.42" and 0.57". (These values are *not quite* symmetrical about $R\ COS(\Phi)$). The threshold in a well designed system will typically be set as low as 1 to 2% since values in this range are realizable with the design techniques taught by this disussion.

The peak reflected signal occurs for z-axis values slightly less than $R\ COS(\Phi)$ when $\Phi$ is less than about 40°. The peak gradually moves to z values greater than $Z_o$ when $\Phi$ is increased to values greater than 40° to 45°. The specific "migrations" are complex in nature, being a function of the paper and FO-lobe coefficients $p$ and $d$, the radial distance $R$, QH power level and spectral bandwidth, and possibly other factors. The only safe design procedure is to determine the value of these parameters: set the $Z_o'$ *(center) design value* for the $z$ value which produces the 0-derivative point on the plot, or obtainable from inspecting the EQU 29 computer run of tabular values for $V_n(z)$ versus $z$. This methodology results in a FOLP light source system with the best possible DOF for the given set of parameters.

### MECHANICAL DESIGN AND PACKAGING CONSIDERATIONS

Beyond selecting the values of $R$ and $\Phi$ (and the overall width and length of the FOLP), based upon the optical rules and trade offs described earlier, there are several important design or packaging considerations that improve the practicality and application usefulness of the FOLP system. Significant features are highlighted below, with a more detailed discussion, analysis, equations, and diagrams presented for each point at the end of this introductory section:

### ● Use of a pair of FOLPs rather than only one

While a single FOLP can provide the energy level required for lower speed scanners, a major reduction to z-axis signal noise results from use of a pair of FOLPs, since the effect of wrinkles and folds in the paper is minimized. The available optical energy delivered to the sheet is also doubled; this is important in systems with very high CCD-clock rates where the photosite exposure time is minimal.

### ● Incorporation of bias grind angle

This refers to the manner in which the individual fibers are aligned within the FOLP housing; it is believed that the so-called "bias grind" is the first application in document scan light sources, although a similar technique has been used in the construction of microscope FO-illumination rings. The key advantage of bias-grind over prior art systems is a significant reduction in size of the FOLP assembly.

### ● Z-axis correction for thick glass-plate scan-gap

Although slower speed scanners sometimes have only an "air gap" between the sheet and the CCD-detector, high-speed scanners require one or more protective *thick-plates* of glass be inserted between the sheet surface and the CCD-detector scanning axis. The glass plate serves to define the maximum z-axis distance in which the sheet can flutter, and thereby assures that the DOF (depth-of-field) design goals are met. The plate must be thicker than is found in inexpensive, low speed, manually fed scanners. At high speeds it is otherwise possible for paper clips, staples, or other foreign objects attached to the sheet to crack or break a more fragile thin glass plate. The thick plate, however, introduces certain diffraction shifts in the optical scanning path which must be appropriately corrected or compensated for in an optimum FOLP design.

### ● Dual FRONT side, BACK side scanning of documents

Low speed, inexpensive scanners usually scan only one side or surface of the document on each pass; extracting data from both sides of the document requires an additional pass through the feeding mechanism. Some high-speed scanners, conversely, scan *both sides* of the sheet on a single pass through the paper handler.

Two independent FOLP light sources and CCD-arrays are incorporated into the dual-side feeders. These optical assemblies are positioned on opposite sides of the paper feed path. That is, one assembly is for scanning the top or front surface of the sheet, and the second one for scanning the bottom or rear surface. The two assemblies *must* be separated slightly "upstream and downstream" to avoid "blinding" or interfering with each other in the simultaneous but independent data detection process.

The goal is to keep the y-axis separation distance as small as possible, in the interest of a compact feeding path mechanism, but an even more important goal is to reduce the *combined* front/rear surface scan-transit time. This *Discussion* teaches the design techniques to produce the shortest possible distance without causing front/rear optical interference.

## USE OF PAIRED FOLP ASSEMBLIES FOR EACH SCANNED SURFACE

While the preceding emphasis has been on teaching the underlying theory, concepts, and application tools for using a FOLP as a light source for document scanners, as a practical matter it is extremely important that *two* FOLPs be incorporated into an assembly as the preferred embodiment in a high-speed scanner. Otherwise, the use of only a *single* FOLP per source results in an unacceptable sensitivity to paper wrinkles, folds, and "up and down" motion-fluttering as the sheet passes through the scanning gap. This sensitivity manifests itself as false or "pseudo marks" in the CCD detected data stream where such artifacts cause an abrupt drop of reflected signal due to momentary loss of FOLP reflected energy.

There are scanning products marketed today that use only a single "line type" light source. These manually fed (or stationary bed) units are normally restricted to very low sheet speeds where the document surface is forced in intimate contact with the feed bed (very narrow scan gap distance), and/or secondly, where the required grayscale quality of the CCD output is only two levels (black/white), or a limited number of gray scales. Some FOLP-based products, on the other hand, scan thousands of sheets/hour, and generate up to 256 levels of gray. Obviously, signal-contrast artifacts must be kept very small ($\approx$ 1/256) to achieve this quality level.

The fundamental problem associated with a single FOLP as the illumination source - since it must necessarily be mounted at some wedge angle $\phi$ for reasons described earlier - is that when the sheet surface "tilts" during scanning (due to flutter, wrinkles, and so on) the relative angle between the FOLP incident energy **Po** and the reflected-energy z-axis **changes.** Thus, as defined by EQU 9, the paper "reflected efficiency" is affected which varies the amount of energy reflected to the CCD-detector. Whether the signal at any given moment in the scanning sweep is generated only by white paper background *or* a data mark ... the result is the same - there *is* a change in signal level. The variance can be *either* positive or negative (*more* reflected energy or *less*), depending upon whether the angular "tilt" (CW or CCW) adds to or subtracts from the initial relative angle between FOLP incident energy and paper-reflected energy (e.g., the design-specified angle $\phi$). A normalized version of EQU 9, taking into account the incident energy angle $\phi$, the angular coupling efficiency ("law of cosines") and paper "tilt" angular variations $\pm \rho$ can be derived as follows:

$$S_n(\rho) = \frac{COS(\phi\pm\rho)\cdot COS^d(\phi\pm\rho)}{COS(\phi)\cdot COS^d(\phi)} = \frac{COS^{d+1}(\phi\pm\rho)}{COS^{d+1}(\phi)} \qquad \text{Eq (30)}$$

EQU 30 shows that $S_n(\rho)$ *decreases* from the *normalized* value of 1 when $\rho$ is *increased* and vice-versa. For example, with a design wedge angle of $\phi$ **= 40°** (the preferred value), a sheet "tilt" of only $\pm$ 10° for $\rho$ causes $S_n(\rho)$ to swing from 82% to 118% of reference level, clearly an unacceptable result for all but the most unsophisticated scanner designs.

Noting that the "up and down" signal changes appear equal in magnitude ($\pm$ 18% in this example) implies that a *pair* of FOLPs would serve to "balance" or null out the variations. That is, as the output signal contribution from one FOLP unit *decreases* - due to a positive-sign $\rho$ - the other FOLP reflected-energy contribution from the negative-sign $\rho$ should *increase*. This condition occurs to a remarkable extent, virtually eliminating (combined) signal variations due to flutter when two FOLPs are used cooperatively in an assembly. The expression for the normalized signal output when incorporating a paired-FOLP assembly is as follows:

$$S_{2n}(\rho) = \frac{COS^{d+1}(\phi+\rho)+COS^{d+1}(\phi-\rho)}{2\,COS^{d+1}(\phi)} \qquad \text{Eq (31)}$$

Table No. 3 shows the virtually "flat" reflected output signal when *paired* FOLPs are used as the light source assembly. For single FOLP systems, even minor "tilt" angles cause appreciable flutter noise. For example, a $\rho$ of only 2.5° - the *minimum* flutter level[1] in a system with a 0.050" scan-gap (z-axis) that is 1" long in the feed-direction (y-axis) - generates about $\pm$ 9% noise level. The noise levels for single FOLP systems increase rapidly for higher values of $\rho$, but even an 8 or 9% level is unacceptable in any but the most primitive scanning systems. The data in Table No. 3 were calculated on the basis of the paper diffusion coefficient **d** = 1.5. For higher values of **d** (paper stock with more specularity) the single FOLP system analysis is even more discouraging.

A familiar analogy is looking at an image of a bright object - such as the sun - that is reflected off of a shiny surface, such as a mirror. When the viewing angle changes only slightly from the maximum-glare condition of "equal angle of incidence and reflection", the brightness of the reflected image is quickly diminished. Thus paper stock with higher specular values will be even more sensitive to angular changes of incident to reflected energy than normal OMR stock.

[1] TAN($\rho$) =(0.050")/1.0"; $\rho$ = 2.57° for a sheet caliper of 0.0005"

Noise caused by wrinkles, folds, and flutter - as a result of the above reflection-efficiency analysis - rarely occurs in isolation, but rather is usually combined by variations induced by depth-of-field changes. That is, if the sheet flutters during scanning (causing angular changes in the reflected signal path), it is also true that the sheet is moving "up and down" in the sheet-gap which causes the output signal to vary according to EQU 29. Accordingly, actual noise output levels in "real world" systems are a complex combination of many contributory sources.

Also, as can be appreciated from an inspection of EQU 31, FOLP manufacturing tolerances in the bias-grind step and other construction, alignment, and scanner-mounting tolerances induce some error in the actual unit-to-unit value of the wedge angle $\phi$, the radial distance $R$, and other critical design parameters[2]. Consequently, the "real world" stability and performance of a paired or dual FOLP system, while generally excellent - as taught by this *DISCLOSURE* - is not always as good as the modeling EQU 31 suggests.

## INCORPORATION OF BIAS-GRIND ANGLE

In most applications of fiber-optics where a "bundle" of many individual glass FO strands are packed tightly into a common geometry, such as the circular input "nipple" (coupled to the QH light source) of the FOLP, or the rectangular L*W area of the output wedge, the fiber-optic surface of the bound fibers are ground and polished orthogonally (right angles) to the exit/entrance surface. The light entering or exiting from such a surface follows the energy distribution described by the beam-lobe power EQU 7 (for each fiber), and the collective output is a function of the entrance/exit surface area and geometry.

Prior art FOLPs commonly used as light sources for document scanning systems were manufactured in this conventional manner. When the surface is inclined at an angle, however, Snell's law of refraction "throws" the principal beam energy by an amount related to the bias grind. This has the advantage of permitting the design of a much smaller housing for the FOLP, while retaining the same number of individual fibers, and thereby output power. The greatly reduced housing size, in turn, permits the dual-side scanner configurations (front/rear page simultaneous scan on one pass) to have the front and rear FOLP assemblies spaced closer together in the y-axis feed direction - which finally, leads to higher sheets/hour throughput rates, other design parameters being equal.

The derivation for the "throw" angle, $\delta$, can be given once the bias-grind angle, $\beta$, and the index of refraction, $n_f$, for the core material of the glass fiber are specified. The equation is:

$$\delta = SIN^{-1}\left(n_f \frac{SIN(\beta)}{N_o}\right) - \beta \qquad \qquad \text{Eq (32)}$$

Due to "edge-effects", certain anomalies near the boundaries of a small, finite surface, and other yet poorly understood influences, the *measured* "throw" angle of currently manufactured FOLPs is slightly less than that predicted by strict adherence to the Snell's law derivation. The Inventor has found experimentally that the accuracy of the EQU 30 is improved by modifying the above expression with a *COS($\beta$)* multiplier, as follows:

$$\delta = COS^2(\beta) \cdot [SIN^{-1}\left(n_f \frac{SIN(\beta)}{N_o}\right) - \beta] \qquad \qquad \text{Eq (33)}$$

Several different bias-angle FOLPs were constructed with $n_f$ equal to 1.62 and the "throw angle" $\delta$

[2] The above analysis for a dual FOLP design assumes that Quartz Halogen lamp energy into and emanating from each FOLP of pair is equal. To the extent that this "optical power balance" is not achieved in practice, sheet flutter will cause greater noise variations than shown in the above Table. This is because one or the other of the FOLP pair must "carry more of the optical load", producing an unequal contribution to the final output signal.

measured. The experimental results versus the predictions of the above equations are given in Table 4. This Table shows that, while further refinements in the derivation are possible, the results of EQU 31 are sufficiently accurate to be used as a modeling tool for the design of optimum FOLP systems.

## Z-AXIS CORRECTION FOR THICK GLASS-PLATE SCAN-GAP

In the preferred embodiment of the FOLP light source system, the sheet is fed between *two* 0.1" thick glass plates (optically flat and spectrally clear), positioned on opposite sides of the sheet. The two plates span the 9.5" width of the FOLPs and thus cover the 8.5" width of the sheet as it passes the front and rear (sheet sides) scanning axes. The z-axis separation distance, or *scan-axis sheet gap* is set to 0.050", thereby permitting wrinkled, folded sheets, or sheets with Scotch tape, labels (or even an occasional paper clip or staple) to pass safely through without causing a feed jam. The two strips of gap glass are offset slightly in the y-axis (feed) direction to align with the corresponding offset in the FOLP assemblies. The offset is required to avoid front-side/rear-side optical interference.

Accordingly, the beam-lobe output energy from the FOLP wedge must pass through the glass gap-plate before striking the respective sheet surface.[1] The refractive bending of the beam of energy, centered about the principal ray $P_o$, increases as the FOLP wedge-angle $\phi$ is increased. The amount of refraction is directly proportional to the thickness of the glass gap plate $G$. Using these parameters, and the refractive index $N_g$ for the particular type of glass chosen, the z-axis magnitude of the refractive shift can be calculated:

$$\zeta_{\mathit{s}} = G \left( 1 - \frac{COS(\phi)}{\sqrt{N_{\mathit{s}}^2 - SIN^2(\phi)}} \right) \qquad \text{Eq (34)}$$

For the preferred embodiment of the FOLP system, $\phi$ is equal to 40°, $G$ = 0.100", and the crown glass used for the gap-plate has a refractive index of $N_g \approx 1.5$; thus the refractive offset, by which the FOLP $Z_{optimum}$ mounting distance must be increased, is **0.0435"**. The optimum "free air" gap Z (peak signal) distance in the preferred embodiment is 0.500"; therefore, the refractive adjustment due to the glass gap-plate is about 8.7% of this value. That is, the refractive shift is *too large* to be "ignored" in an optimized "real world" design. If, on the other hand, the correction *were* neglected, the result would be a *greatly reduced* depth-of-field, as the $Z$ mounting distance of the FOLP assembly would be at the "wrong point" on the output versus distance curve as derived in EQU 29. (not sufficiently close to the "flat portion" of the peak $Z_o$ region).

Finally, EQU 32 must be modified slightly to take into account the finite gap thickness g (0.050"), and the caliper of the paper. The basic concept is to have the $Z_{optimum}$ distance referenced from the *exact statistical center* of the respective sheet surface. The sheet will "flutter and wave" as it passes through the sheet gap during the scanning process, but the limit of this *undesired travel* is controlled by the gap distance $G$, and the FOLP is mounted in a z-axis position to *agree* with the *statistically most likely surface position* of the typical sheet. Accordingly, the following equation "adds on" the appropriate offset factor for **gap** and **caliper** correction. When these total (combined) diffractive and gap/caliper shifts are taken into account, and the corresponding corrections added to the simple "air gap" model of EQU 29, the result is the final "real world" value for the *optimum* Z-axis mounting distance of the FOLP assembly:

[1] The (return) reflected light from the sheet must also pass through the glass before traveling to the objective lens of the CCD-array. The latter rays, however (at least the normal rays of interest) impinge on the glass at 90° and therefore are not bent (refracted) in their path to the detector. The x-axis peripheral rays, at the outer limits of the FOV/2, also are diffracted, but this affects only effective DPI resolution, not the z-axis correction being discussed here.

$$Z_{total} = Z^*_{optimum} + G \left( 1 - \frac{COS(\phi)}{\sqrt{N_g^2 - SIN^2(\phi)}} \right) + \left( \frac{g+c}{2} \right) \qquad \text{Eq (35)}$$

... where $Z^*_{optimum}$ is the z-axis distance found by the techniques involved from EQU 29, and $c$ is the sheet caliper, typically in the range of 0.004" to 0.005". For convenient reference, EQU 29 is repeated here:

$$V_n(z) = \frac{SIN(\alpha)}{SIN(\phi)} \cdot \left( \frac{COS(\alpha)}{COS(\phi)} \right)^d \cdot COS^P(\alpha - \phi) \quad ; \text{ where } TAN(\alpha) = \frac{R SIN(\phi)}{z}$$

$$(36)$$

$Z^*_{optimum}$ is the z-axis value of $z$ for which the first derivative of $V_n(z)$ is equal to 0, or the peak: of the "flat point of the normalized output curve as given by EQU 36. As noted earlier, the optimum value occurs near to $z = R \, COS(\Phi)$, but not a priori condition. For the preferred embodiment, $Z^*_{optimum}$ is very close to $R \, COS(\Phi)$, however.

## DUAL FRONT/BACK-SIDE SCANNING OF DOCUMENTS

High-speed scanning of both sides of a document on a single pass through the feed bed requires a dual set of FOLP light sources and associated CCD-array detectors. The two assemblies, although essentially identical in design and construction, cannot be placed directly opposite one another because the light energy transmitted *through* the paper would act as an interference source to the opposed unit. Therefore, the two assemblies must be offset slightly in the feed direction. This creates the effect of increasing the total two-side scanning time of a document by a time increment proportional to the distance of scan-axis separation. An optimal design is achieved when the distance is kept to a minimum but without degradation of FOLP output striking the respective sheet surface or causing any opposite-side interference.

The invention "masks off" an upstream and downstream portion of the glass gap-plate to block and limit the projection of incident and penumbra energy from each head assembly. The mask is usually constructed by applying a matte finish black paint to the desired strip area of the glass plates. The non-masked region of half-width $m$ in the y-direction is centered over the scan-axis.

Once the FOLP design parameters $\phi$, $R$, and $G$ are specified there are two equations involving these parameters and the $m$ variable that can be used "interactively" to optimally meet the above requirements. These are known as the $U$ and $P$ distances; $U$ is the "minimum safe illumination width" of the y-axis incident energy band on each sheet surface and $P$ is the "minimum safe separation distance" of the dual pair of FOLPs. (A review of Figure 13 may be helpful in visualizing the geometrical relationships):

$$U(m) = m - \frac{G \cdot SIN(\phi_u)}{\sqrt{N_g^2 - SIN(\phi_u)}} \quad ; \quad \phi_u = TAN^{-1}\left[ \left(\frac{(Y-m)}{(Y-y)}\right) \cdot TAN(\phi) \right] \qquad (37)$$

$$P(m) = m + \frac{G \cdot SIN(\phi_p)}{\sqrt{N_g^2 - SIN(\phi_p)}} \quad ; \quad \phi_p = TAN^{-1}\left[ \left(\frac{(Y+m)}{(Y-y)}\right) \cdot TAN(\phi) \right] \qquad (38)$$

The values to use for $Y$ and $y$ in EQU 37 and EQU 38 are as follows:

$$Y = R \cdot SIN(\phi) + y \quad ; \quad y = \frac{G \cdot SIN(\phi)}{\sqrt{N_g^2 - SIN^2(\phi)}} \qquad (39)$$

The above solutions for $U$ and $P$ are transcendental functions of $m$, therefore it is more convenient to calculate the "minimum safe distances" for a "trial value" of the mask-free scan width $m$ rather than attempting to solve $m$ (algebraically) for pre-defined values of $U$ and $P$.

A safe practice is to set a design goal for $U$ to be 10X the width of the y-axis (vertical) scanning resolution. For example, at a DPI setting of 120 dots/inch, $U$ should be on the order of 0.083". This safety factor protects against illumination "dropouts" caused by excessive sheet flutter, wrinkles, folds, and manufacturing tolerances or alignment errors in the FOLP and CCD-detector assemblies. Using this value of $U$, the trial values of $m$ are increased until the specified safety factor for $U$ is obtained. The minimum front/rear separation for the dual assemblies is then given by calculating the value of $P$ for the minimum value of $m$ meeting the minimum illumination width criterion.

Using these techniques, the preferred embodiment of the FOLP system permits the two assemblies to be spaced less than 0.5" in the y-axis. (The scanning time for a two-side 11" long sheet is therefore only 5% longer than for a single-side document).

Numerous substitutions and modifications can be undertaken without departing from the true spirit and scope of the invention as defined in the following claims.

## Claims

1. An optical projector for illuminating a data bearing surface, comprising:
   a) a light source; and
   b) at least one optical waveguide which is optically coupled to said light source at one end, and whose other end is bevelled in a single facet.

2. An optical projector for illuminating a data bearing surface during optical scanning by a camera, comprising:
   (a) a plurality of light projection sources whose light projection ends are beveled in a single facet located in substantially a single projection plane, each light source having an intensity distribution including a primary ray, all primary rays being parallel; and
   (b) means for positioning the plurality of light sources with a specified angle of incidence $\Phi$ for the primary rays relative to the data bearing surface of between 37 and 43 degrees and with a perpendicular distance between the projection plane and the data bearing surface such that the reflected light intensity available to the camera is maximal for the specified angle $\Phi$.

42

3. The optical projector of claim 2 wherein the plurality of light projection sources comprises a first bundle of optical fibers, all having projection ends bevelled in a single facet at the same bevel angle and being supported such that all fibers will project primary rays in the same direction.

4. The optical projector of claim 3 further comprising a second bundle of optical fibers, all having projection ends bevelled in a single facet at the same bevel angle and being supported such that all fibers will project primary rays in the same direction, said first and second bundles projecting light to a common region.

5. The optical projector of claim 3 wherein the plurality of light projection sources in said first bundle are optically coupled at the ends opposite their light projection ends to a light beam having a nonuniform spatial intensity distribution and having a 10 percent fall-off diameter of distance D, said first bundle of optical fibers has a diameter between approximately 30 and 50 percent of D and the projection ends are in an elongated, rectangular, randomly packed array, at least 10 fibers wide.

6. The optical projector of claim 3 wherein:
   (a) a light beam supplies broadband light to the first fiber bundle;
   (b) each fiber is about 50 to 60 microns in diameter and has a numerical aperture between about 0.50 and 0.60 and the projection ends together form a rectangular cross-section about 9.5 inches long and at least about 10 fibers in width.

7. The optical projector of claim 2, wherein the optical projector illuminates a strip on the data bearing surface and distributes the light along the strip with a substantially uniform intensity that is inversely proportional to the distance between the projection plane and the data bearing surface, said optical projector comprising an array of cladded fibers having projection ends beveled in the single facet and all facets substantially parallel to the data bearing surface.

8. An optical projector for illuminating a data bearing surface during optical scanning, comprising an elongated source of light that projects macroscopically uniform light onto the data bearing surface between two opposed edges of the data bearing surface, said source of light:
   (a) being positioned substantially parallel to the data bearing surface,
   (b) being positioned at a distance R from the data bearing surface, and
   (c) extending beyond each opposed edge of the data bearing surface by a distance $\chi$ of approximately 0.76R

9. The optical projector of claim 8 in which the distance $\chi$ approximately equals R.

10. The optical projector of claim 8 in which the light is projected onto a strip of length L on the data bearing surface and the elongated source of light is an array of light sources forming a projection face positioned parallel to the data bearing surface, wherein:
    (a) each light source in the array has an intensity distribution of the form $P(\Theta) = P_0 \mathrm{Cos} p(\Theta)$, where $P_0$ is the intensity of the primary ray of each source and $\Theta$ is an angle measured relative to said primary ray; and
    (b) the array has a length of about $L + 2\chi$, where $\chi$ is computed as follows:

    $$\chi = R\sqrt{\{[1 - E^{2/(p+2)}]/E^{(2/p+2)}\}}$$

    wherein R is the distance from the array to the sheet, p is the exponent in the expression given in (a) above, and E is the ratio of the light intensity at the end of the strip to the light intensity near the middle of the strip.

11. An optical projector for illuminating a data carrier, comprising:
    a) two groups of cladded optical fibers, the groups
       i) each having
          A) projection ends located at nearly identical perpendicular distances $Z_0$ from a nominal focal point and
          B) some fibers which project primary rays through the nominal focal point,
       ii) positioned on opposite sides of a plane normal to the data carrier and passing through the nominal focal point, at substantially equal angles of incidence $\Phi$, at a distance $Z_{MAXIMUM}$ from the data carrier, and

iv) positioned such that $Z_0$, $Z_{MAXIMUM}$, and $\Phi$ all have values found in a single one of the following triplets:

($Z_0$ = 0.25 inch, $Z_{MAXIMUM}$ = 0.22 inch, $\Phi$ = 30 degrees),
($Z_0$ = 0.50 inch, $Z_{MAXIMUM}$ = 0.43 inch, $\Phi$ = 25 degrees),
($Z_0$ = 0.50 inch, $Z_{MAXIMUM}$ = 0.47 inch, $\Phi$ = 30 degrees),
($Z_0$ = 0.50 inch, $Z_{MAXIMUM}$ = 0.48 inch, $\Phi$ = 35 degrees),
($Z_0$ = 0.50 inch, $Z_{MAXIMUM}$ = 0.51 inch, $\Phi$ = 40 degrees),
($Z_0$ = 0.75 inch, $Z_{MAXIMUM}$ = 0.66 inch, $\Phi$ = 30 degrees); and

b) means for projecting light into receiving ends of the fibers.

**12.** A method of constructing an optical projector for illuminating a data bearing surface, comprising the following steps:

(a) providing two bundles of optical fibers, each bundle having a projection end at which the individual fiber projection ends are gathered;

(b) mounting the projection ends of each bundle of optical fibers such that the axes extending from the individual fiber projection ends reach and cross in a common zone;

(c) beveling the individual fiber projection ends of each bundle into a common plane, said plane being substantially normal to the bisector of the crossed axes; and

(d) positioning the two bundles of optical fibers with the fiber axes defining a specified angle of incidence $\Phi$ relative to the data bearing surface of between 37 and 43 degrees and with the perpendicular distance between the common plane and the data bearing surface such that the reflected light intensity available to the camera is maximal for the specified angle $\Phi$.

**13.** For a system having a camera which builds images of documents, the camera having its optical axis positioned substantially normal to a scanning station on the document, an illumination system comprising:

a) a first group of optical fibers

i) located on one side of the optical axis,

ii) arranged such that their principal rays are substantially parallel and travelling to the scanning station, and

iii) each having a projection end which is bevelled into a facet, all facets being substantially parallel to the scanning station;

b) a second group of optical fibers

i) located on the other side of the optical axis,

ii) arranged such that their principal rays are substantially parallel and travelling to the scanning station, and

iii) each having a projection end which is bevelled into a facet, all facets being substantially parallel to the scanning station.

**14.** Optical reading system for scanning a data carrier, comprising:

(a) camera means for viewing a line of data sites on the data carrier and producing signals indicative of data marks at the sites, the camera means having an optical axis which is substantially normal to the data carrier;

(b) first and second sources of light; and

(c) first and second projection means for illuminating a strip on the carrier that contains the line, each projection means being located on one side of the camera's optical axis, receiving light from one of said first and second sources of light and distributing the light along the strip with a substantially uniform intensity that is inversely proportional to the distance between each projection means and the data carrier, each projection means comprising an array of cladded optical fibers in which:

(i) each fiber projects a beam having a principal ray, and all principal rays are parallel, and

(ii) all fibers have projection ends which are beveled in a single facet and all facets are in a common plane substantially parallel to the data carrier, and

(iii) all fibers are positioned with the fiber axes defining a specified angle of incidence $\Phi$ relative to the data bearing surface of between 37 and 43 degrees and with the perpendicular distance between the common plane and the data carrier such that the reflected light intensity available at the camera means is maximal for the specified $\Phi$.

**15.** The optical reading system of claim 14 wherein each of the first and second light sources produces broadband light in both the infrared and visible spectra and has coupled thereto means for extracting light having a smaller content of infrared than the broadband light.

**16.** A system for illuminating a strip on a data carrier, comprising:
(a) a source of light; and
(b) projection means coupled to the source of light for distributing the light along the strip from a projection end of said projection means, said distributed light having a substantially uniform intensity across the strip and being positioned such that if the distance from the projection end to the strip changes by less than 0.0375 inch, the intensity of the light reflected by the strip changes by less than five percent.

**17.** A system for illuminating a substantially flat data carrier for scanning by an imaging device, comprising:
(a) a source of light; and
(b) projection means for distributing the light along the strip
(i) with substantially uniform intensity I along the strip, and
(ii) such that, if the distance from the projection means to the strip changes, the total light energy E reflected by the data carrier to the imaging device changes according to the following expression:

$$dE/dR = -K/R^2$$

wherein R is said distance, K is a constant, and dE/dR is the first derivative of E with respect to R, and the projection means comprises an array of cladded optical fibers, having projection ends which are each beveled into a single facet, all the facets lying in a common plane parallel to the strip.

**18.** A scanning system which produces an image signal indicative of images contained on moving sheets, passing through a planar scanning station, comprising:
means for constraining the movement of sheets at the scanning station between two parallel planes;
means for transporting the sheets between the parallel planes wherein the sheets flutter; and
means for illuminating the sheets at the scanning station and maintaining the flutter noise component in the image signal below about five percent rms.

**19.** The scanning system of claim 18, wherein the image signal is produced by a camera that captures images from the moving sheets at the scanning station and the means for constraining limits the amount of variance of the camera-sheet distance to 0.075 inch.

**20.** An optical scanning system for detecting data marks, comprising:
(a) a data carrier in which the reflectance of the carrier and the specularity of data marks on the carrier both increase as the incidence angle of incoming light approaches perpendicular; and
(b) projector means for projecting light to the carrier at an angle of incidence between 37 and 43 degrees.

**21.** The system of claim 20 wherein the data marks are pencil marks and the angle of incidence is approximately 39 degrees.

**22.** An optical scanning system, including
(A) a camera having an optical axis normal to a data carrier and
(B) a light projector which projects a plurality of light beams to a data carrier, each light beam having a generally cosinusoidal intensity distribution and a primary ray that intersects the camera's optical axis at a nominal focal point at a perpendicular distance $Z_0$ from the projector's exit aperture, the improvement comprising:
a) setting $Z_0$ at 0.500 inch ± 5%;
b) setting the angle of incidence at 39 degrees ± 5%; and

45

c) setting the perpendicular distance between the exit aperture and the carrier at 0.470 inch ± 5%.

23. A method for operating a document scanning system, which includes (A) optical fibers which project light to a document and (B) an imaging device which scans lines of data sites on the document, comprising the following steps:

(a) ascertaining a distance between the document and the imaging device at which the document produces minimal variations in the light reflected to the imaging device when the distance changes; and

(b) moving the documents past the imaging device while constraining the distance between limits.

24. The method of claim 23, wherein the changes in distance are caused by document flutter between the limits, further comprising the step of:

(c) positioning the fluttering document such that the line of data sites is most likely to reside at the distance ascertained in step (a).

25. A method for operating a document scanning system, which includes (A) optical fibers which project light to a document at an angle of incidence and (B) an imaging device which scans lines of data sites on the document, comprising the following steps:

(a) ascertaining a distance between the document and the optical fibers at which the document produces minimal variations in the light reflected to the imaging device when the distance changes due to document fluttering;

(b) moving the documents past a scanning station in which they are illuminated by the fibers and constrained as to position; and

(c) positioning the fibers such that the moving documents sometimes lie at the distance ascertained in step (a).

26. A method of positioning a light projector, which (A) includes a plurality of projecting light sources located in substantially a single projection plane, each projecting light having an intensity distribution including a primary ray, all primary rays being parallel, and (B) illuminates a data carrier for imaging by a camera, comprising the following steps:

a) selecting a predetermined angle of incidence $\Phi$ for said primary rays relative to the data carrier, preferably between 37 and 43 degrees;

b) ascertaining for the selected $\Phi$ the perpendicular distance between the projection plane and the data carrier at which the reflected light intensity available to the camera is maximal; and

c) positioning the projector with the projection plane at said perpendicular distance.

27. The method according to claim 26 in which the step, in paragraph (b), of ascertaining the maximal perpendicular distance includes the step of ascertaining the maximum of the following function, or an equivalent:

$$V = [\sin(\alpha)/\sin(\Phi)] \times [\cos(\alpha)/\cos(\Phi)]^d \times \cos^p(\alpha - \Phi)$$

wherein

V    indicates the R-normalized intensity of light received by the camera, where R is the radial distance from the light source to the data carrier and tan

$$(\alpha) = \frac{R \sin (\Phi)}{z}$$

$\Phi$    is the angle of incidence of a reference ray, and is fixed;

z    is the perpendicular distance between the projection plane and the data carrier;

$\alpha$    is the angle of incidence of a ray which strikes the surface of the data carrier at the intersection point of the camera's optical axis and the data carrier surface, and varies as sheet position varies in the Z direction;

d    is the diffusion coefficient of the sheet; and

46

p   is the exponent in the function of the form $I_0 Cos^p(\Theta)$, which describes the intensity distribution of the light sources.

28. The method according to claim 27 in which $\Phi$ is the angle of incidence of a primary ray which intersects the optical axis of the camera at a nominal focal point.

29. The method according to claim 26 further comprising the step of ascertaining a range of change in the perpendicular distance that corresponds to a range of deviation from the maximal reflected light intensity of less than ±5% and constraining the data carrier within such range of change.

30. The method according to claim 26, wherein the data carrier bears one or more data marks and further comprising the following steps:
(a) projecting light from the primary rays to the data carrier along a projection axis; and
(b) positioning the projection axis at an angle of incidence determined by decreasing the angle of incidence until the marginal increase in specularity of the data marks equals or exceeds the marginal increase in reflectance of the data carrier.

31. An illumination source, comprising:
a) a light source which produces both visible and infrared light;
b) means for deriving a beam from the light source in which the infrared light has been suppressed;
c) a bundle of optical fibers having a receiving end and a transmitting end, the receiving end
i) having a total cross-sectional area between about 30 and 70 percent of the cross-sectional area of the beam, and
ii) positioned at a distance from the light source where the intensity distribution of the beam has a single peak, for receiving light from the beam, including the peak intensity; and
the transmitting end
i) being generally rectangular in cross section, and at least about ten fibers in width;
ii) composed of fibers which are
(A) randomly distributed, both as to light intensity and fiber position:
(B) each bevelled at its end in a single facet, and all facets are positioned in a common plane.

32. An illumination source, comprising:
a) a light source which produces both visible and infrared light, and which radiates in substantially all directions;
b) means for deriving a beam from the light source,
i) which travels in substantially a single direction,
ii) in which the infrared has been suppressed, and
iii) having a generally non-uniform intensity distribution, such that
A) a central region of the beam is brightest at a first distance from the source, and
B) an annular region of the beam is brightest at a second distance from the source; and
c) a bundle of optical fibers, the bundle
i) having a diameter less than 50 percent of the beam diameter,
ii) receiving light from the beam at said first distance, and
iii) projecting light in a beam of elongated cross-section, of substantially uniform intensity.

33. Apparatus according to claim 32 in which the optical fibers are positioned such that they collectively project a generally elongated image of light, of substantially constant intensity in cross-section.

34. Apparatus according to claim 32 in which the light source is that designated as number DDL 150 in the United States, or equivalent.

35. A method for optically coupling a light source to a bundle of optical fibers having substantially identical numerical apertures, comprising the following steps:
a) measuring light intensity at numerous locations, using a sensor of substantially the same numerical aperture;
b) selecting a group of locations; and
c) positioning some of the optical fibers such that their respective numerical apertures substantially coincide with the positions previously occupied by those in the selected group.

47

36. A method for optically coupling a light source to a planar receiving end of a bundle of optical fibers, the bundle having a diameter D and the fibers having substantially identical numerical apertures, comprising the following steps:

a) measuring light intensity at numerous locations in each of several planes, using a sensor of substantially the same numerical aperture;

b) selecting the plane having the greatest measured intensity; and

c) positioning the receiving end coplanar with the selected plane.

37. A method of coupling a bundle of optical fibers, having substantially identical numerical apertures, and having a substantially planar entrance face, to a lamp of a given type, comprising the following steps:

a) in each of a plurality of parallel planes which are perpendicular to the projection axis of the beam,

i) collecting light at several locations using an optical waveguide having substantially the same numerical aperture as that of the fibers, positioned normal to the respective plane at each location, and

ii) measuring the intensity of the collected light;

b) identifying the plane having the largest peak intensity;

c) positioning the entrance face coplanar with the identified plane.

38. An optical scanning system having

(a) a first imaging system for imaging one side of a sheet travelling in a y-direction;

(b) a second imaging system for imaging the opposite side of the sheet;

c) first and second illumination means for simultaneously illuminating the sides of the sheet for the respective first and second imaging systems; and

b) means for

i) allowing the two scanning stations to have a separation in the y-direction of about 0.5 inch, yet

ii) preventing the first illumination means from interfering with the second imaging system.

## *Fig. 1A*

7 LIGHT SOURCE

SOURCE-LIGHT
FIBER COUPLING

LIGHT FIBER
BUNDLE

4 PROJECTION
BAR

120

L

W

117

INCIDENT
LIGHT

2U

SCANNING
STATION

DATA
SURFACE

## Fig. 1B

CCD 2

PIXEL
DETECTORS

LENS

REFLECTED
LIGHT

11

5
DATA
SITES

SCANNED
LINE

DATA
MARKS

DATA
SURFACE

## Fig. 2

106
109
112
FIBER-OPTIC
PIPE COUPLING

$D_b$

d

D

105

100

## Fig. 3

PEAK FLUX $I_O$

FLUX

TYPICAL DDL
36 MM
DIAMETER

## Fig. 4

ACCEPTANCE
CONE

$\alpha_m$

ACCEPTANCE
ANGLE

FIBER
CORE

FIBER CLAD

$2\Theta$

BEAM-LOBE
ENERGY
(STERADIAL
CONE ANGLE)

$P(\Theta) = P_O \cos^p (\Theta)$
$(p = 15 \text{ TO } 20)$

*Fig. 4A*

*Fig. 4B*

*Fig. 4D*

OUTSIDE

*Fig. 4C*

136
133
OUTSIDE

*Fig. 4E*

FIBERS

*Fig. 4F*

ILLUMINATOR
141
145
140
139
143

*Fig. 4G*

SHEET

*Fig. 4G*

152
155
153
150

*Fig. 4J*

H
HCOSΘ
Θ
Θ
NORMAN COMPONENT
SHEET

*Fig. 4H*

$\Theta_1$
$\Theta_2$
160
162
SHEET
165

*Fig. 4L*

179
177
SHEET

*Fig. 4K*

175
173
SHEET

*Fig. 4M*

200
202

*Fig. 4N*

SMALLER ANGLE

## Fig. 5

PAPER DIFFUSION COEFFICIENT
REFLECTED LIGHT DISTRIBUTION OF INCIDENT
LIGHT

INCIDENT LIGHT

$\Theta$

$R = {}_K LO \, COS(\Theta)$

100% "PERFECT"
LAMBERTAIN DIFFUSE
REFLECTOR

INCIDENT LIGHT

$R = {}_K LO \, COS^d(\Theta)$

$d = 1.3 \ TO \ 1.6$

TYPICAL DIFFUSE REFLECTION
PATTERN OF SCANNING PAPER

## Fig. 6

FOLP EDGE-EFFECTS &
GEOMETRY

—LENGTH: L + 2 Δ EDGE-EFFECT—

FIBER OPTIC LIGHT PIPE

$Z = R \cdot COS(\phi) = RADIAL \ DISTANCE$

Δ

Δ

—DOCUMENT WIDTH: 8.5" TYPICAL—

FOLP PAIR (END VIEW)

$\phi$

$\beta$

Y

BIAS-GRIND
ANGLE

$\delta$

"THROW"
ANGLE

FEED
DIRECTION

R

$Z = R \cdot COS(\phi)$

—DOCUMENT LENGTH: 11.0" TYPICAL—

## *Fig.* 7

FOLP SOURCE-TO-SHEET
OUTPUT VARIATION

1/(r/R)

1/(r/R)$^2$
(POINT
SOURCE)

150%

100%

50%

0.0 0.2 0.4 0.6 0.8 1.0 1.2 1.4 1.6 1.8
NORMALIZED RADIAL DISTANCE: WEDGE OUTPUT TO
SHEET SURFACE

## *Fig.* 8

NORMALIZED CCD-OUTPUT SIGNAL
FOR FOLP LIGHT SOURCE

100%

190A

190

190B

50%

R●COS(Φ)
"REGION"

O

Z→∞

Z-AXIS DISTANCE: FOLP XY-PLANE TO SHEET

Z
MAXIMUM

*Fig. 9*

REFLECTED SIGNAL TO CCD-ARRAY

## Fig. 9A

FOLP

CCD

117

195

193

$z_0$

191

SHEET 170

## Fig.16

193

A2   AI

H

## Fig. 9B

100%

198

197

Z

## Fig.17

## Fig. 9C

GLASS

0.010"

199

196

0.050"

GLASS

## *Fig.10*

BIAS-GRIND ANGLE for FOLP

SNELL'S LAW:
$$SIN(\beta) = N_O SIN(\beta + \delta)$$

BEV

GLASS FIBER

$n_f$ = REFRACTIVE INDEX FOR FO CORE GLASS;
N = REFRACTIVE INDEX FOR AIR

## *Fig.11*

NORMAL GRIND FOLP-PAIR

END VIEW

90°

Φ

DOCUMENT

BIAS-GRIND FOLP-PAIR

END VIEW

$\Phi = \beta + \delta$

DOCUMENT

# *Fig.12*

GLASS GAP-PLATE REFRACTION

FOLP PAIR
(AIR GAP REFERENCE)
END VIEW

$\beta$

$\delta$

$\Phi = \beta + \delta$

FEED DIRECTION

$\Phi$

$\zeta$ : ZETA
GAP-CORRECTION
Z-DISTANCE

G

FRONT SURFACE

GAP

REAR SURFACE

GLASS GAP-PLATE

DOCUMENT

59

## Fig. 13

FRONT/REAR DUAL SEPARATION

FEED DIRECTION ⟶  REAR SIDE SCANNING

## Fig. 14

EP 0 481 515 A2

*Fig. 15A*

PM=19    Ø=25
 A=25°   D=0.500"

$P(\chi) = PM * COS(A-ABS(\alpha(\ )-f)^2$

NORMALIZED OUTPUT: V(X)/V(X)

1.1
1.0
0.9
0.8
0.7
0.6
0.5
0.4
0.3
0.2
0.1
0.0

$-\Delta\chi$

$+\Delta\chi$

d=1.0
d=1.5
d=2.0

0.1   0.2   0.3   0.4   0.5   0.6   0.7   0.8   0.9   1.0

X-DISTANCE FROM AXIS

1.5      5

Fig. 15B

Fig. 15C

*Fig. 15D*

Ø = 35°    P=16
X = 0.500"   d = 1.4

X-DISTANCE FROM AXIS

NORMALIZED OUTPUT: V(X)/V(X)

Fig. 15E

PM=19     Ø=40°
   A=25°     X=0.50

EP 0 481 515 A2

Fig. 15F

Ø = 25°
D = 0.500"

−Δ χ

+Δ χ

NORMALIZED OUTPUT: V(X)/V(X)

X-DISTANCE FROM AXIS

EP 0 481 515 A2

## Fig. 15G

$\emptyset = 30°$
$X = 0.500''$

NORMALIZED OUTPUT: $V(\!X\!)/V(X)$

$-\Delta \chi$

$+\Delta \chi$

X-DISTANCE FROM AXIS

EP 0 481 515 A2

Fig. 15H

Ø=35°
X=0.500"

-Δ χ

+Δ χ

NORMALIZED OUTPUT: V(X)/V(X)

X-DISTANCE FROM AXIS

EP 0 481 515 A2

Fig. 15I

*Fig. 15J*

EP 0 481 515 A2

*Fig. 15K*

Fig. 15L

Fig. 15M

P = 16
d = 1.5
d = 1.4 ⊕

CCD NORMALIZED OUTPUT — 8.5" WIDE

5% BAND

50 MIL

D = SHEET TO SHEET F.O. DISTANCE IN INCHES

*Fig. 15N*

∅ = 30°
X = 0.750"

NORMALIZED OUTPUT

X-DISTANCE FROM AXIS

−ΔΧ          +ΔΧ

EP 0 481 515 A2

*Fig. 15P*

Ø=40°
X=0.750"

−ΔX

+ΔX

NORMALIZED OUTPUT

X−DISTANCE FROM AXIS

EP 0 481 515 A2

## TABLE NO. 1

| REFLECTION EFFICIENCY | | | | | |
|---|---|---|---|---|---|
| WEDGE ANGLE Φ | d: PAPER DIFFUSION COEFFICIENT (EXPONENT) | | | | |
| | 1.000 | 1.250 | 1.500 | 1.750 | 2.000 |
| 25° | 1.282 | 1.398 | 1.451 | 1.544 | 1.643 |
| 30° | 1.225 | 1.288 | 1.355 | 1.426 | 1.500 |
| 35° | 1.158 | 1.202 | 1.247 | 1.294 | 1.342 |
| 40° | 1.083 | 1.105 | 1.128 | 1.150 | 1.174 |
| 45° | 1.000 | 1.000 | 1.000 | 1.000 | 1.000 |
| 50° | 0.909 | 0.888 | 0.867 | 0.846 | 0.826 |
| 55° | 0.811 | 0.770 | 0.731 | 0.693 | 0.658 |
| 60° | 0.707 | 0.648 | 0.595 | 0.545 | 0.500 |
| 65° | 0.598 | 0.526 | 0.462 | 0.406 | 0.357 |

## TABLE NO. 2

| SPECULARITY OF HEAVILY MADE SOFT-LEAD PENCIL MARK | | | | | |
|---|---|---|---|---|---|
| WEDGE ANGLE Φ | QH LIGHT SOURCE LEVEL INTO FOLP (VOLTS ACROSS 4 DDL-150'S) | | | | |
| | 40.2V | 47.3V | 57.1V | 70.2V | 74.5V |
| 25° | 0.249 | 0.316 | 0.363 | 0.361 | 0.351 |
| 30° | 0.196 | 0.255 | 0.293 | 0.295 | 0.288 |
| 35° | 0.146 | 0.202 | 0.245 | 0.247 | 0.241 |
| 40° | 0.121 | 0.162 | 0.210 | 0.213 | 0.207 |
| 45° | 0.116 | 0.138 | 0.173 | 0.195 | 0.196 |
| 50° | 0.112 | 0.112 | 0.138 | 0.176 | 0.183 |

## TABLE NO. 3

| SIGNAL VARIATION FOR SINGLE-FOLP VERSUS DUAL-FOLP SYSTEM | | | |
|---|---|---|---|
| TILT ANGLE $\rho$ | POSITIVE-SIGN $\rho$ (SINGLE FOLP) | NEGATIVE-SIGN $\rho$ (SINGLE FOLP) | DUAL-FOLP OUTPUT |
| 2.5° | 0.909 | 1.092 | 1.0005 |
| 5° | 0.819 | 1.182 | 1.0005 |
| 10° | 0.645 | 1.359 | 1.0020 |
| 15° | 0.485 | 1.522 | 1.0035 |
| 20° | 0.344 | 1.666 | 1.0050 |
| 30° | 0.133 | 1.874 | 1.0035 |
| 40° | 0.024 | 1.947 | 0.9855 |
| 50° | -0- | 1.874 | 0.9370 |

## TABLE NO. 4

| THROW ANGLE OF BIAS-GRIND FIBER OPTIC LIGHT PIPES | | | |
|---|---|---|---|
| BIAS ANGLE $\delta$ | EQU 30 RESULT | EQU 31 RESULT | MEASURED ANGLE |
| 16° | 10.5° | 9.7° | 9° |
| 21° | 14.5° | 12.6° | 11° |
| 24° | 17.2° | 14.3° | 15° |